# EUROPEAN PATENT APPLICATION

(11) **EP 4 478 631 A1**
(43) Date of publication of application: **18.12.2024**
(21) Application number: 24180478.0
(22) Date of filing: 06.06.2024
(51) Int. Cl.: H04B 11/00

(54) **DIGITAL AMPLITUDE NOISE SHIFT KEYING TO COMMUNICATE INFORMATION**

(30) Priority: 14.06.2023 US 202318334739; 28.07.2023 US 202318361036; 27.09.2023 US 202318475548
(71) Applicant: The Boeing Company, Arlington, VA 22202 (US)
(72) Inventor: HOWE, Wayne Richard, ARLINGTON 22202 (US); HUNT, Jeffrey H., ARLINGTON 22202 (US)
(74) Representative: Plasseraud IP

(57) **Abstract**

A method, apparatus, and system for communicating information. A communications system comprises a computer system and a communications manager. The communications manager is in the computer system. The communications manager is configured to identify digital information for transmission. The communications manager is configured to transmit noise signals with different noise amplitudes that thereby modulate the noise signals to correspond to the digital information.

## Description

### CROSS-REFERENCE TO RELATED APPLICATIONS

This application is a Continuation-in-Part (CIP) of U.S. Patent Application entitled "Analog Amplitude Noise Modulation to Communicate Information," attorney docket number 20-2513-US-CIP, Serial No. 18/334,739, filed June 14, 2023, which is a Continuation-in-Part (CIP) of U.S. Patent Application entitled "Radio Frequency Communications Using Laser Optical Breakdowns," attorney docket no. 20-2513-US-NP, Serial No. 18/067,516, filed December 16, 2022, and is a Continuation-in-Part (CIP) of U.S. Patent Application entitled "Pulse Noise Modulation to Encode Data," attorney docket no. 20-3533-US-NP, Serial No. 18/067,547, filed December 16, 2022, all of which are incorporated herein by reference in their entirety.

### BACKGROUND INFORMATION

### 1. Field:

The present disclosure relates generally to communications and in particular, to methods, apparatuses, systems, and computer program products for communicating information using radio frequency (RF), optical, and/or other signals within the electromagnetic spectrum without physical antenna structures.

### 2. Background:

Wireless communications using radio frequency (RF) signals, optical, and/or other signals within the electromagnetic spectrum are common and widespread. Radio frequency signals are commonly used in computer networks, for example, in the form of Wi-Fi signals that provide communications links between various computing devices.

Radio frequency signals are also used for communications between various clients such as ships, aircraft, land vehicles, buildings, and other physical locations. These communications can include data and/or information such as position information, voice messages, voice communications, and other types of information and/or data. For example, other types of information and/or data can include digital and analog signaling.

Communications using radio frequency transmissions are facilitated using physical antennas. The transmission or reception of radio frequency signals occurs between antennas. The use of physical antennas can be less convenient or reliable than desired.

In addition, radio frequency communications can be implemented using a carrier signal or carrier wave modulated by at least one of a modulation signal, a message signal, or an information signal that modulates or digitally "shift keys" the carrier wave.

The terms "shift key", "shift keys", "shift keying" and similar terms are terms of art used in the communications technology field to describe digital modulation techniques that represent digital data as variations of a carrier wave or carrier signal. The terms de-"shift key" or de-"shift keying" are terms used to describe demodulation of digital data. In these examples, shift keying is a form of modulation. Classical carrier signals use at least one of periodic waves, repeating waveforms, pseudo-random waveforms, or other predictable waveforms such as sinusoidal, cosinusoidal, square-waves, sawtooth, or other repeatable carriers which are then modulated in various ways by the message signal, modulation signal, and/or information signal.

Communications have been attempted using lasers, gas-filled tubes, electric arcs, high-voltage electrodes, high-voltage fields, field exciter members, and other mechanisms to create and maintain "plasma antennas" including plasma columns, plasma filaments, plasma structures, plasma channels, laser-induced plasma filaments (LIPF), arrays of focusing and defocusing cycles of plasma, and/or bounded or unbounded ionized air or water columns to emulate the shapes and/or conductance of physical antennas. These devices may be continuous wave or pulsed devices. Previous communication approaches attempt to input, impel, induce, impute, impress upon, influence, and/or modulate an RF or other signal onto the plasma or conductive plasma column with a coupling device, such as an RF coupler, an electromagnetic or capacitive coupling device, an electro-optical crystal, electro-optic modulators such as beams of light, and/or other influencing device. In effect, previous approaches attempt to treat plasma or the plasma column as a conductor or a classical physical conducting antenna, such as a monopole or dipole device. These approaches use conventional modulation of periodic, repeating, sinusoidal, and/or pseudo-random carrier waveforms, such as amplitude-, frequency-, and/or phase- modulation, to generate, induce, impel, influence, and/or control the plasma's amplitude-, frequency- , or phase-modulated electromagnetic fields that radiate from the plasma or plasma column.

Therefore, it would be desirable to have methods, systems, and apparatuses that take into account at least some of the issues discussed above, as well as other possible issues. For example, it would be desirable to have methods and apparatus that overcome a technical problem with radio frequency communications using physical antennas. It would also be desirable to have systems, methods, and apparatuses that overcome the limitations of periodic and/or predictable carriers. It would also be desirable to have systems, methods, and apparatuses that overcome the limitations of plasma antennas and coupled modulation.

### SUMMARY

An embodiment of the present disclosure provides a communications system comprises a computer system and a communications manager. The communications manager is in the computer system. The communications manager is configured to identify digital information for transmission. The communications manager is configured to transmit noise signals with different noise amplitudes that thereby modulate the noise signals to correspond to the digital information.

Another embodiment of the present disclosure provides a communications system comprising a receiver configured to receive noise signals, in which digital information in the noise signals is demodulated using different noise amplitudes. The receiver is configured to demodulate the digital information previously modulated in the noise signals based on different noise amplitudes in the noise signals.

Yet another embodiment of the present disclosure provides a method for communicating digital information. The digital information is identified for transmission. Noise signals are transmitted with different noise amplitudes that thereby modulate the noise signals to correspond to the digital information.

Still another embodiment of the present disclosure provides a method for communicating digital information. Noise signals are received. The digital information in the noise signals is demodulated using different noise amplitudes. The digital information modulated in the noise signals is demodulated based on the different noise amplitudes in the noise signals.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1A** is a pictorial representation of platforms that can transmit radio frequency signals using non-physical antennas in which illustrative embodiments may be implemented;
**Figure 1B** is a pictorial representation of platforms that can transmit radio frequency signals using non-physical antennas from space in which illustrative embodiments may be implemented;
**Figure 1C** is a pictorial representation of platforms that can transmit radio frequency signals using non-physical antennas on, in, or under water in which illustrative embodiments may be implemented;
**Figure 2** is an illustration of a block diagram of a radio frequency communications environment in accordance with an illustrative embodiment;
**Figure 3** is an illustration of radio frequency noise generation using a laser beam in accordance with an illustrative embodiment;
**Figure 4** is an illustration of radio frequency noise generation using a plurality of laser beams in accordance with an illustrative embodiment;
**Figure 5** is an illustration of radio frequency noise generation using a plurality of laser beams in accordance with an illustrative embodiment;
**Figure 6** is an illustration of a diagram for controlling radio frequency noise generation in accordance with an illustrative embodiment;
**Figure 7** is an illustration of a diagram for controlling radio frequency noise generation in accordance with an illustrative embodiment;
**Figure 8** is an illustration of data transmission using pulse code noise modulation or pulse noise modulation in accordance with an illustrative embodiment;
**Figure 9** is an illustration of a block diagram of a communication system in accordance with an illustrative embodiment;
**Figure 10** is an illustration of a transmitter in accordance with an illustrative embodiment;
**Figure 11** is an illustration of a block diagram of a radio frequency transmitter in accordance with an illustrative embodiment;
**Figure 12** is an illustration of a block diagram of a receiver in accordance with an illustrative embodiment;
**Figure 13** is an illustration of a communications system for transmitting and receiving electromagnetic noise signals in accordance with an illustrative embodiment;
**Figure 14** is an illustration of a block diagram of a communications system for transmitting and receiving electromagnetic noise signals in accordance with an illustrative embodiment;
**Figure 15A** is an illustration of a data flow of signals transmitting data using modulated noise signals in accordance with an illustrative embodiment;
**Figure 15B** is an illustration of an envelope follower circuit using a diode detector with a low pass filter in accordance with an illustrative embodiment;
**Figure 15C** is an illustration of a clipper circuit in accordance with an illustrative embodiment;
**Figure 16** is an illustration of a flowchart of a process for transmitting data in accordance with an illustrative embodiment;
**Figure 17** is an illustration of a flowchart for controlling the emission of laser beams in points in accordance with an illustrative embodiment;
**Figure 18** is an illustration of a flowchart for controlling the emission of laser beams in intersecting points in accordance with an illustrative embodiment;
**Figure 19** is an illustration of a flowchart for controlling the emission of laser beams in points in accordance with an illustrative embodiment;
**Figure 20** is an illustration of a flowchart of a process for transmitting data in accordance with an illustrative embodiment;
**Figure 21** is an illustration of a flowchart for controlling the emission of laser beams in points in accordance with an illustrative embodiment;
**Figure 22** is an illustration of a flowchart for controlling the emission of the laser beams in points in accordance with an illustrative embodiment;
**Figure 23** is an illustration of a flowchart for controlling the emission of laser beams in points in accordance with an illustrative embodiment;
**Figure 24** is an illustration of a flowchart for controlling the emission of laser beams in points in accordance with an illustrative embodiment;
**Figure 25** is an illustration of a flowchart for controlling the emission of laser beams in points in accordance with an illustrative embodiment;
**Figure 26** is an illustration of a flowchart for controlling the emission of laser beams in points in accordance with an illustrative embodiment;
**Figure 27** is an illustration a flowchart for controlling laser beams in accordance with an illustrative embodiment;
**Figure 28** is an illustration of a flowchart for communicating data in accordance with an illustrative embodiment;
**Figure 29** is an illustration of a flowchart for transmitting pulses of noise signals in accordance with an illustrative embodiment;
**Figure 30** is another illustration of a flowchart for transmitting pulses of noise signals in accordance with an illustrative embodiment;
**Figure 31** is an illustration of a flowchart for communicating data in accordance with an illustrative embodiment;
**Figure 32** is an illustration of a flowchart of a process for controlling the emission of a set of one or more beams in accordance with an illustrative embodiment;
**Figure 33** is an illustration of a flowchart of a process for controlling the emission of a set of one or more beams in accordance with an illustrative embodiment;
**Figure 34** is an illustration of a flowchart for communicating data in accordance with an illustrative embodiment;
**Figure 35** is an illustration of a flowchart for decoding data in accordance with an illustrative embodiment;
**Figure 36** is an illustration of a block diagram of a communication system in accordance with an illustrative embodiment;
**Figure 37** is an illustration of information flow for transmitting digital information with digital amplitude noise shift keying using a laser generation system in accordance with an illustrative embodiment;
**Figure 38** is an illustration information flow for demonstrating transmitting digital information with digital amplitude noise shift keying using a noise transmitter in accordance with an illustrative embodiment;
**Figure 39** is an illustration of a flowchart for communicating digital information in accordance with an illustrative embodiment;
**Figure 40** is an illustration of a flowchart of a process for transmitting radio frequency noise signals using a laser generation system in accordance with an illustrative embodiment;
**Figure 41** is an illustration of a flowchart of a process for controlling emission of a set of one or more laser beams in accordance with an illustrative embodiment;
**Figure 42** is an illustration of a flowchart of a process for controlling emission of a set of one or more laser beams in accordance with an illustrative embodiment;
**Figure 43** is an illustration of a flowchart of a process for controlling emission of a set of one or more laser beams in accordance with an illustrative embodiment;
**Figure 44** is an illustration of a flowchart of a process for controlling emission of a set of one or more laser beams in accordance with an illustrative embodiment;
**Figure 45** is an illustration of a flowchart of a process for transmitting noise signals in accordance with an illustrative embodiment;
**Figure 46** is an illustration of a flowchart of process for communicating digital information in accordance with an illustrative embodiment;
**Figure 47** is an illustration of a block diagram of a communication system for transmitting noise signals using digital frequency noise modulation in accordance with an illustrative embodiment;
**Figure 48** is an illustration of information flow for transmitting digital information with digital frequency noise modulation using a laser generation system in accordance with an illustrative embodiment;
**Figure 49** is an illustration of frequency noise modulation of radio frequency signals through changing a frequency location of a center point of radio frequency noise-band signals in accordance with an illustrative embodiment;
**Figure 50** is an illustration of frequency modulation of radio frequency signals through changing a width or bandwidth of noise-band signals in accordance with an illustrative embodiment;
**Figure 51** is an illustration of information flow for transmitting digital information with digital frequency noise modulation using a noise transmitter in accordance with an illustrative embodiment;
**Figure 52** is an illustration of a flowchart for communicating digital information in accordance with an illustrative embodiment;
**Figure 53** is an illustration of a flowchart of a process for transmitting noise signals using a laser generation system in accordance with an illustrative embodiment;
**Figure 54** is an illustration of a flowchart of a process for controlling emission of a set of one or more laser beams in accordance with an illustrative embodiment;
**Figure 55** is an illustration of a flowchart of a process for controlling emission of a set of one or more laser beams in accordance with an illustrative embodiment;
**Figure 56** is an illustration of a flowchart of a process for controlling emission of a set of one or more laser beams in accordance with an illustrative embodiment;
**Figure 57** is an illustration of a flowchart of a process for transmitting noise signals using a noise transmitter in accordance with an illustrative embodiment;
**Figure 58** is an illustration of a flowchart of process for communicating digital information in accordance with an illustrative embodiment;
**Figure 59** is an illustration of a block diagram of a communication system for transmitting noise signals using digital frequency noise modulation in accordance with an illustrative embodiment;
**Figure 60** is an illustration of an illustration of information flow for transmitting digital information with digital frequency noise modulation using a laser generation system in accordance with an illustrative embodiment;
**Figure 61** is an illustration of frequency noise modulation of radio frequency signals through changing a frequency location of the center points of different discrete frequency noise-bands in radio frequency noise-band signals in accordance with an illustrative embodiment;
**Figure 62** is an illustration of frequency modulation of radio frequency signals through changing a width or bandwidth of different discrete noise-bands in noise-band signals transmitted in a timeslot in accordance with an illustrative embodiment;
**Figure 63** is an illustration of information flow for transmitting digital information with digital frequency noise modulation using a noise transmitter in accordance with an illustrative embodiment;
**Figure 64** is an illustration of a flowchart for communicating multiple-bit digital information in accordance with an illustrative embodiment;
**Figure 65** is an illustration of a flowchart of a process for transmitting noise signals using a laser generation system in accordance with an illustrative embodiment;
**Figure 66** is an illustration of a flowchart of a process for controlling emission of a set of one or more laser beams in accordance with an illustrative embodiment;
**Figure 67** is an illustration of a flowchart of a process for controlling emission of a set of one or more laser beams in accordance with an illustrative embodiment;
**Figure 68** is an illustration of a flowchart of a process for controlling emission of a set of one or more laser beams in accordance with an illustrative embodiment;
**Figure 69** is an illustration of a flowchart of a process for transmitting noise signals using a noise transmitter in accordance with an illustrative embodiment;
**Figure 70** is an illustration of a flowchart of process for communicating multiple-bit digital information in accordance with an illustrative embodiment;
**Figure 71** is an illustration of a block diagram of a communication system for transmitting noise signals using digital frequency noise modulation in accordance with an illustrative embodiment;
**Figure 72** is an illustration of an illustration of information flow for transmitting digital information with digital frequency noise modulation using a laser generation system in accordance with an illustrative embodiment;
**Figure 73** is an illustration of frequency noise modulation of radio frequency signals through changing a frequency location of the center point and an amplitude of different discrete frequency noise-bands in radio frequency noise-band signals in accordance with an illustrative embodiment;
**Figure 74** is an illustration of frequency modulation of radio frequency signals through changing a width or bandwidth and an amplitude of different discrete noise-bands in noise-band signals transmitted in a timeslot in accordance with an illustrative embodiment;
**Figure 75** is an illustration of information flow for transmitting digital information with digital multi-frequency-amplitude/band shift keying a noise transmitter in accordance with an illustrative embodiment;
**Figure 76** is an illustration of a flowchart for communicating digital information in accordance with an illustrative embodiment;
**Figure 77** is an illustration of a flowchart of a process for transmitting noise signals using a laser generation system in accordance with an illustrative embodiment;
**Figure 77A** is an illustration of a flowchart of a process for controlling emission of a set of one or more laser beams in accordance with an illustrative embodiment;
**Figure 78** is an illustration of a flowchart of a process for controlling emission of a set of one or more laser beams in accordance with an illustrative embodiment;
**Figure 79** is an illustration of a flowchart of a process for controlling emission of a set of one or more laser beams in accordance with an illustrative embodiment;
**Figure 80** is an illustration of a flowchart of a process for controlling emission of a set of one or more laser beams in accordance with an illustrative embodiment;
**Figure 81** is an illustration of a flowchart of a process for transmitting noise signals using a noise transmitter in accordance with an illustrative embodiment;
**Figure 82** is an illustration of a flowchart of process for communicating multiple-bit digital information in accordance with an illustrative;
**Figure 83** is an illustration of a block diagram of a communications system **3602** for transmitting noise-band signals **8300** using digital phase noise modulation in accordance with an illustrative embodiment;
**Figure 84** is an illustration of information flow in transmitting digital information with digital phase noise modulation using a laser generation system in accordance with an illustrative embodiment;
**Figure 85** is an illustration of information flow in transmitting digital information with digital phase noise modulation using a laser generation system in accordance with an illustrative embodiment;
**Figure 86** is an illustration of digital phase noise modulation in accordance with an illustrative embodiment;
**Figure 87** is an illustration of information flow for transmitting digital information using digital doppler noise shift keying in a noise transmitter in accordance with an illustrative embodiment;
**Figure 88** is an illustration of a flowchart for communicating digital information in accordance with an illustrative embodiment;
**Figure 89** is an illustration of a flowchart of a process for transmitting noise signals using a laser generation system in accordance with an illustrative embodiment;
**Figure 90** is an illustration of a flowchart of a process for controlling emission of a set of one or more laser beams in accordance with an illustrative embodiment;
**Figure 91** is an illustration of a flowchart of a process for controlling emission of a set of one or more laser beams in accordance with an illustrative embodiment;
**Figure 92** is an illustration of a flowchart of a process for controlling emission of a set of one or more laser beams in accordance with an illustrative embodiment;
**Figure 93** is an illustration of a flowchart of a process for controlling emission of a set of one or more laser beams in accordance with an illustrative embodiment;
**Figure 94** is an illustration of a flowchart of a process for controlling emission of a set of one or more laser beams in accordance with an illustrative embodiment;
**Figure 95** is an illustration of a flowchart of process for communicating digital information in accordance with an illustrative embodiment;
**Figure 96** is an illustration of a flowchart of process for communicating digital information in accordance with an illustrative embodiment;
**Figure 97** is an illustration of a block diagram of a communications system for transmitting noise-band signals using digital phase noise modulation or digital phase-differential noise shift keying in accordance with an illustrative embodiment;
**Figure 98** is an illustration of information flow for transmitting digital information using digital phase-differential noise shift keying in a noise transmitter in accordance with an illustrative embodiment;
**Figure 98A** is an illustration of a typical transmitted noise-band signal with a discrete phase shift that thereby creates higher frequencies outside of the typical noise-band, including an illustration of a noise phase-shift detector using a comb filter array in accordance with an illustrative embodiment;
**Figure 99** is an illustration of prerecorded noise snippets in accordance with an illustrative embodiment;
**Figure 100** is an illustration of additional prerecorded noise snippets in accordance with an illustrative embodiment;
**Figure 101** is an illustration of a flowchart of a method for communicating digital information in accordance with an illustrative embodiment;
**Figure 102** is an illustration of a flowchart of a process for generating a sequence of prerecorded noise snippets in accordance with an illustrative embodiment;
**Figure 103** is an illustration of a flowchart of a process for generating a sequence of prerecorded noise snippets in accordance with an illustrative embodiment;
**Figure 104** is an illustration of a flowchart of a process for generating a sequence of prerecorded noise snippets in accordance with an illustrative embodiment; and
**Figure 105** is an illustration of a flowchart of a method for communicating digital information in accordance with an illustrative embodiment.

### DETAILED DESCRIPTION

The illustrative embodiments recognize and take into account one or more different considerations as described herein. For example, currently used physical antennas for transmitting radio frequency signals are subject to damage or destruction from various causes. For example, adverse weather conditions such as a hurricane or tornado can damage or destroy antennas such as transmission towers for land-based communications. As another example, these physical antennas are also subject to damage or destruction from kinetic attacks.

In other considerations, currently used "plasma antennas" require an ionized column of air or water which is not readily relocatable or easily repositioned. Plasma antennas also require a coupling mechanism to modulate the ionized plasma column as if it were a traditional conductive antenna. Plasma antennas also must use traditional modulation techniques of sinusoidal, pseudorandom, and/or other repeating carrier signals which may be easily detected and decoded.

As used herein, the phrase "and/or" when used with a list of items means different combinations of one or more of the listed items can be used and only one of each item in the list can be needed. In other words, "and/or" when used with a list of items means any combination of items and number of items can be used from the list, but not all of the items in the list are required. The item can be a particular object, thing, or a category. For example, without limitation, item A, item B, and/or item C" can mean solely item A, solely item B, solely item C, both items A and B, both items B and C, both items A and C, or all three items A and B and C.

Thus, the illustrative embodiments provide a method, apparatus, system, and computer program product for transmitting radio frequency signals without hardware such as transmission towers and physical antenna structures. In one or more illustrative examples we provide a non-physical radio frequency antenna that is impervious to adverse environmental conditions and kinetic attack. These illustrative embodiments provide a method, apparatus, system, and computer program product for transmitting radio frequency signals without plasma antennas and/or ionized columns of air or water, without coupling mechanisms, and without the need for periodic, repeating, sinusoidal, and/or pseudorandom carrier waves with classical modulation schemes based on these periodic, repeating, sinusoidal, and/or pseudorandom carrier waves. Further, these non-physical radio frequency antennas can be more difficult to detect.

These transmitters can be positioned away from airplanes, transport, installations, buildings, or other physical locations that are subject to attack or undesired environmental conditions.

In the illustrative examples, radio frequency transmissions are transmitted by using laser beams that induce, cause, and/or control optical breakdowns to generate and control the radio frequency transmissions. In this illustrative example, the optical breakdowns create plasma that generates the radio frequency signals including radio frequency noise. These optical breakdown points where the optical breakdowns occur are the points of origination for transmitting the radio frequency signals and/or radio frequency noise. These optical breakdown points also may be used for transmission in the range of light frequencies, either visible and/or non-visible light.

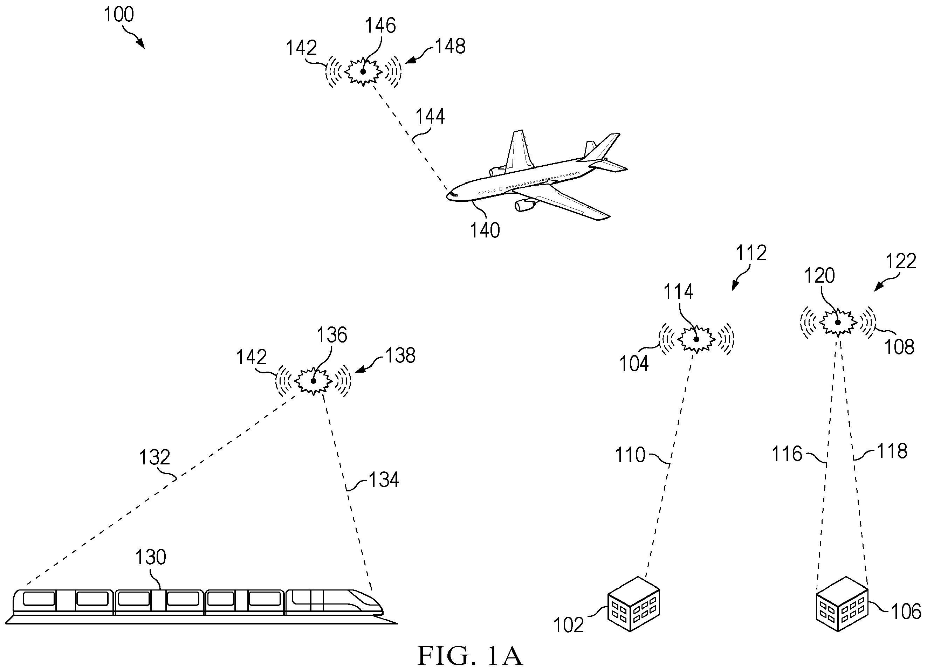

With reference now to the figures and, in particular, with reference to **Figure 1A****,** a pictorial representation of platforms that can transmit radio frequency signals using non-physical antennas is depicted in which illustrative embodiments may be implemented. As depicted, radio frequency signals can be transmitted from various platforms as depicted in this figure.

As depicted, ground station **102** can transmit radio frequency signals **104** without using a physical antenna. In a similar fashion, ground station **106** can also transmit radio frequency signals **108** without using a physical antenna.

In this example, laser beams are used by these ground stations to transmit the radio frequency signals. For example, ground station **102** emits laser beam **110** in a manner that causes optical breakdown **112** at optical breakdown point **114.** Radio frequency signals **104** are generated at and transmitted from optical breakdown point **114.**

In this example, ground station **106** emits laser beam **116** and laser beam **118** at optical breakdown point **120** to cause optical breakdown **122.** In this example, two laser beams are used to cause optical breakdown **122** that results in transmission of radio frequency signals **108.**

This type of transmission can be used from other platforms such as train **130.** In this example, train **130** emits laser beam **132** and laser beam **134** from different physical locations on train **130** at optical breakdown point **136.** The intersection of these two laser beams at optical breakdown point **136** causes optical breakdown **138.** As a result, radio frequency signals **142** are transmitted in response to optical breakdown **138** at optical breakdown point **136.**

As another example, airplane **140** transmits radio frequency signals **142** using laser beam **144.** As depicted, laser beam **144** is emitted from airplane **140** at optical breakdown point **146.** Optical breakdown **148** occurs at optical breakdown point **146** which results in the transmission of radio frequency signals **142.**

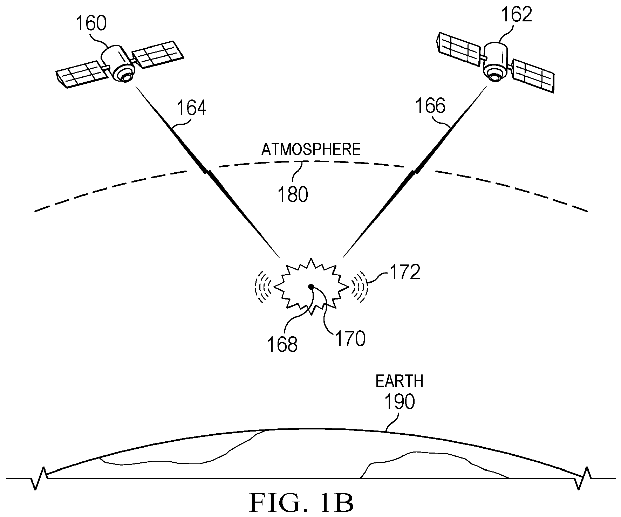

Turning now to **Figure 1B****,** a pictorial representation of platforms that can transmit radio frequency signals using non-physical antennas from space in which illustrative embodiments may be implemented. As another example, in **Figure 1B****,** satellite **160** emits laser **164** from space into the atmosphere **180** above earth **190** while satellite **162** emits laser **166** from space into the atmosphere **180** such that laser **164** and laser **166** intersect at optical breakdown point **168** causing optical breakdown **170** which results in radio frequency signals **172** originating and emanating from optical breakdown point **168.**

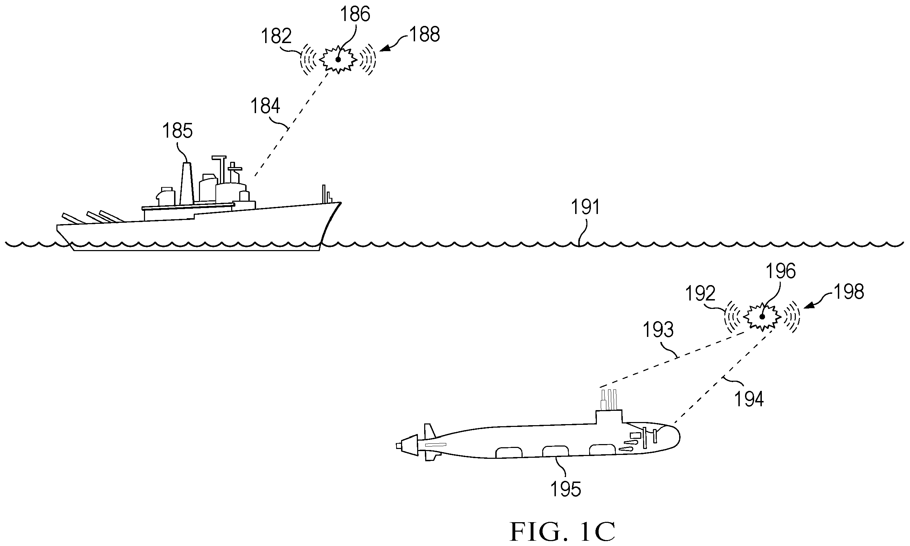

Turning now to **Figure 1C****,** a pictorial representation of platforms that can transmit radio frequency signals using non-physical antennas on, in, or under water **191** in which illustrative embodiments may be implemented. In this example, ship **185** emits laser beam **184** from ship **185** in a manner that at least one of causes or controls optical breakdown **188** at optical breakdown point **186.** As a result, radio frequency signals **182** as well as light emissions are transmitted in response to optical breakdown **188** at optical breakdown point **186.**

As another example, submarine **195** emits laser beam **193** and laser beam **194** from different physical locations on submarine **195.** The intersection of these two laser beams at optical breakdown point **196** causes optical breakdown **198** which results in the transmission of radio frequency signals **192** as well as underwater light emissions, including visible and non-visible light frequencies.

As depicted, these radio frequency signals are generated without using physical antennas to transmit signals. Further, these radio frequency signals are transmitted at physical locations away from the platforms. As a result, identifying the platforms generating these radio frequency signals can be more difficult because antennas for transmitting the radio frequency signals are not visible. Further, tracking the physical location of where the radio frequency signals are generated does not provide identification of the platform or the platform physical location, nor the physical location of the communications system, computer system, communications manager, or the laser origination points in these examples.

The physical locations of these optical breakdowns are considered radio frequency source emitters that can be in remote physical locations from the platforms emitting the laser beams. As a result, identifying the physical locations of the platforms becomes more difficult with the absence of physical antennas. Note that these optical breakdowns are distinguished from "plasma antennas" or ionized air or water columns.

Illustration of the different platforms in radio frequency communications environment **100** are only provided as examples of platforms that can implement this type of radio frequency signal transmission. In other illustrative examples, other platforms in addition to or in place of these platforms can be used. For example, this type of radio frequency generation can be implemented in a surface ship, a car or truck, a cruise missile, an aerial vehicle, a tank, a submersible sensor, or some other suitable type of platform in other illustrative examples.

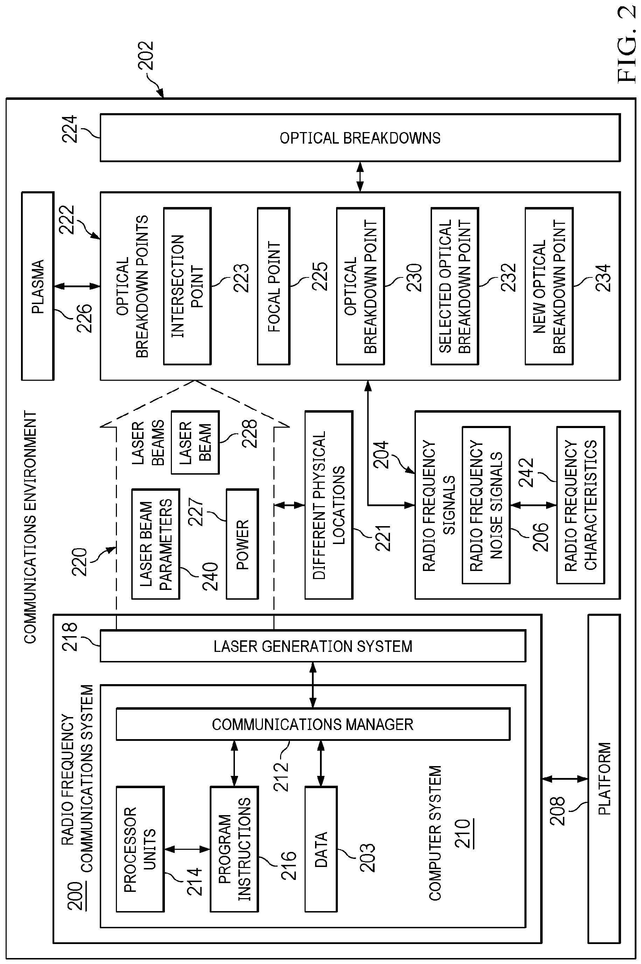

With reference now to **Figure 2****,** an illustration of a block diagram of a radio frequency communications environment is depicted in accordance with an illustrative embodiment. In this illustrative example, radio frequency communications system **200** in communications environment **202** can communicate data **203** by using radio frequency signals **204** in the form of radio frequency noise signals **206.**

Data **203** can take a number of different forms. For example, data **203** can be a document, a spreadsheet, sensor data, an image, a video, and email message, a text message, a webpage, a table, a data structure, serial data, commands, or other types of data that is to be transmitted or communicated. Data can also be analog or digital information and/or data. Analog and digital information and/or data can include, for example, music and audio.

In one illustrative example, a noise signal is a signal with irregular fluctuations that are or appear to be at least one of random, non-predictable, or non-deterministic.

Further, the phrase "at least one of," when used with a list of items, means different combinations of one or more of the listed items can be used, and only one of each item in the list may be needed. In other words, "at least one of' means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

A noise signal can be a signal that is statistically random. For example, a noise signal in these examples can be a signal that meets one or more standard tests for statistical randomness. A pseudorandom noise signal that seems to lack any definite pattern, although consisting of a deterministic sequence of pulses that repeats itself after its period is an example of a signal that is statistically random and considered a noise signal that can be used to encode data. Thus, a noise signal can be non-predictable.

In this example, radio frequency noise signals **206** are electromagnetic noise signals that can have a frequency from around 20 kHz to above the Terahertz range. Radio frequency noise signals can include signals with frequencies such as extremely low frequency (ELF), high frequency (HF), and other types of frequencies. These noise signals can also include microwave noise signals and Terahertz noise signals. Electromagnetic noise signals can also be optical noise in the visible range, infrared, ultraviolet X-rays and other types of noise signals that can be used as modulated noise. For example, lasers used at optical breakdown also may transmit various ranges of noisy light in addition to noisy broadband radio frequencies. Modulating this noisy light with different techniques such as pulse noise modulation is included in this disclosure.

In this illustrative example, radio frequency communications system **200** is associated with platform **208.** Platform **208** is an object that can transmit radio frequency noise signals **206** using radio frequency communications system **200.**

Platform **208** can take a number of different forms. For example, platform **208** can be one of a mobile platform, a stationary platform, a land-based structure, an aquatic-based structure, and a space-based structure. More specifically, the platform can be a surface ship, a tank, a personnel carrier, a train, an airplane, a commercial airplane, a spacecraft, a space station, a satellite, a submarine, an automobile, a ground station, a power plant, a bridge, a dam, a house, a manufacturing facility, a building, and other suitable platforms.

In this illustrative example, radio frequency communications system **200** comprises computer system **210** and communications manager **212.** In this example, communications manager **212** is located in computer system **210.**

As used herein, "a number of' when used with reference to items, means one or more items. For example, "a number of different forms " is one or more different forms.

Communications manager **212** can be implemented in software, hardware, firmware or a combination thereof. When software is used, the operations performed by communications manager **212** can be implemented in program instructions configured to run on hardware, such as a processor unit. When firmware is used, the operations performed by communications manager **212** can be implemented in program instructions and data and stored in persistent memory to run on a processor unit.

When hardware is employed, the hardware may include circuits that operate to perform the operations in communications manager **212.** The circuits used to implement communications manager **212** can take other forms in addition to or in place of a processor unit.

In the illustrative examples, the hardware used to implement communications manager **212** can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform a number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **210** is a physical hardware system and includes one or more data processing systems. In this illustrative example, the data processing systems are hardware machines that can be configured to perform a sequence of operations. These operations can be performed in response to receiving an input in generating and output based on performing the operations. This output can be data in the form of values, commands, or other types of data. When more than one data processing system is present in computer system **210,** those data processing systems are in communication with each other using a communications medium. The communications medium may be a network. The data processing systems may be selected from at least one of a computer, a server computer, a tablet, or some other suitable data processing system.

As depicted, computer system **210** includes a number of processor units **214** that are capable of executing program instructions **216** implementing processes in the illustrative examples. In other words, program instructions **216** are computer-readable program instructions.

As used herein, a processor unit in the number of processor units **214** is a hardware device and is comprised of hardware circuits such as those on an integrated circuit that respond and process instructions and program code that operate a computer. When the number of processor units **214** executes program instructions **216** for a process, the number of processor units **214** can be one or more processor units that are on the same computer or on different computers. In other words, the process can be distributed between processor units **214** on the same or different computers in a computer system **210.**

Further, the number of processor units **214** can be of the same type or different type of processor units. For example, a number of processor units **214** can be selected from at least one of a single core processor, a dual-core processor, a multiprocessor core, a general-purpose central processing unit (CPU), a graphics processing unit (GPU), a digital signal processor (DSP), or some other type of processor unit.

As depicted, radio frequency communications system **200** can also include laser generation system **218.** In other examples, laser generation system **218** can be considered a separate component controlled by radio frequency communications system **200.**

In this example, laser generation system **218** is a hardware system that can emit a set of laser beams **220.** The operation of laser generation system **218** can be controlled by communications manager **212.**

In this example, the set of laser beams **220** can be emitted from different physical locations **221.** For example, laser generation system **218** can be comprised of laser units that are positioned in different physical locations. Each physical location can have one or more laser units for laser generation system **218** in this illustrative example.

Communications manager **212** can identify data **203** for transmission using radio frequency noise signals **206.** Communications manager **212** controls an emission of a set of laser beams **220.** In this example, communications manager **212** directs or steers the set of laser beams **220** at a set of optical breakdown points **222.** In this example, the set of optical breakdown points **222** can be selected from at least one of intersection point **223** or focal point **225.**

As used herein, "a set of" when used with reference to items, means one or more items. For example, "a set of optical breakdown points **222"** is one or more of optical breakdown points **222.** In another example, a "set of laser beams" means one or more laser beams.

In this example, intersection point **223** can be a physical location where two or more laser beams intersect. This physical location can be where an optical breakdown occurs from the intersection of two or more laser beams when the power **227** of two or more intersecting laser beams is sufficient to cause an optical breakdown. Focal point **225** can be a physical location where the laser beam is focused to cause an optical breakdown to occur at that physical location.

This emission of the set of laser beams **220** is controlled by communications manager **212** to cause optical breakdowns **224** at the set of optical breakdown points **222** that generate radio frequency noise signals **206** encoding data **203.** In this illustrative example, plasma **226** occurs at optical breakdown points **222** in response to optical breakdowns **224** by the set of laser beams **220.** This plasma generated by optical breakdowns **224** causes radio frequency noise signals **206** to be transmitted at the set of optical breakdown points **222.**

In this example, power **227** of laser beam **228** in the set of laser beams **220** at optical breakdown point **230** in the set of optical breakdown points **222** can be controlled using different mechanisms. For example, power **227** can be controlled by at least one of a shutter, a lens, a deformable lens, a microelectromechanical systems mirror, an attenuator, a controlling optics, an optical filter, an amplitude modulator in a laser beam generator, or other device.

In this illustrative example, communications manager **212** can control the emission of the set of laser beams **220** by laser generation system **218** in a number of different ways. For example, communications manager **212** can control laser generation system **218** to emit a first number of the set of laser beams **220** continuously at the set of optical breakdown points **222.** Communications manager **212** can control laser generation system **218** to pulse a second number of the set of laser beams **220** at the set of optical breakdown points **222** to cause optical breakdowns **224** that generate radio frequency noise signals **206** encoding data **203.** The laser beam can be pulsed by turning the laser beam on and off. In another example, a laser beam can be pulsed by varying the power of the laser beam. In other words, the power can be pulsed by increasing and decreasing the power of the laser beam.

In another illustrative example, communications manager **212** can control laser generation system **218** to emit the set of laser beams **220** at the set of optical breakdown points **222** causing optical breakdowns **224** that generate radio frequency noise signals **206** encoding data **203.**

In this example, the emission of the set of laser beams **220** can be performed in a number of different ways. The set of laser beams can be emitted as at least one of pulsed or continuous. For example, one laser beam can be continuous while another laser beam is pulsed. Further, the laser beams can be originated from different directions at the set of optical breakdown points **222.**

The direction at which a laser beam is emitted can move or sweep back such that an optical breakdown point is included during the movement of the laser beam. In other words, during the sweeping of the laser beam the laser beam can intersect with another laser beam. The intersection of this laser beam with another laser beam emitted the optical breakdown point can cause the optical breakdown at that optical breakdown point.

In another illustrative example, communications manager **212** can control laser generation system **218** to emit the set of laser beams **220** at selected optical breakdown point **232** in the set of optical breakdown points **222.** Communications manager **212** can select new optical breakdown point **234** in the set of optical breakdown points as the selected optical breakdown point. Communications manager **212** can repeat emitting the set of laser beams **220** and selecting the new optical breakdown point while generating radio frequency noise signals **206** encoding data **203.**

In yet another illustrative example, communications manager **212** can control laser generation system **218** to emit the set of laser beams **220** from different physical locations **221** at optical breakdown point **230.** In this example, a portion of the set of laser beams **220** intersect at optical breakdown point **230** such that power **227** from the portion of the set of laser beams **220** is sufficient to cause optical breakdowns **224** at intersection point **223** that generate radio frequency noise signals **206** encoding data **203.**

As another example, communications manager **212** can control laser generation system **218** to emit the set of laser beams **220** at optical breakdown point **230.** In this example, optical breakdowns **224** occur in response to all of the set of laser beams **220** intersecting at optical breakdown point **230.**

In controlling the emission of the set of laser beams **220,** communications manager **212** can change a set of laser beam parameters **240** for the set of laser beams **220** to encode data **203** into radio frequency noise signals **206** or visible and/or non-visible light. Laser beam parameters **240** include but are not limited to pulse durations, pulse repetition rate, beam diameter, beam profile (temporal and spatial), optical focal length, pulse shape, power, frequency, wavelength, directivity, gain, efficiency, and physical properties of propagation media such as index of refraction. In this example, changing the set of laser beam parameters **240** changes a set of radio frequency characteristics **242** for radio frequency noise signals **206** or visible and/or non-visible light. The set radio frequency characteristics **242** for radio frequency noise signals **206** can be selected from at least one of a timing, an optical breakdown point, an amplitude of the radio frequency noise signals, a frequency band, a relative phase, or other characteristics for radio frequency noise signals **206.**

In yet another illustrative example, communications manager **212** can control laser generation system **218** to emit a subset of the set of laser beams **220** at the set of optical breakdown points **222** to cause the optical breakdowns **224** that generates radio frequency noise signals **206** encoding data **203.** Communications manager **212** can select a new subset of the set of laser beams **220** as the subset of laser beams **220.** Communications manager **212** can repeat emitting of the subset of the set of laser beams **220** and selecting the new subset of the set of laser beams **220** while transmitting radio frequency noise signals **206** encoding the data **203.**

Thus, one or more illustrative examples enable transmitting radio frequency noise signals using radio frequency source emitters that do not require physical structures. As a result, one or more illustrative examples can overcome an issue with the vulnerability present in using physical source emitters such as antennas. In the illustrative examples, the optical breakdown points for the optical breakdowns are radio frequency source emitters.

Further, these radio frequency source emitters can be moved almost instantaneously to different physical locations by repositioning the laser beams such that the laser beams point at different optical breakdown points. Attacks at these radio frequency source physical locations are attacks at the optical breakdown points where the plasma is generated. As a result, kinetic attacks against these physical locations are useless because the laser modulation sources are remote from the physical locations of these radio frequency source emitters.

The illustration of communications environment **202** to in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although communications manager **212** is shown as being implemented using program instructions **216** run on a number of processor units **214** in computer system **210,** communications manager **212** can be implemented in other hardware instead of or in addition to the number of processor units **214.** For example, computer system **210** may use other hardware in addition to or in place of the number of processor units **214.**

For example, other types of hardware circuits capable of performing the operations for communications manager **212** can be used. This other hardware can be at least one of a circuit system, an integrated circuit, an application-specific integrated circuit (ASIC), a programmable logic device, or some other suitable type of hardware configured to perform a number of operations.

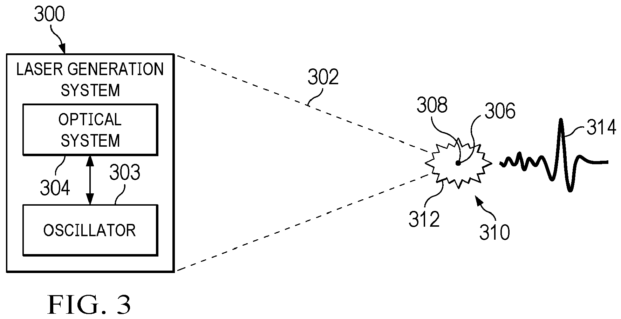

Turning next to **Figure 3****,** an illustration of radio frequency noise generation using a laser beam is depicted in accordance with an illustrative embodiment. This depicted example in **Figure 3** illustrates how a single laser beam can be used to generate radio frequency signals.

In this illustrative example, laser generation system **300** is an example of laser generation system **218** in **Figure 2****.** Laser generation system **300** emits laser beam **302.**

As depicted, laser generation system **300** comprises a number of different components. In this example, laser generation system **300** includes oscillator **303** and optical system **304.**

Oscillator **303** generates coherent light for emitting laser beam **302.** In this example, optical system **304** can focus laser beam **302.** Optical system **304** includes at least one of a lens, a mirror, or other optical element that can change the focus of laser beam **302.**

In this example, the focus of laser beam **302** is controlled such that the power at focal point **306** is an optical breakdown point **308** where optical breakdown **310** occurs. As depicted in this example, optical breakdown **310** results in the generation of plasma **312.** Plasma **312** resulting from optical breakdown **310** causes the generation of radio frequency noise signal **314.** Thus, this example illustrates how a single laser beam can be used to generate radio frequency signals.

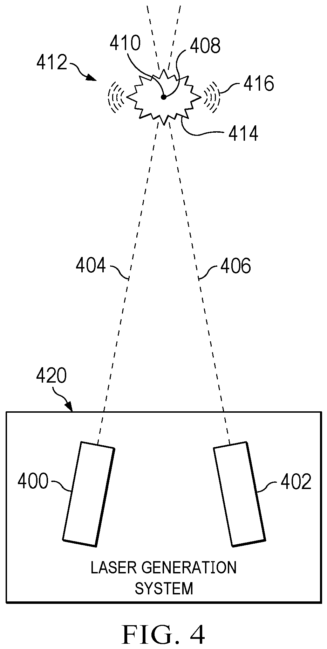

Turning next to **Figure 4****,** an illustration of radio frequency noise generation using a plurality of laser beams is depicted in accordance with an illustrative embodiment. In this illustrative example, laser generation system **420** comprises laser unit **400** and laser unit **402.** Laser generation system **420** is an example of an implementation for laser generation system **218** in **Figure 2****.**

In this illustrative example, laser unit **400** generates first laser beam **404.** Laser unit **402** generates second laser beam **406.**

In this example, first laser beam **404** and second laser beam **406** are emitted in directions from these laser beam units to intersect at optical breakdown point **408.** These two laser beams are emitted along different paths that intersect at optical breakdown point **408.** This optical breakdown point where the two laser beams intersect each other is intersection point **410.**

In this example, the intersection of first laser beam **404** and second laser beam **406** results in optical breakdown **412.** This optical breakdown generates plasma **414.** As depicted in this example, optical breakdown **412** results in radio frequency noise signals **416.**

As depicted in the example, optical breakdown **412** occurs where first laser beam **404** and second laser beam **406** intersect at intersection point **410.** In this example, the power for first laser beam **404** and second laser beam **406** individually is not sufficient to cause an optical breakdown.

The illustration of the two laser units for laser generation system **420** in **Figure** 4 is provided as an example of one implementation for generating radio frequency noise signals. This illustration is not meant to limit the manner in which other illustrative examples can be implemented. In another example, one or more laser units in addition to laser unit **400** and laser unit **402** can be used to generate additional laser beams. The laser beams can also intersect at intersection point **410** to cause optical breakdown **412.**

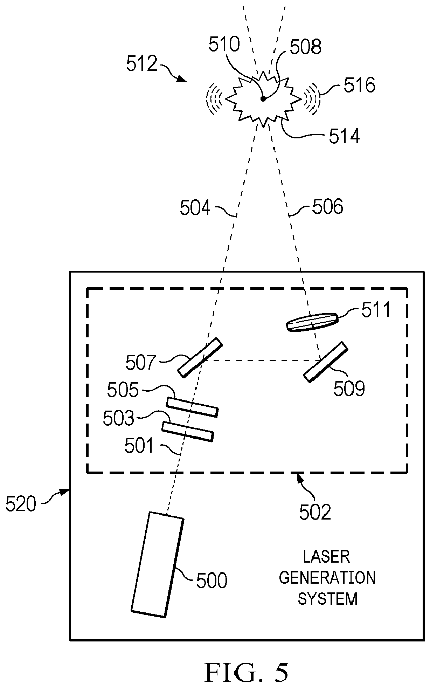

Turning next to **Figure 5****,** an illustration of radio frequency noise generation using a plurality of laser beams is depicted in accordance with an illustrative embodiment. In this illustrative example, laser generation system **520** comprises laser unit **500** and optical system **502.** Laser generation system **520** is an example of an implementation for laser generation system **218** in **Figure 2****.**

In this example, laser unit **500** emits first laser beam **504** and second laser beam **506.** In this example, laser unit **500** generates initial laser beam **501** that is split into two laser beams, first laser beam **504** and second laser beam **506** by optical system **502.**

As depicted, optical system **502** comprises a number of different components. In this depicted example, optical system **502** comprises shutter **503**, variable attenuator **505**, beam splitter **507**, mirror **509,** and lens **511.**

The components depicted are example components that can be used in optical system **502** and can change in other illustrative examples. For example, one or more of lens **511**, variable attenuator **505**, and shutter **503** may be omitted in other illustrative examples. In yet other illustrative examples, other components may be added such as a lens located before beam splitter **507.**

As depicted, initial laser beam **501** is split into two laser beams by beam splitter **507.** Mirror **509** can be used to direct second laser beam **506** in different directions. Further, mirror **509** can be used to provide focus to increase the power of second laser beam **506** at a focal point such as optical breakdown point **508.** Lens **511** also can be used to provide focus to increase the power of second laser beam **506** at optical breakdown point **508.**

In this example, first laser beam **504** and second laser beam **506** are emitted in directions to intersect at optical breakdown point **508**, which is intersection point **510** in this example. Optical breakdown **512** occurs at this intersection of first laser beam **504** and second laser beam **506**, generating plasma **514** that results in the generation of radio frequency noise signals **516**.

In this example, the power of first laser beam **504** and second laser beam **506** are sufficient to cause optical breakdown **512** at the intersection of the laser beams. Optical breakdowns do not occur in other physical locations where these laser beams do not intersect each other in this example.

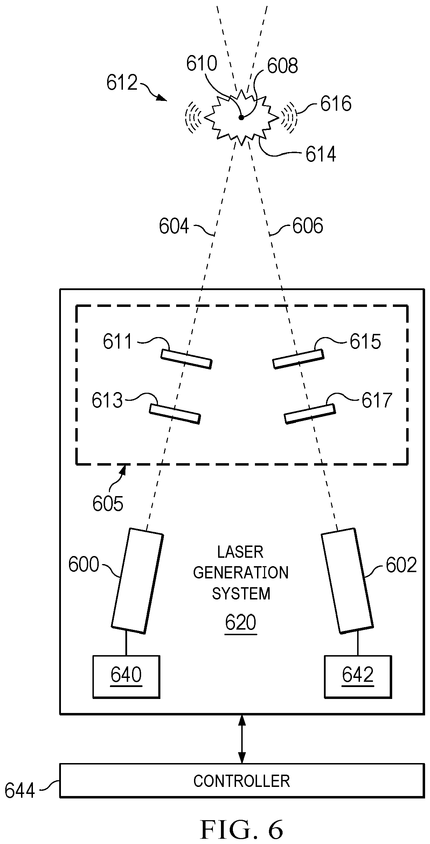

With reference now to **Figure 6**, an illustration of a diagram for controlling radio frequency noise generation is depicted in accordance with an illustrative embodiment. In this illustrative example, the operation of laser generation system **620** is controlled by controller **644.** As depicted, laser generation system comprises laser unit **600,** laser unit **602,** first power source **640**, second power source **642**, and optical system **605.** In this example, controller **644** can control the operation of laser generation system **620.**

In this example, laser generation system **620** is an example of an implementation for laser generation system **218** in **Figure 2****.** Controller **644** is an example a component that can be implemented in communications manager **212** in **Figure 2****.**

In this illustrative example, controller **644** can control the emission of first laser beam **604** and second laser beam **606** from laser generation system **620.** In this illustrative example, laser unit **600** generates first laser beam **604** using power supplied by first power source **640.** Laser unit **602** generates second laser beam **606** using power supplied by second power source **642.**

In this example, first laser beam **604** and second laser beam **606** are emitted in directions that have paths that intersect at optical breakdown point **608,** which is intersection point **610.** Optical breakdown **612** occurs at this intersection of first laser beam **604** and second laser beam **606,** generating plasma **614** that results in the transmission of radio frequency noise signals **616.**

In this example, controller **644** can control the emission of these laser beams such that at least one of first laser beam **604** or second laser beam **606** is pulsed. This pulsing can include at least one of turning a laser beam on and off for increasing and decreasing the power of the laser beam. This pulsing of one or both of first laser beam **604** and second laser beam **606** can be controlled to control the timing of radio frequency noise generation.

When pulsed, optical breakdown **612** occurs when both laser beams intersect at intersection point **610.** When one laser beam is turned off, and intersection is not present between both laser beams and optical breakdown **612** does not occur. By controlling the timing of when first laser beam **604** and second laser beam **606** intersect at intersection point **610,** controller **644** can control the generation of radio frequency noise signals in a manner that encodes at least one of information or data.

For example, data can be encoded in radio frequency noise signals based on the timing of when radio frequency noise signals are generated. As another example, the timing of the laser beams can be used to control the duration of radio frequency noise signals. This duration can also be used to encode data into the radio frequency noise signals.

In this illustrative example, controller **644** can control whether a laser unit emits a continuous laser beam or a pulsed laser beam using components such as first power source **640** and second power source **642.** These power sources can be turned on and off to turn the laser beams on and off. With this pulsing, optical breakdowns occur when both laser beams are on and intersect at intersection point **610.**

In this example, the pulsing can also include increasing and decreasing the power in one or both of first laser beam **604** and second laser beam **606.** In this example, decreasing the power of one or both laser beams can prevent the occurrence of an optical breakdown because of insufficient power being present when first laser beam **604** and second laser beam **606** intersect at intersection point **610.** Optical breakdown **612** occurs when the power present from both laser beams intersecting at intersection point **610** is high enough for an optical breakdown.

As another example, the pulsing of the laser beams can also be controlled using optical elements in optical system **605.** These optical elements can be controlled by controller **644** to pulse one or more of first laser beam **604** and second laser beam **606.**

For example, variable attenuator **611** and shutter **613** can be operated to pulse first laser beam **604.** For example, shutter **613** can be used to selectively emit first laser beam **604.** Variable attenuator **611** can be used to change the power of first laser beam **604.** In similar fashion, the emission of second laser beam **606** can also be pulsed using variable attenuator **615** and shutter **617.**

Thus, the emission of first laser beam **604** and second laser beam **606** from laser generation system **620** can be controlled by controller **644** such that both laser beams are continuous, one laser beam is continuous while the other laser beam is pulsed, or both laser beams are pulsed. This control can be performed to achieve optical breakdowns to transmit radio frequency noise signals in a manner that encodes data into the radio frequency signals.

The illustration of laser generation system **620** is an example of one implementation and is not meant to limit the manner in which other illustrative examples can be implemented. For example, in other illustrative examples one or more laser units can be present in addition to laser unit **600** and laser unit **602.**

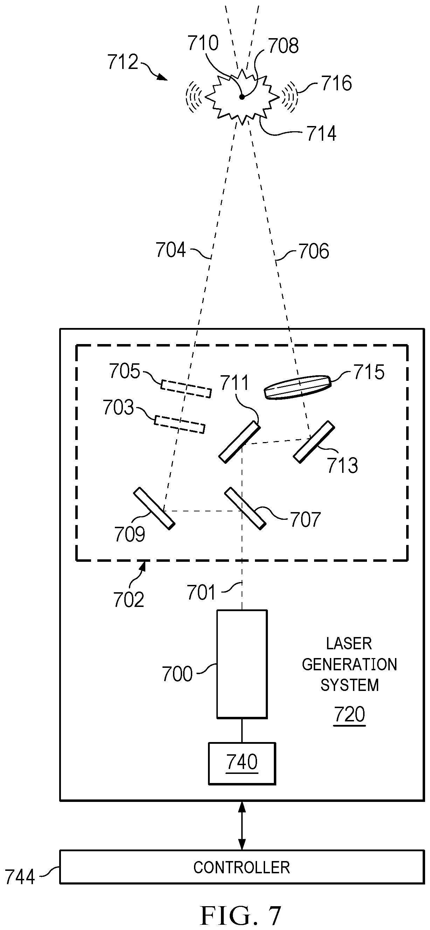

With reference next to **Figure 7****,** an illustration of a diagram for controlling radio frequency noise generation is depicted in accordance with an illustrative embodiment. In this illustrative example, laser generation system **720** is controlled by controller **744.** As depicted, laser generation system **720** comprises laser unit **700,** power source **740,** and optical system **702.**

Laser generation system **720** is an example of an implementation for laser generation system **218** in **Figure 2****.** Controller **744** is an example of the components that can be implemented in communications manager **212** in **Figure 2****.**

In this illustrative example, controller **744** controls the emission of first laser beam **704** and second laser beam **706** from laser generation system **720.** In this illustrative example, laser unit **700** generates first laser beam **704** and second laser beam **706** using power supplied by power source **740.** In this example, laser unit **700** generates initial laser beam **701** that is split into two laser beams, first laser beam **704** and second laser beam **706** by optical system **702.**

As depicted, optical system **702** comprises a number of different components. In this example, optical system **702** comprises shutter **703,** variable attenuator **705,** beam splitter **707,** and mirror **709,** mirror **711,** mirror **713,** and lens **715** as other components that can be located in optical system **702.** The components depicted are example components that can be used in optical system **702** and these components can change in other illustrative examples. For example, one or more lens **715,** variable attenuator **705,** and shutter **703** may be omitted in other illustrative examples. In yet other illustrative examples, other components may be included such as a lens located before beam splitter **707.**

As depicted, initial laser beam **701** is split into two laser beams by beam splitter **707.** In this example, first laser beam **704** and second laser beam **706** are emitted in directions to intersect at optical breakdown point **708,** which is intersection point **710** in this example. Optical breakdown **712** occurs at this intersection of first laser beam **704** and second laser beam **706.** Optical breakdown **712** generates radio frequency signal **716** through plasma **714** occurring from optical breakdown **712.**

In this example, the power of the first laser beam **704** and second laser beam **706** are sufficient to cause optical breakdown **712** at the intersection of the laser beams. Optical breakdowns do not occur in other physical locations where these laser beams do not intersect each other in this example.

In this example, controller **744** can control the emission of these laser beams such that at least one of first laser beam **704** or second laser beam **706** is pulsed. This pulsing can include at least one of turning a laser beam on and off for increasing and decreasing the power of the laser beam. This pulsing of one or both of first laser beam **704** and second laser beam **706** can be controlled to control the timing of radio frequency noise generation.

In this example, first laser beam **704** can be pulsed by controller **744** controlling the operation of at least one of variable attenuator **705** or shutter **703.** Variable attenuator **705** can be used to change the power of first laser beam **704.** Shutter **703** can turn laser beam on and off with respect to emissions of laser beams from laser generation system **720.** In this example, both laser beams can be pulsed at the same time by controlling power source **740.** In another illustrative example, components within laser unit **700** such as an amplitude modulator can be controlled to pulse the power of initial laser beam **701** resulting in a pulsing of both first laser beam **704** and second laser beam **706.**

By controlling the timing of when first laser beam **704** and second laser beam **706** intersect at intersection point **710,** controller **744** can control the generation of radio frequency noise signals in a manner that encodes data.

In yet another illustrative example, controller **744** can control the physical location of optical breakdown point **708** by moving one or both of first laser beam **704** and second laser beam **706.** This movement of optical breakdown point **708** can be controlled using at least one of mirror **709** or mirror **713.** By moving the physical location of optical breakdown point **708,** the phase of radio frequency noise signal can be changed to encode data.

The illustration of example implementations for laser generation system **218** in **Figure 2** and in **Figures 3-7** have been provided as an example of some illustrative examples and are not meant to limit the manner in which other laser generation systems can be implemented. For example, a laser generation system can include both a first laser unit and a second laser unit with an optical system. In yet another illustrative example, one or more laser units can be present that emit laser beams in addition to the ones depicted at different optical breakdown points. With this example, two or more optical breakdowns can occur from laser beams emitted from a laser generation system.

In yet another illustrative example, different laser beams can be emitted at different times at the same optical breakdown point. As a result, optical breakdowns can be generated from different combinations of laser beams at the same optical breakdown point.

The illustrative embodiments also recognize and take into account that current techniques for transmitting data involves the use of carrier wave forms. For example, many techniques use only periodic, sinusoidal, or other repetitive or predictable carrier wave forms that are modulated to encode data. These types of waveforms can be detected in noise through various techniques including the denoiser technology which can detect sinusoidal carriers at 20 dB to 40 dB below a noise floor.

As a result, interception and decoding of signals can occur using current transmission techniques. Further, when the sinusoidal carriers can be detected, security issues can arise. For example, information can be inserted into transmissions, jamming attacks can occur, or other issues with using single sinusoidal, periodic, or other repetitive carriers to transmit data.

Thus, the illustrative embodiments provide a method, apparatus, and system for transmitting data. In the illustrative examples, this data can be transmitted using various modulation techniques that modulate noise signals. The use of noise signals is in contrast to the use of a sinusoidal, periodic, repetitive, or predictable carrier that can be detected.

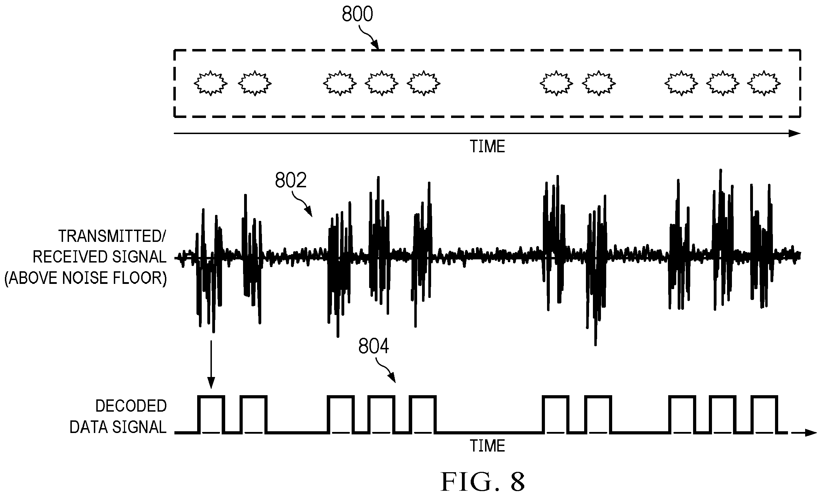

Turning to **Figure 8****,** an illustration of data transmission using pulse code noise modulation (also called pulse noise modulation) is depicted in accordance with an illustrative embodiment. In this illustrative example, pulse code noise modulation or pulse noise modulation can be performed using a radio frequency communication system such as radio frequency communications system **200** in **Figure 2****.**

In this illustrative example, optical breakdowns are generated over time. These optical breakdowns result in the generation of plasma **800** that causes radio frequency noise signals **802** to be transmitted.

The timing of these optical breakdowns can be selected to encode data such that the generation of radio frequency noise signals **802** encode the data. In this example, pulses are present in radio frequency noise signals **802** with timing that corresponds to the timing of optical breakdowns that generated plasma **800.** These pulses of radio frequency noise signals **802** are timed to encode data. This type of encoding of data can be referred to as pulse noise modulation. As depicted, radio frequency noise signals **802** can be received and decoded to obtain decoded data signal **804.**

This illustration of using radio frequency noise signals generated by optical breakdowns to communicate data is presented as one example of how pulses of radio frequency noise signals can encode data. This illustration is not meant to limit the manner in which other illustrative examples can be implemented.

For example, the pulses of radio frequency noise signals can be generated using other techniques in addition to or in place of laser-induced optical breakdowns. A transmitter system can use a noise signal as a carrier signal and a modulator to modulate the carrier signal such that pulses of radio frequency noise are transmitted that encode the data.

In still other illustrative examples, other types of noise signals in addition to or in place of radio frequency electromagnetic noise signals can be used. For example, noise signals can be used for transmitting data encoded in pulses and can be selected from at least one of electromagnetic frequency noise signals, radio frequency noise signals, microwave frequency signals, audio frequency noise signals, ultrasonic frequency noise signals, ultra-low frequency noise signals, very low frequency noise signals, underwater frequency noise signals, optical frequency noise signals, or other types of noise signals. These different types of noise signals can be used for various applications including speech communication, music, or other types of information for data that that are encoded in the noise signals.

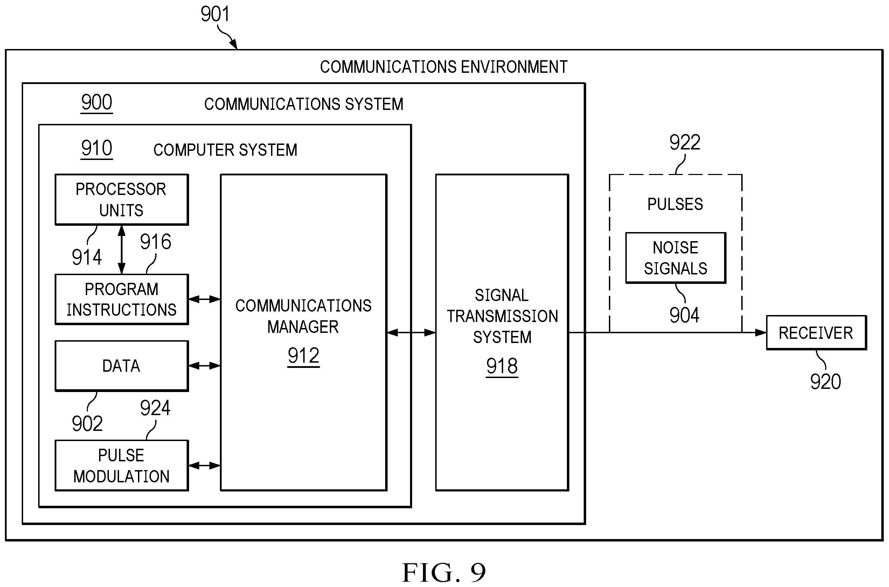

With reference next to **Figure 9****,** an illustration of a block diagram of a communication system is depicted in accordance with an illustrative embodiment. In this illustrative example, communications system **900** in communications environment **901** operates to transmit data **902** encoded in noise signals **904.**

In one illustrative example, a noise signal is a signal with irregular fluctuations that are or appear to be random, non-predictable, or non-deterministic. A noise signal can be a signal that is statistically random. For example, a noise signal in these examples can be a signal that meets one or more standard tests for statistical randomness. A pseudorandom noise signal that seems to lack any definite pattern, although consisting of a deterministic sequence of pulses that repeats itself after its period is an example of a signal that is statistically random and considered a noise signal that can be used to encode data. In this example, the noise in noise signals **904** can be selected from at least one of nondeterministic noise, pseudo random noise, or some other suitable type of noise signal.

In the illustrative example, signals can have characteristics selected from at least one of amplitude, frequency, bandwidth, timing, phase, or other characteristics. In this illustrative example, noise signals **904** can be noise signals in which at least one of these characteristics are not controlled to encode the data. In other words, at least one or more of these characteristics meet one or more standard tests for statistical randomness in noise signals **904.**

In these examples, noise signals **904** do not include carrier waves that are periodic. These types of signals can be, for example, sinusoidal, sawtooth, square, or other types of signals. Noise signals **904** also do not include periodic or sinusoid-based carrier signals that employ spread spectrum, frequency-hopping signals, and radar "chirps" that are based on periodic signals such as sinusoids or sawtooths. These and other types of signals that do not meet one or more standard tests for statistical randomness are not considered noise signals **904** in this example. However, "spread noise spectrum", frequency-hopping noise signals, and noise-based radar bursts that use noise as the basis of their carrier signals are considered noise signals **904** in this example.

As depicted, communications system **900** comprises computer system **910** and communications manager **912** located in computer system **910.**

Communications manager **912** can be implemented in software, hardware, firmware or a combination thereof. When software is used, the operations performed by communications manager **912** can be implemented in program instructions configured to run on hardware, such as a processor unit. When firmware is used, the operations performed by communications manager **912** can be implemented in program instructions and data and stored in persistent memory to run on a processor unit.

When hardware is employed, the hardware may include circuits that operate to perform the operations in communications manager **912.**

The circuits used to implement communications manager **912** can take other forms in addition to or in place of a processor unit.

In the illustrative examples, the hardware used to implement communications manager **912** can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **910** is a physical hardware system and includes one or more data processing systems. In this illustrative example, the data processing systems are hardware machines that can be configured to perform a sequence of operations. These operations can be performed in response to receiving an input in generating and output based on performing the operations. This output can be data in the form of values, commands, or other types of data. When more than one data processing system is present in computer system **910,** those data processing systems are in communication with each other using a communications medium. The communications medium may be a network. The data processing systems may be selected from at least one of a computer, a server computer, a tablet, or some other suitable data processing system.

As depicted, computer system **910** includes a number of processor units **914** that are capable of executing program instructions **916** implementing processes in the illustrative examples. In other words, program instructions **916** are computer-readable program instructions.

As used herein, a processor unit in the number of processor units **914** is a hardware device and is comprised of hardware circuits such as those on an integrated circuit that respond and process instructions and program code that operate a computer. When the number of processor units **914** executes program instructions **916** for a process, the number of processor units **914** can be one or more processor units that are on the same computer or on different computers. In other words, the process can be distributed between processor units **914** on the same or different computers in a computer system **910.**

Further, the number of processor units **914** can be of the same type or different type of processor units. For example, a number of processor units **914** can be selected from at least one of a single core processor, a dual-core processor, a multiprocessor core, a general-purpose central processing unit (CPU), a graphics processing unit (GPU), a digital signal processor (DSP), or some other type of processor unit.

As depicted, communications system **900** can also include signal transmission system **918.** In other examples, signal transmission system **918** can be considered a separate component controlled by communications system **900.**

In this depicted example, signal transmission system **918** is a hardware system that can transmit noise signals **904.** The operation of signal transmission system **918** can be controlled by communications manager **912.**

In this illustrative example, noise signals **904** are received by receiver **920.** Receiver **920** is also depicted as part of communications system **900.** In yet other illustrative examples, receiver **920** may be a separate component from communications system **900.**

Receiver **920** is a hardware system and can include processes implemented in hardware or software that decode data **902** that is encoded in pulses **922** of noise signals **904.**

In this illustrative example, communications manager **912** identifies data **902** for transmission. In response to identifying data **902,** communications manager **912** transmits pulses **922** of noise signals **904** encoding data **902.** In one illustrative example, data **902** can be encoded in pulses **922** of noise signals **904** using at least one of a timing of the pulses **922,** an amplitude of the pulses **922,** duration of pulses **922,** or other characteristic for pulses **922.** In this manner, communications manager **912** can perform pulse noise modulation through the modulation of noise signals **904** to encode data **902.**

For example, communications manager **912** can control the operation of signal transmission system **918** to perform pulse modulation **924.** With pulse modulation **924,** pulses **922** can encode data **902** through the timing of pulses **922** which are noise pulses or pulses of noise in this example.

For example, the presence of a noise pulse or pulse of noise can be considered a "1" and the absence of a noise pulse or pulse of noise can be considered a "0" which can be selected in time to encode data **902.** The timing of the presence or absence of pulses **922** of noise can occur using various time periods.

For example, the timing can be based on whether a noise pulse or pulse of noise is present or absent at each period of time. The period of time can be, for example, a microsecond, a millisecond, two milliseconds, or some other period of time during which a pulse is absent or present for encoding data **902** in pulses **922** of noise.

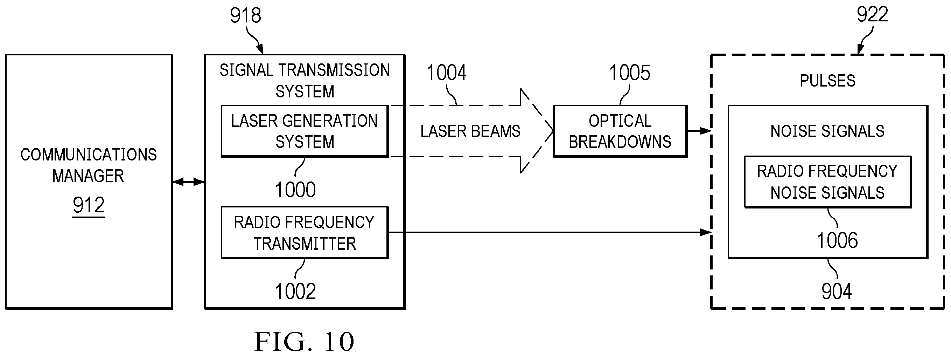

With reference next to **Figure 10****,** an illustration of a transmitter is depicted in accordance with an illustrative embodiment. In the illustrative examples, the same reference numeral may be used in more than one figure. This reuse of a reference numeral in different figures represents the same element in the different figures. In this illustrative example, examples of components that can be used to implement signal transmission system **918** in **Figure 9** are depicted.

As depicted in this illustrative example, signal transmission system **918** can include a number of different components that can be controlled to transmit noise signals **904.** More specifically, these components can be controlled to generate pulses **922** of noise signals **904.** These components can include at least one of laser generation system **1000** or radio frequency transmitter **1002.**

In this illustrative example, laser generation system **1000** is a hardware system that emits a set of laser beams **1004.** Communications manager **912** can control the emission of the set of laser beams **1004** from laser generation system **1000** to cause optical breakdowns **1005.**

In this example, optical breakdowns **1005** result in the generation of noise signals **904** in the form of radio frequency noise signals **1006.** In this example, pulses **922** of radio frequency noise signals **1006** can be generated based on the timing of optical breakdowns **1005.** In this illustrative example, each optical breakdown in optical breakdowns **1005** can be a pulse in pulses **922** of radio frequency noise signals 1006.

In this example, radio frequency transmitter **1002** is a hardware system and can transmit pulses **922** of noise signals **904** in the form of radio frequency noise signals **1006.** For example, radio frequency transmitter **1002** can transmit pulses **922** of noise signals **904** in the form of radio frequency noise signals **1006** transmitted from a physical hardware antenna instead of using lasers and optical breakdowns to produce the radio frequency noise signals **1006.**

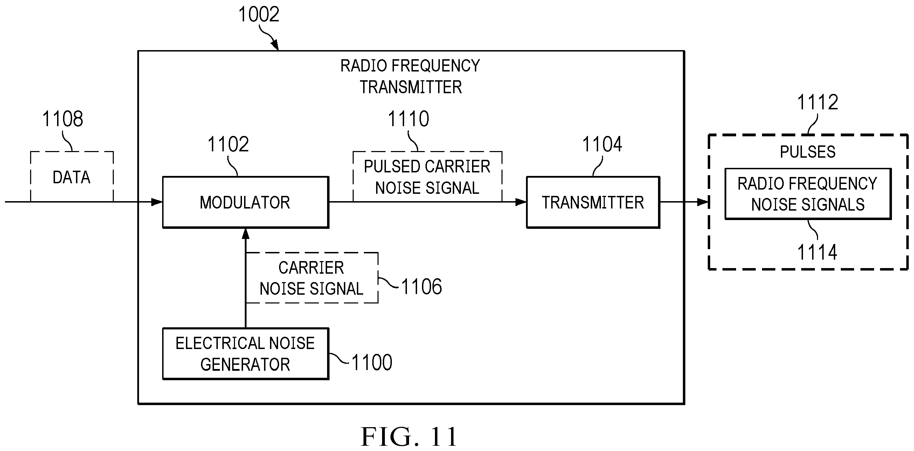

Turning next to **Figure 11****,** an illustration of a block diagram of a radio frequency transmitter is depicted in accordance with an illustrative embodiment. This figure illustrates example components that can be used to implement radio frequency transmitter **1002.** As depicted in this example, radio frequency transmitter **1002** comprises electric noise generator **1100,** modulator **1102,** and transmitter **1104.**

As depicted, electric noise generator **1100** generates carrier noise signal **1106.** Electric noise generator **1100** is connected to modulator **1102** and sends carrier noise signal **1106** to modulator **1102.**

As depicted, modulator **1102** receives data **1108** that is to be transmitted. In this example, modulator **1102** modulates or digitally "shift keys" carrier noise signal **1106** to create pulsed carrier noise signal **1110** that encodes data **1108.** This data is encoded in pulses in pulsed carrier noise signal **1110.** In this example the modulation occurs by modulator **1102** turning carrier noise signal **1106** on and off to form pulsed carrier noise signal **1110.**

Transmitter **1104** transmits pulsed carrier noise signal **1110** as pulses **1112** of radio frequency noise signals **1114.** In this example, transmitter **1104** includes a physical antenna that is used to transmit pulses **1112** of radio frequency noise signals **1114.** In other illustrative examples, the antenna can be a separate component from the hardware used to generate radio frequency noise signals **1114.**

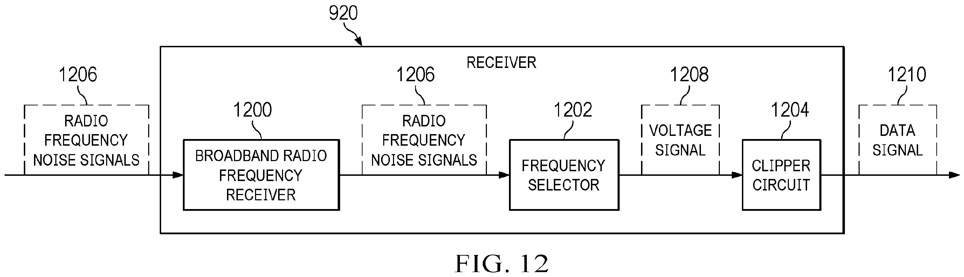

Turning next to **Figure 12****,** an illustration of a block diagram of a receiver is depicted in accordance with an illustrative embodiment. An example of components that can be used to implement receiver **920** are shown in this figure. As depicted, receiver **920** is a hardware system. As depicted, receiver **920** comprises broadband radio frequency receiver **1200,** frequency selector **1202,** and clipper circuit **1204.**

In this illustrative example, broadband radio frequency receiver **1200** receives radio frequency noise signals **1206.** Broadband radio frequency receiver **1200** is connected to frequency selector **1202** and sends the received signals to frequency selector **1202.**

Frequency selector **1202** outputs voltage signal **1208** from the frequencies selected in radio frequency noise signals **1206.** In this illustrative example, the selection of frequencies by frequency selector **1202** can be performed using at least one of a bandpass filter, a band-reject filter, an envelope follower, an envelope detector, a low-pass filter, a rectified low pass filter, multiple bandpass filters tuned to different frequencies, or some other suitable type of circuit.

Frequency selector **1202** is connected to clipper circuit **1204.** Voltage signal **1208** is received by clipper circuit **1204,** which shapes voltage signal **1208.** In this illustrative example, clipper circuit **1204** prevents voltage signal **1208** from exceeding a selected voltage level. Clipper circuit **1204** outputs data signal **1210.** In this example, data signal **1210** is in an analog or digital signal and contains pulses that can be used re-create the data transmitted in radio frequency noise signals **1206.**

Thus, one or more illustrative examples enable communicating data using noise carrier signals. In one illustrative example, these noise carrier signals or carrier noise signals can be modulated to encode data. The modulation can be pulse noise modulation or pulse code noise modulation in which a noise signal is transmitted in pulses. The timing of the pulses selected encodes data in these pulses of noise signals.

In this illustrative example, the modulation and demodulation of these pulses of noise signals do not depend on a single frequency or periodic waveform as the basis for the carrier wave as compared to current techniques that use a sinusoidal, periodic, or predictable carrier. As result, increased security can be present and interference with the sinusoidal carriers can be reduced.

In one illustrative example, the pulse code noise modulation or pulse noise modulation can be a broadband noise radio frequency carrier signal encoding the data. The generation of the pulses of radio frequency noise signals can be performed using a laser generation system that generates radio frequency signals through optical breakdowns. In another example, the generation of the radio frequency noise signals can be performed using a physical electromagnetic receipt transmitter having a physical antenna.

The illustration of communications environment **901** and the different components in **Figures 9-12** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although communications manager **912** is shown as being implemented using program instructions **916** run on a number of processor units **914** in computer system **910,** communications manager **912** can be implemented in other hardware instead of or in addition to the number of processor units **914.** For example, computer system **910** may use other hardware in addition to or in place of the number of processor units **914.**

For example, other types of hardware circuits capable of performing the operations for communications manager **912** can be used. This other hardware can be at least one of a circuit system, an integrated circuit, an application-specific integrated circuit (ASIC), a programmable logic device, or some other suitable type of hardware configured to perform a number of operations.

As another example, the illustration of laser generation system **1000** and radio frequency transmitter **1002** are provided as examples of some implementations of components that can transmit pulses **922** of noise signals **904.** As another example, radio frequency transmitter **1002** that generates electrical noise in electric noise generator **1100** as carrier noise signal **1106** to be modulated and transmitted as radio frequency noise signals **1114** in pulses **1112** can be transmitted on any type of physical, hardware antenna, or both. Examples of antenna types include, for example, whip antennas, dipole antennas, microwave antennas, metamaterial antennas, directional antennas, omnidirectional antennas, and any other type of physical antenna.

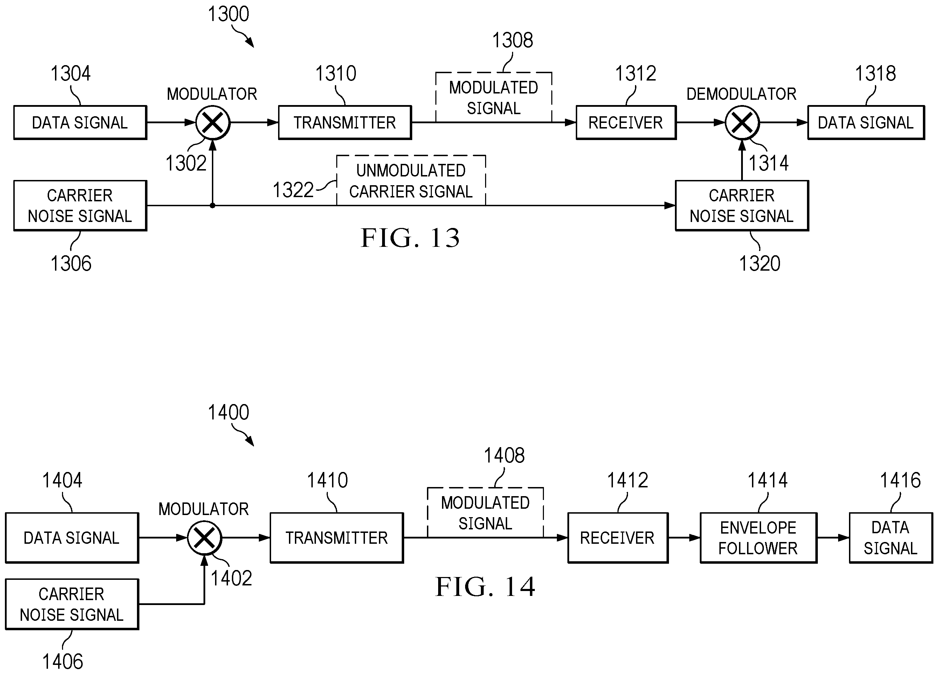

Turning next to **Figure 13****,** an illustration of a communications system for transmitting and receiving electromagnetic noise signals is depicted in accordance with an illustrative embodiment. In this illustrative example, communications system **1300** can transmit or receive electromagnetic noise signals encoding data using electromagnetic noise signals. Examples of electromagnetic noise signals may include electromagnetic ranges of ULF (Ultra Low Frequency), VLF (Very Low Frequency), 20 KHz to 300 KHz, HF (High Frequency), UHF (Ultra High Frequency), millimeter wave and microwave ranges, EHF (Extremely High Frequencies) up through Gigahertz frequencies and above Terahertz frequencies, and including the optical spectrum. Examples of applications or uses include noise carrier communications for modulation of audio, voice, and video communications, as well as noise-based radar, noise-based precision navigation and timing such as noise-based global positioning systems, noise-based spread spectrum using frequency bands of noise instead of sinusoidal-based carrier spread spectrum, noise-based frequency band-hopping using frequency-hopping of frequency bands of noise instead of using sinusoidal or periodic-based carrier frequency-hopping, as well as Signals Intelligence (SI) waveforms such as Low Probability of Intercept/Low Probability of Detect (LPI/LPD) and other clandestine signaling where detection and interception of messages using noise carriers will be difficult.

As depicted, modulator **1302** receives data signal **1304** and carrier noise signal **1306.** In this illustrative example, carrier noise signal **1306** can be generated by an electric noise generator.

Modulator **1302** modulates or digitally "shift keys" carrier noise signal **1306** to generate modulated signal **1308.** In this example, modulated signal **1308** comprises pulses of carrier noise signal **1306.** For example, modulated signal **1308** can be generated by turning modulator **1302** on and off to send pulses of carrier noise signal **1306** to transmitter **1310** for transmission as modulated signal **1308.** The generation of the pulses is based on the data in data signal **1304.** In this manner, the data in data signal **1304** can be encoded in modulated signal **1308.**

Transmitter **1310** transmits modulated signal **1308** to receiver **1312.** In one illustrative example, receiver **1312** can be a broadband radio frequency receiver when modulated signal **1308** is a radio frequency signal. When other types of signals are used, receiver **1312** is selected to detect the signals transmitted by transmitter **1310.**

Modulated signal **1308** detected by receiver **1312** is sent to demodulator **1314.** In this example, demodulator **1314** demodulates or digitally de-"shift keys" the modulated or "shift keyed" signal **1308** using carrier noise signal **1320** to generate data signal **1318,** which contains the same data in data signal **1304** in this depicted example.

As depicted, the demodulation of modulated signal **1308** is performed using carrier noise signal **1320.** In this illustrative example, carrier noise signal **1306** is not predictable as compared to current techniques using sinusoidal wave forms for carrier signals.

As depicted, carrier noise signal **1320** can be obtained by demodulator **1314** in the form of unmodulated carrier noise signal **1322** being transmitted to demodulator **1314.** In this manner, carrier noise signal **1320** used to demodulate modulated signal **1308** can be the same carrier signal as carrier noise signal **1306.** Unmodulated carrier noise signal **1322** can be an in-band or out-of-band copy of carrier noise signal **1306.**

With reference now to **Figure 14****,** an illustration of a block diagram of a communications system for transmitting and receiving electromagnetic noise signals is depicted in accordance with an illustrative embodiment. Communications system **1400** can transmit or receive electromagnetic noise signals encoding data using electromagnetic noise signals.

In this illustrative example, communications system **1400** can transmit or receive electromagnetic noise signals encoding data using electromagnetic noise signals.

As depicted, modulator **1402** receives data signal **1404** and carrier noise signal **1406.** In this illustrative example, carrier noise signal **1406** can be generated by an electric noise generator.

Modulator **1402** modulates or digitally "shift keys" carrier noise signal **1406** to generate modulated signal **1408.** In this example, modulator **1402** can be an on/off modulator. As an on/off modulator, modulator **1402** sends carrier noise signal **1406** transmitter **1410** for transmission when modulator **1402** is turned on and does not send carrier noise signal **1406** to transmitter **1410** when modulator **1402** is turned off. As result, modulated signal **1408** comprises pulses of carrier noise signal **1406.** These pulses are generated to encode data signal **1404.** In other words, the timing of these pulses can be generated to encode the data. For example, the timing in these depicted examples can be time for pulses to perform pulse code noise modulation or pulse noise modulation.

For example, modulated signal **1408** can be generated by turning modulator **1402** on and off to send pulses of carrier noise signal **1406** to transmitter **1410** for transmission as modulated signal **1408.**

Transmitter **1410** transmits modulated signal **1408** to receiver **1412.** In one illustrative example, receiver **1412** can be a broadband radio frequency receiver when modulated signal **1408** is a radio frequency signal. When other types of signals are used, receiver **1412** is selected to detect the signals transmitted by transmitter **1410.**

In this example, modulated signal **1408** detected by receiver **1412** is sent to envelope follower **1414.** As depicted, envelope follower **1414** can also be referred to as an envelope detector. Envelope follower **1414** can detect amplitude variations in modulated signal **1408** and create a signal having a shape that resembles those variations. This example, modulated signal **1408** contains pulses of noise. As a result, envelope follower **1414** can generate a signal with the shape of the noise pulses to form data signal **1416.** Envelope follower **1414** can be a selected from at least one of a low pass filter, a bandpass filter, an envelope detector, a peak detector, or a diode detector that follows and outputs the overall shape of at least one of the amplitudes or pulses as currently used.

The illustrative examples of communication systems in **Figure 13** and in **Figure 14** are presented as examples of some implementations for communications system **900** in **Figure 9****.** These illustrations are not meant to limit the manner in which other illustrative examples can be implemented. For example, a clipper circuit as is known in the art can be placed after envelope follower **1414** in **Figure 14** to convert rough envelopes of pulses into square wave pulses.

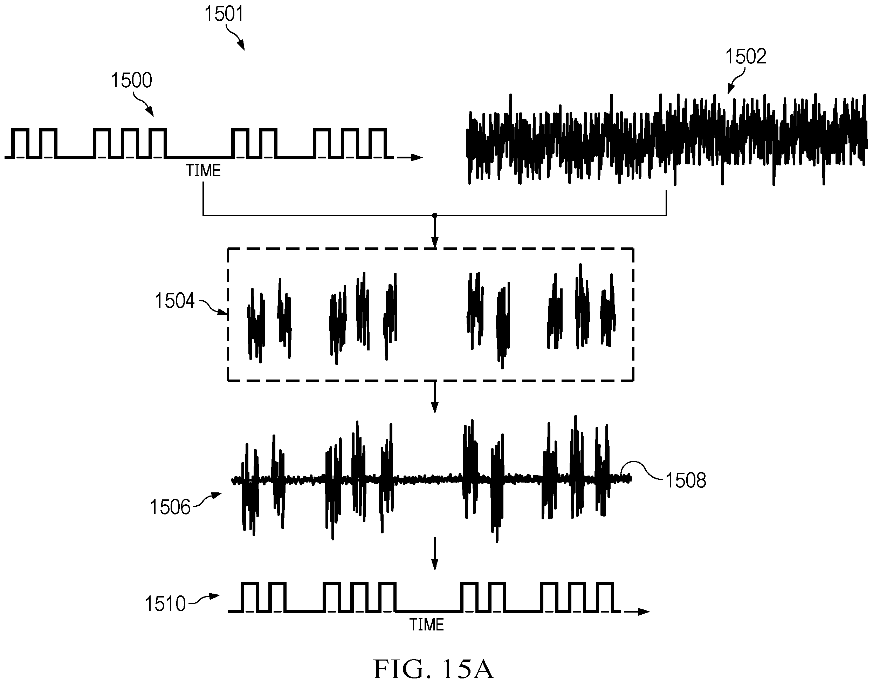

Turning now to **Figure 15A****,** an illustration of a data flow of signals transmitting data using modulated noise signals is depicted in accordance with an illustrative embodiment. In this illustrative example, data signal **1501** is an example of signals in communications system **1400 in** **Figure 14****.**

In this illustrative example, data signal **1500** is used to modulate carrier noise signal **1502.** Data signal **1500** is an example of data signal **1404** and carrier noise signal **1502** is an example of carrier noise signal **1406** in **Figure 14****.**

The modulation of carrier noise signal **1502** forms modulated signal **1504,** which encodes the data in data signal **1500.** Modulated signal **1504** is an example of modulated signal **1408** in **Figure 14****.** As depicted in this example, modulated signal **1504** is a modulated noise signal comprising pulses of carrier noise signal **1502.**

Received signal **1506** is an example of the signal received by a receiver. As depicted, received signal **1506** also includes noise **1508** in addition to the pulses of carrier noise signal **1502** in modulated signal **1504.** In this example, noise **1508** is background noise or other noise in addition to the pulses in the carrier noise in modulated signal **1504.**

As depicted, received signal **1506** can be processed and decoded using a component such as envelope follower **1414** in **Figure 14****.** Other components such as a bandpass filter, low-pass filter, band reject filter, clipper circuit, or other circuits can be used to generate output data signal **1510.** In this example, output data signal **1510** is the same as or close enough to data signal **1500** such that the same data used to generate data signal **1500** can be obtained from output data signal **1510.**

As discussed previously, the set of characteristics for noise signals can be selected from at least one of a timing, an amplitude, a frequency band, a relative phase, or other characteristics for carrier noise signals. For pulse noise modulation the carrier noise may be of different frequency characteristics that the transmitter and receiver will share. For pulse noise modulation the carrier noise signals will vary in amplitude, duration, and timing to modulate the message signal. For reception of these pulse noise modulated signals the receivers in **Figure 12** and **Figure 14** use various types of techniques to receive and demodulate the original data signal.

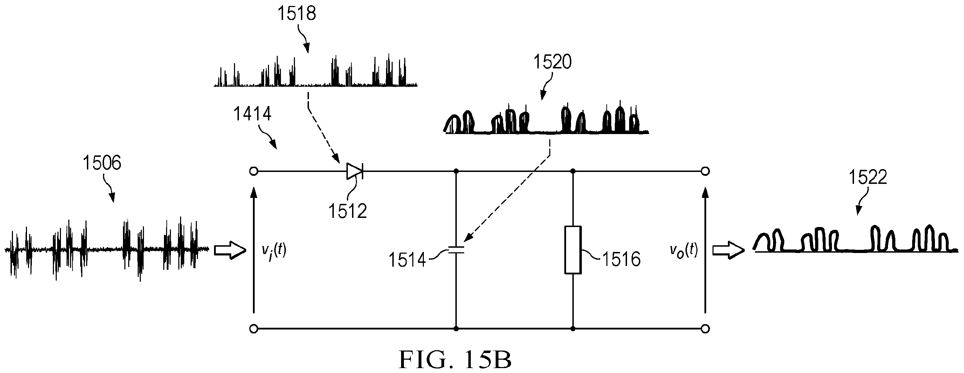

Turning now to **Figure 15B****,** an illustration of an envelope follower circuit using a diode detector with a low pass filter in accordance with an illustrative embodiment. In this figure, an illustration of a simple circuit for envelope follower **1414** is shown. In this illustrative example, envelope follower **1414** is comprised of a diode **1512** to rectify the input signal, capacitor **1514** to provide a low pass filter to smooth out the noisy rectified signal and produce a lower frequency envelope. An optional resistor **1516** or inductive coil may be provided to affect the tuning or resonance of the circuit. Here, received signal **1506** of carrier pulses of noise is inputted to the envelope follower **1414** circuit. As received signal **1506** travels through diode **1512** the diode acts as a rectifier and converts the AC noise signal into a DC noise signal **1518** as shown by the dashed arrow from DC noise signal **1518** to the output of diode **1512.** From there the rectified DC noise signal **1518** travels across capacitor **1514** which acts as a low pass filter to smooth the signal into an envelope signal **1520.** The actual envelope signal, envelope signal **1520,** is shown by the line the follows the outline or envelope of the noise bursts from DC noise signal **1518.** The envelope signal **1520** then travels across optional resistor **1516** or coil and exits at the output as the envelope followed signal **1522.**

In this illustrative example it is clear that the envelope followed signal **1522** is beginning to look like the received signal **1506.**

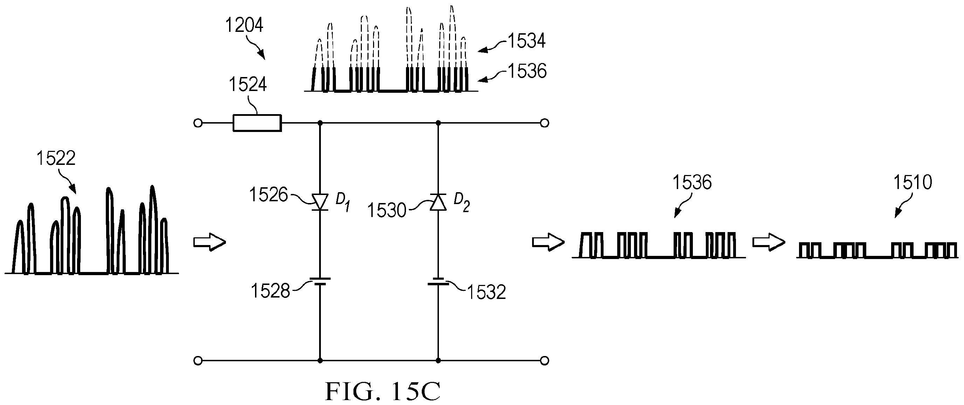

With reference to **Figure 15C****,** an illustration of a clipper circuit in accordance with an illustrative embodiment. In this figure, clipper circuit **1204** is also referred to as a slicer or amplitude selector. In this illustrative example, clipper circuit **1204** is comprised of optional input resistor **1524,** and a bidirectional clipping circuit comprised of diode D1 **1526,** bias voltage **1528,** diode D2 **1530,** and bias voltage **1532.** This and many other known methods of clipping can be used. Single directional clipping may be used as well as bidirectional or any other type of clipping circuit.

In this illustrative example, envelope followed signal **1522** from **Figure 15B** has been amplified to be a stronger signal and is inputted into clipper circuit **1204.** Envelope followed signal **1522** travels through optional input resistor **1524** which may be an impedance matching circuit.

This signal then travels across one or more illustrative diode D1 **1526** and diode D2 **1530.** Various types of diodes may be used. A single diode may be used, or a transistor circuit may be used with the purpose of clipping off the top of envelope followed signal **1522** such that top part of signal **1534** is clipped off and bottom part of signal **1536** remains. The level at which top part of the signal **1534** is clipped off is determined by the diode D1 **1526** and diode D2 **1530** as well as by the bias voltage **1528** and **1532.**

Thus, bottom part of signal **1536** remaining is output at the output. This bottom part of the signal **1536** can be transferred through another stage of clipping until it becomes output data signal **1510** which is extremely similar to the original data signal **1500.**

As can be seen in this illustrative example, the pulses of carrier noise signal **1502** encode data in data signal **1500.** In other words, the timing in generating pulses of carrier noise signal **1502** is used to encode the data.

Thus, the different illustrative examples use pulse modulation of a noise signal that can be generated using a laser generator or a transmitter. With a laser generator, optical breakdowns are used to create the pulses of noise signals. With a physical transmitter, an electronic noise source generates a carrier noise signal that is modulated to create pulses of the carrier noise signal based on the data to be transmitted. These pulses of the carrier noise signals form the pulses of noise signal encoding data that can be transmitted using a physical antenna.

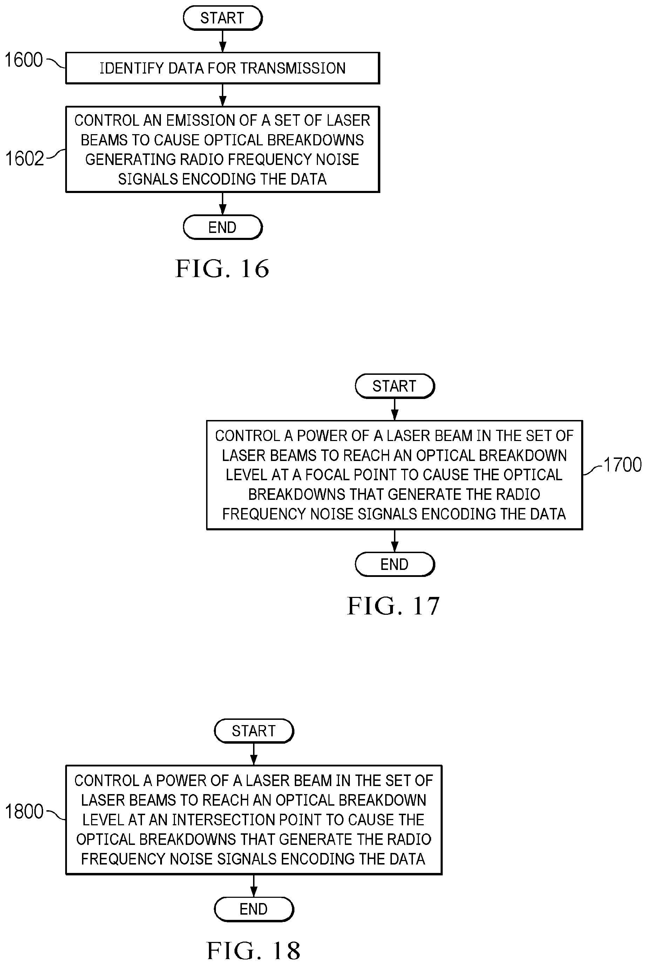

In this illustrative example, **Figures 16-27** are flowcharts illustrating operations that can be performed to generate radio frequency noise signals encoding data in which a physical antenna is unnecessary.

With reference first to **Figure 16****,** a flowchart of a process for transmitting data is depicted in accordance with an illustrative embodiment. The process in **Figure 16** can be implemented in hardware, software, or both. When implemented in software, the process can take the form of program instructions that are run by one of more processor units located in one or more hardware devices in one or more computer systems. For example, the process can be implemented in communications manager **212** in computer system **210** in **Figure 2****.**

The process begins by identifying data for transmission (operation **1600**). The process controls an emission of a set of laser beams to cause optical breakdowns generating radio frequency noise signals encoding the data (operation **1602**). The process terminates thereafter.

In operation **1602,** the emission of the set of laser beams can be controlled in number of different ways. For example, the laser beams can be emitted continuously or pulsed. Further, direction at which the laser beams are directed can also be changed. For example, the set of laser beams can be directed towards a set of optical breakdown points. The optical breakdown points can be selected from at least one of an intersection point or focal point. These optical breakdown points are physical locations where optical breakdowns occur. These optical breakdowns are physical locations where plasma is generated that generates the radio frequency noise signals.

The manner in which the optical breakdowns occur can be used to encode the data in the radio frequency noise signals. For example, the timing of the occurrence of optical breakdowns generates time pulses used to encode data. In this manner, different types of data encoding such as pulse noise modulation can be used to encode data based on when radio frequency noise signals are generated.

As another example, the set of laser beams can be moved or swept such that the optical breakdowns occur in different physical locations resulting in the frequency of a phase change in the optical breakdowns that can be used to encode data. As another example, the power of the laser beams can be changed to change the amplitude of the radio frequency noise signals two encode data. In this manner, different types of data encoding such as pulse noise modulation can be used to encode data based on when radio frequency noise signals are generated.

Turning next to **Figure 17****,** an illustration of a flowchart for controlling the emission of laser beams is depicted in points with an illustrative embodiment. The process illustrated in **Figure 17** is an example of one implementation for operation **1602** in **Figure 16****.**

The process controls a power of a laser beam in the set of laser beams to reach an optical breakdown level at a focal point to cause the optical breakdowns that generate the radio frequency noise signals encoding the data (operation **1700**). The process terminates thereafter.

With reference next to **Figure 18****,** an illustration of a flowchart for controlling the emission of laser beams is depicted at intersecting points with an illustrative embodiment. The process illustrated in **Figure 18** is another example of an implementation for operation **1602** in **Figure 16****.**

The process controls a power of a laser beam in the set of laser beams to reach an optical breakdown level at an intersecting point to cause the optical breakdowns that generate the radio frequency noise signals encoding the data (operation **1800**). The process terminates thereafter.

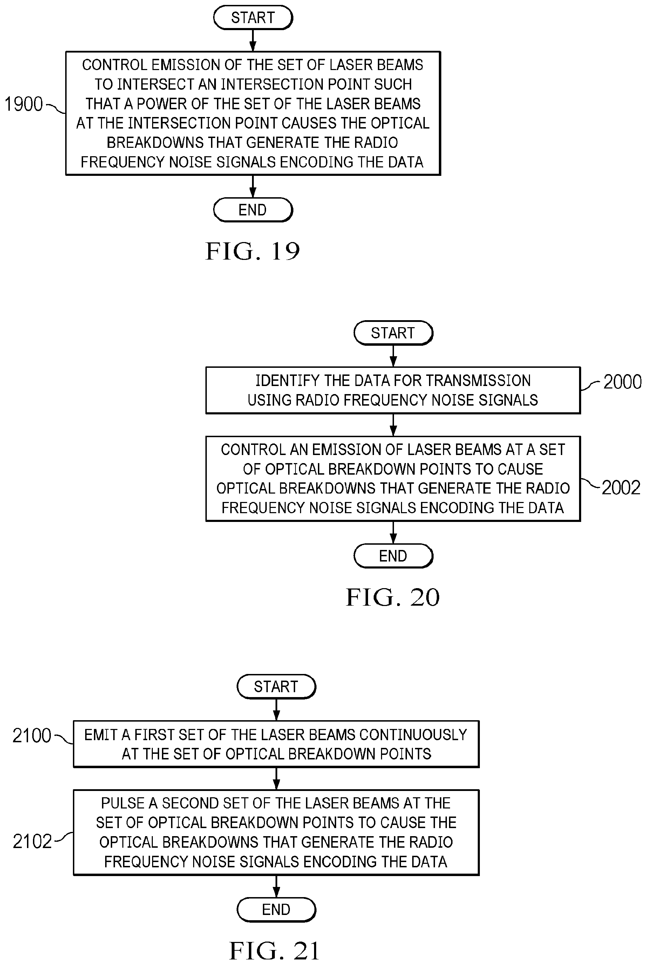

In **Figure 19****,** an illustration of a flowchart for controlling the emission of laser beams is depicted in points with an illustrative embodiment. The process illustrated in **Figure 19** is yet another example of an implementation for operation **1602** in **Figure 16****.**

The process controls emission of the set of laser beams to intersect an intersection point such that a power of the set of the laser beams at the intersection point causes the optical breakdowns that generate the radio frequency noise signals encoding the data (operation **1900**). The process terminates thereafter.

Turning next to **Figure 20****,** a flowchart of a process for transmitting data is depicted in accordance with an illustrative embodiment. The process in **Figure 20** can be implemented in hardware, software, or both. When implemented in software, the process can take the form of program instructions that are run by one of more processor units located in one or more hardware devices in one or more computer systems. For example, the process can be implemented in communications manager **212** in computer system **210** in **Figure 2****.**

The process begins by identifying the data for transmission using radio frequency noise signals (operation **2000**). The process controls an emission of laser beams at a set of optical breakdown points to cause optical breakdowns that generate the radio frequency noise signals encoding the data (operation **2002**). The process terminates thereafter.

In this example, the set of optical breakdown points can be at different physical locations when more than one optical breakdown point is present in the set of optical breakdown points. In one example, radio frequency transmissions can be transmitted from multiple physical locations when the set of optical breakdowns is caused by the set of lasers being directed at more than one optical breakdown point.

In **Figure 21****,** an illustration of a flowchart for controlling the emission of laser beams is depicted in points with an illustrative embodiment. The process illustrated in **Figure 21** is yet another example of an implementation for operation **2002** in **Figure 20****.**

The process begins by emitting a first set of the laser beams continuously at the set of optical breakdown points (operation **2100**). The process pulses a second set of the laser beams at the set of optical breakdown points to cause the optical breakdowns that generate the radio frequency noise signals encoding the data (operation **2102**). The process terminates thereafter.

In operation **2102,** the pulsing can occur by turning the second set of laser beams on and off. In other examples, the pulsing can provide increasing decreasing the power to the second set of laser beams. In this example, the optical breakdowns occur in response to sufficient power in the laser beams at the set of optical breakdown points. In this example, the pulsing can control the timing of when radio frequency noise signals are transmitted.

Further in operation **2102,** a power of a laser beam at the optical breakdown point can be controlled at by at least one of a shutter, a lens, a deformable lens, a microelectromechanical systems mirror, an attenuator, a controlling optics, an optical filter, an amplitude modulator in a laser beam generator, or other suitable components.

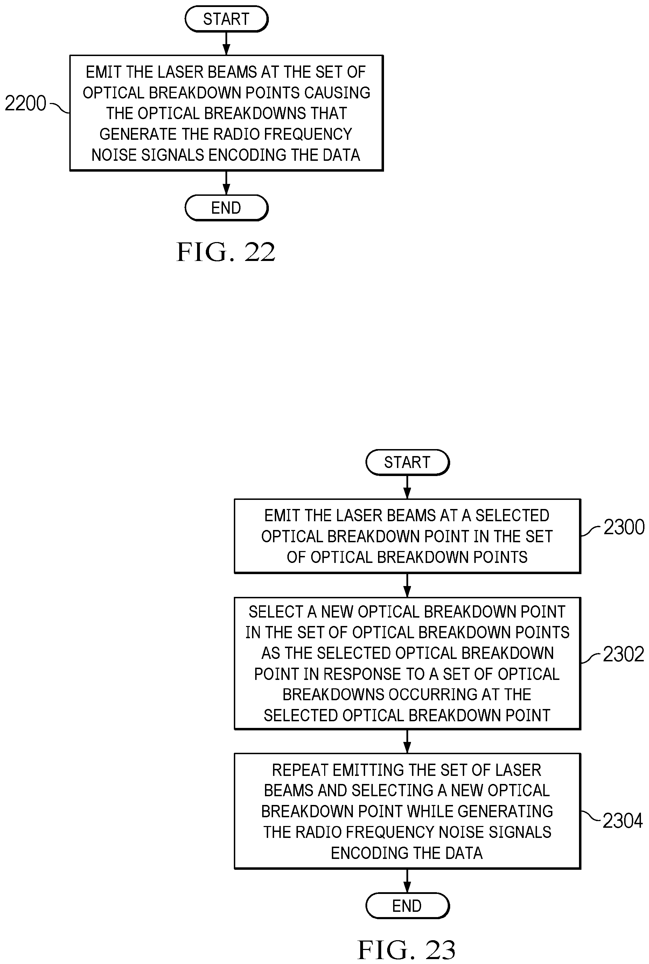

With reference now to **Figure 22****,** an illustration of a flowchart for controlling the emission of the laser beams is depicted in points with an illustrative embodiment. The process illustrated in **Figure 21** is yet another example of an implementation for operation **2002** in **Figure 20****.**

The process emits the laser beams at the set of optical breakdown points causing the optical breakdowns that generate the radio frequency noise signals encoding the data (operation **2200**). The process terminates thereafter.

Turning next to **Figure 23****,** an illustration of a flowchart for controlling the emission of laser beams is depicted in points with an illustrative embodiment. The process illustrated in **Figure 23** **is** example of an implementation for operation **2200** in **Figure 22****.**

The process begins by emitting the laser beams at a selected optical breakdown point in the set of optical breakdown points (operation **2300**). The process selects a new optical breakdown point in the set of optical breakdown points as the selected optical breakdown point in response to a set of optical breakdowns occurring at the selected optical breakdown point (operation **2302**).

The process repeats emitting the set of laser beams and selecting a new optical breakdown point while generating the radio frequency noise signals encoding the data (operation **2304**) the process terminates thereafter. In operation **2304,** the process repeats operations **2300** and operation **2302** any number of times while transmitting the radio frequency noise signals. Operation at **2304** enables transmitting the radio frequency signals from different physical locations through the selection of different optical breakdown points. As result, identifying the origination of the radio frequency signals can be made more difficult.

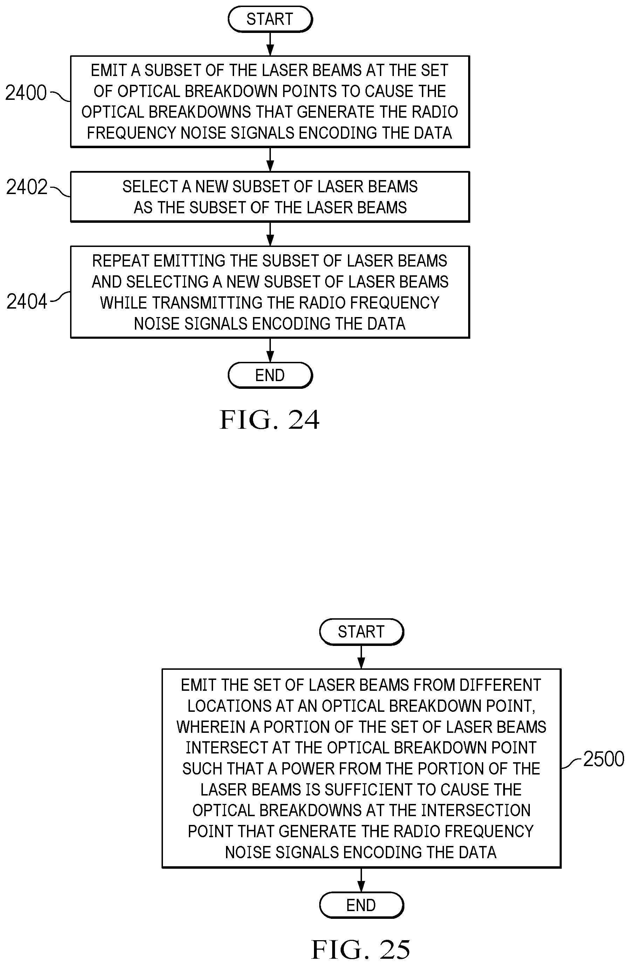

With reference next to **Figure 24****,** an illustration of a flowchart for controlling the emission of laser beams is depicted in points with an illustrative embodiment. The process illustrated in **Figure 24** is another example of an implementation for operation **2002** in **Figure 20****.**

The process begins by emitting a subset of the laser beams at the set of optical breakdown points to cause the optical breakdowns that generate the radio frequency noise signals encoding the data (operation **2400**). The process selects a new subset of laser beams as the subset of the laser beams (operation **2402**).

The process repeats emitting the subset of laser beams and selecting a new subset of laser beams while transmitting the radio frequency noise signals encoding the data (operation **2404**). The process terminates thereafter. By using different subsets of the laser beams, identifying a physical location from which the laser beams originate can be made more difficult when the laser beams are emitted from different physical locations.

In **Figure 25****,** an illustration of a flowchart for controlling the emission of laser beams is depicted in points with an illustrative embodiment. The process illustrated in **Figure 25** is an example of an implementation for operation **2002** in **Figure 20****.**

The process emits the set of laser beams from different physical locations at an optical breakdown point, wherein a portion of the set of laser beams intersect at the optical breakdown point such that a power from the portion of the laser beams is sufficient to cause the optical breakdowns at the intersection point that generate the radio frequency noise signals encoding the data (operation **2500**). The process terminates thereafter.

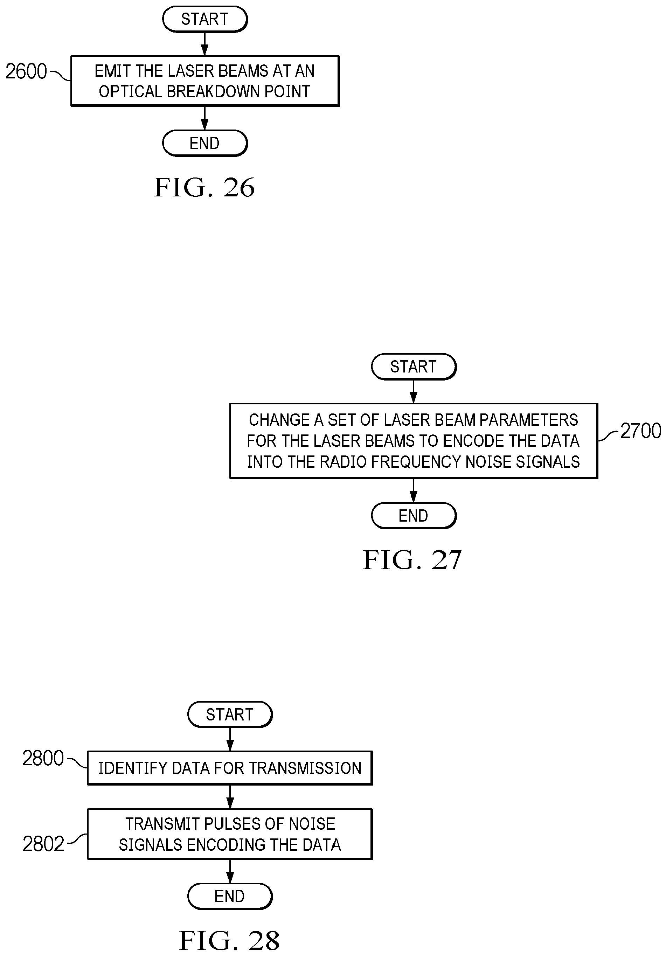

With reference to **Figure 26****,** an illustration of a flowchart for controlling the emission of laser beams is depicted in points with an illustrative embodiment. The process illustrated in **Figure 26** is an example of an implementation for operation **2002** in **Figure 20****.**

The process emits the laser beams at an optical breakdown point (operation **2600**). The process terminates thereafter. In operation **2600,** the optical breakdowns occur in response to all of the laser beams intersecting at the optical breakdown point.

With reference now to **Figure 27****,** an illustration a flowchart for controlling laser beams is depicted in accordance with an illustrative embodiment. The process illustrated in this figure is an example of an additional operation that can be performed with the operations in **Figure 20****.**

The process changes a set of laser beam parameters for the laser beams to encode the data into the radio frequency noise signals (operation **2700**). The process terminates thereafter. In operation of **2700,** changing the set of laser beam parameters changes a set of radio frequency characteristics for the radio frequency noise signals. The set of radio frequency characteristics is selected from at least one of a timing, an optical breakdown point, an amplitude of the radio frequency noise signals, or other characteristics of the radio frequency noise signals.

In this illustrative example, **Figures 28-35** are flowcharts illustrating operations that can be performed to encode data in noise signals. Turning first to **Figure 28****,** an illustration of a flowchart for communicating data is depicted in accordance with an illustrative embodiment. The process in **Figure 28** can be implemented in hardware, software, or both. When implemented in software, the process can take the form of program instructions that are run by one of more processor units located in one or more hardware devices in one or more computer systems. For example, the process can be implemented in communications manager **912** in computer system **910** in **Figure 9****.**

The process begins by identifying data for transmission (operation **2800**). The process transmits pulses of noise signals encoding the data (operation **2802**). The process terminates thereafter. The pulses of noise signals can be selected from at least one of electromagnetic frequency signals, radio frequency signals, microwave frequency signals, audio frequency signals, ultrasonic frequency signals, ultra-low frequency signals, very low frequency signals, underwater frequency signals, or optical frequency signals.

In operation **2802,** the pulses of radio frequency noise signals can be transmitted in a number of different ways. For example, these pulses of noise signals can be radio frequency noise signals transmitted from a physical antenna. In another illustrative example, the pulses of noise signals can be transmitted using optical breakdowns generated by laser beams. The optical breakdowns can be controlled to generate pulses of noise signals in the form of radio frequency noise signals.

The noise signals can be generated using at least one of a laser generation system that emits lasers to cause optical breakdown that generates the noise signal or an electric noise generator. The noise in the noise signal can be selected from at least one of nondeterministic noise or pseudo random noise.

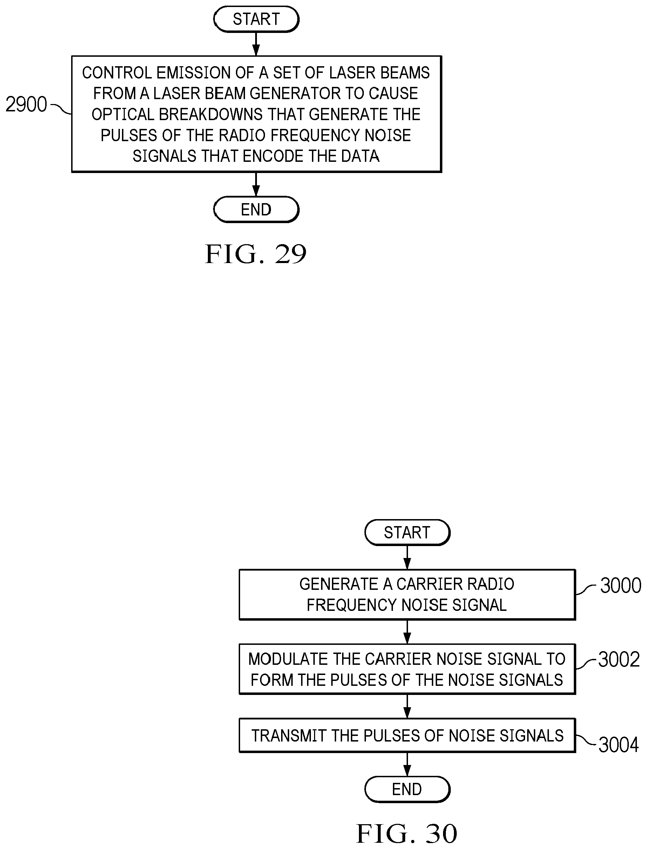

Turning to **Figure 29****,** an illustration of a flowchart for transmitting pulses of noise signals is depicted in accordance with an illustrative embodiment. This flowchart is an example of an implementation for operation **2802** in **Figure 28****.** In this example, the pulses of noise signals can be pulses of radio frequency noise signals.

The process controls emission of a set of laser beams from a laser beam generator to cause optical breakdowns that generate the pulses of the radio frequency noise signals that encode the data (operation **2900**). The process terminates thereafter.

With reference next to **Figure 30****,** another illustration of a flowchart for transmitting pulses of noise signals is depicted in accordance with an illustrative embodiment. This flowchart is an example of an implementation for operation **2802** in **Figure 28****.**

The process begins by generating a carrier radio frequency noise signal (operation **3000**). The process modulates or digitally "shift keys" the carrier noise signal to form the pulses of the noise signals (operation **3002**). In operation **3002,** the pulses encode the data.

The process transmits the pulses of noise signals (operation **3004**). The process terminates thereafter.

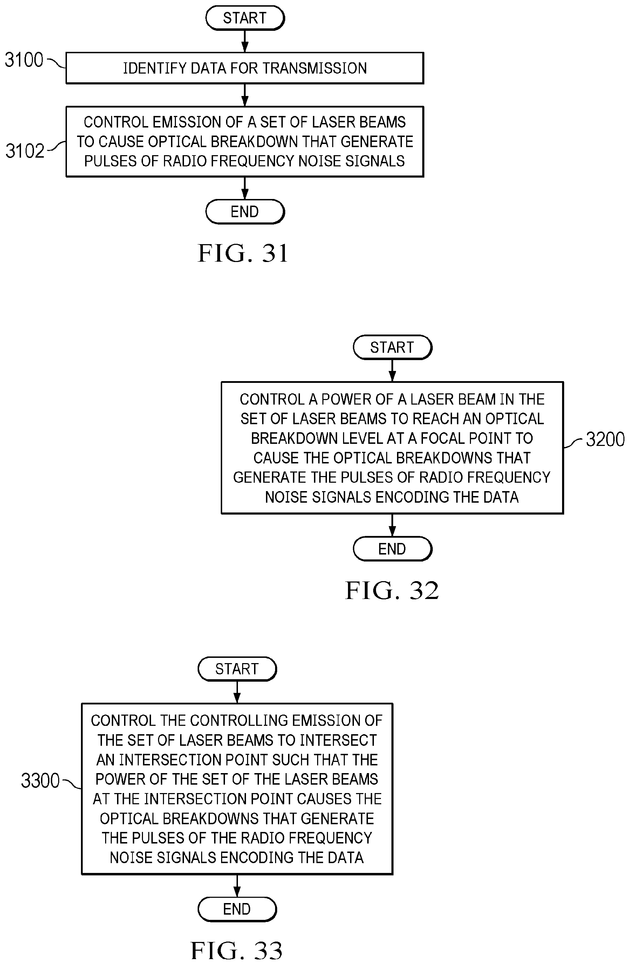

Turning now to **Figure 31****,** an illustration of a flowchart for communicating data is depicted in accordance with an illustrative embodiment. The process in **Figure 31** can be implemented in hardware, software, or both. When implemented in software, the process can take the form of program instructions that are run by one of more processor units located in one or more hardware devices in one or more computer systems. For example, the process can be implemented in communications manager **912** in computer system **910** in **Figure 9****.**

The process begins by identifying data for transmission (operation **3100**). The process controls emission of a set of laser beams to cause optical breakdown that generate pulses of radio frequency noise signals (operation **3102**)**.** The process terminates thereafter. In operation **3100,** the data can be encoded in the pulses of the radio frequency noise signals.

With reference to **Figure 32****,** an illustration of a flowchart of a process for controlling the emission of a set of laser beams is depicted in accordance with an illustrative embodiment. The process in this flowchart is an example of an implementation for operation **3102** in **Figure 31****.**

The process controls a power of a laser beam in the set of laser beams to reach an optical breakdown level at a focal point to cause the optical breakdowns that generate the pulses of radio frequency noise signals encoding the data (operation **3200**). The process terminates thereafter.

Turning next to **Figure 33****,** an illustration of a flowchart of a process for controlling the emission of a set of laser beams is depicted in accordance with an illustrative embodiment. The process in this flowchart is an example of an implementation for operation **3102** in **Figure 31****.**

The process controls the controlling emission of the set of laser beams to intersect an intersection point such that the power of the set of the laser beams at the intersection point causes the optical breakdowns that generate the pulses of the radio frequency noise signals encoding the data (operation **3300**). The process terminates thereafter.

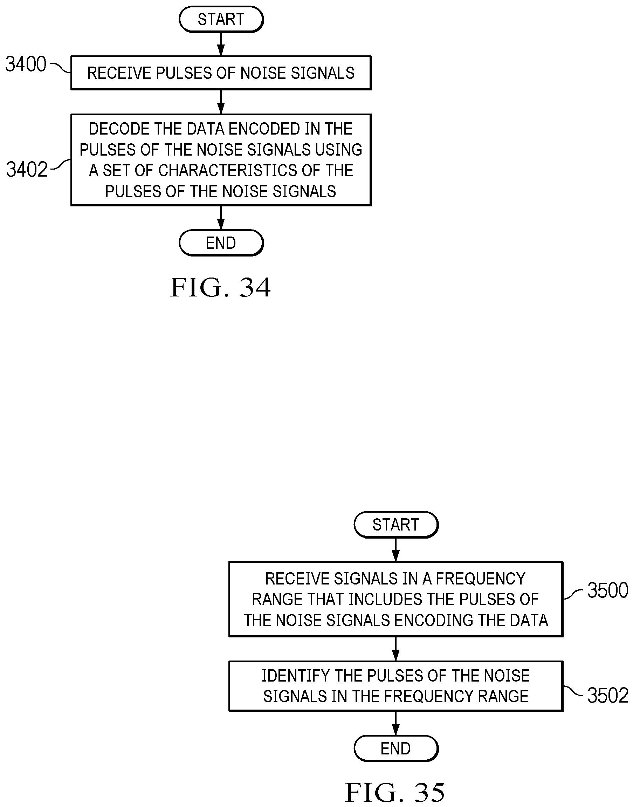

In **Figure 34****,** an illustration of a flowchart for communicating data is depicted in accordance with an illustrative embodiment. The process in **Figure 34** can be implemented in hardware, software, or both. When implemented in software, the process can take the form of program instructions that are run by one of more processor units located in one or more hardware devices in one or more computer systems. For example, the process can be implemented in communications manager **912** in computer system **910** in **Figure 9****.**

The process begins by receiving pulses of noise signals (operation **3400**). In operation **3400,** data is encoded in the pulses of noise signals.

The process decodes the data encoded in the pulses of the noise signals using a set of characteristics of the pulses of the noise signals (operation **3402**). The process terminates thereafter. In operation **3402,** the set of characteristics comprises at least one of a timing of the pulses of noise, an amplitude of the pulses of noise, a duration of the pulses of noise, or some other characteristic.

With reference now to **Figure 35****,** an illustration of a flowchart for decoding data is depicted in accordance with an illustrative embodiment. The process depicted in this flowchart is an example of an implementation for operation **3402** in **Figure 34****.**

The process begins by receiving signals in a frequency range that includes the pulses of the noise signals encoding the data (operation **3500**). In operation **3500,** the signals in the frequency range can be received using at least one of a bandpass filter, a notch filter, a band reject filter, a low-pass filter, or a high-pass filter.

The process identifies the pulses of the noise signals in the frequency range (operation **3502**). The process terminates thereafter. In operation **3502,** the pulses of the noise signals in the frequency range can be identified using an envelope detector.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

Thus, the illustrative examples provide a method, apparatus, and system for transmitting radio frequency signals using a transmission system in which a physical antenna is absent. Optical breakdowns are generated by laser beams in which the optical breakdowns create plasma. The plasma results in radio frequency noise signals. The optical breakdowns can be controlled to encode data in the radio frequency noise signals. The physical locations of these optical breakdowns are radio frequency source emitters in the depicted examples.

Further, these radio frequency source emitters can be moved to different physical locations by repositioning the laser beams such that the laser beams point at different optical breakdown points. Attacks at these physical locations are in essence attacks at the optical breakdown points where the plasma is generated.

As a result, kinetic attacks against these physical locations are useless because no physical infrastructure is present at the physical locations. Further, the laser modulation sources are remote from the physical locations of these radio frequency source emitters. These optical breakdowns can occur at a physical location that is remote from the laser source.

Further, the illustrative examples can encode data using noise signals. The use of noise signals is in contrast to the use of sinusoidal signals as a carrier signal to encode data. With the encoding of data in pulses of noise signals, issues with detection and interference in transmitting data encoded using sinusoidal carriers can be reduced.

The following figures provide examples of some types of noise modulation that can be performed in accordance with one or more illustrative examples. Some examples of noise modulation that can be performed include digital amplitude noise shift keying, digital frequency noise shift keying, digital simultaneous multi-frequency center point noise-band shift keying, digital multi-frequency-amplitude/band shift keying, digital doppler noise shift keying, and digital phase-differential noise shift keying.

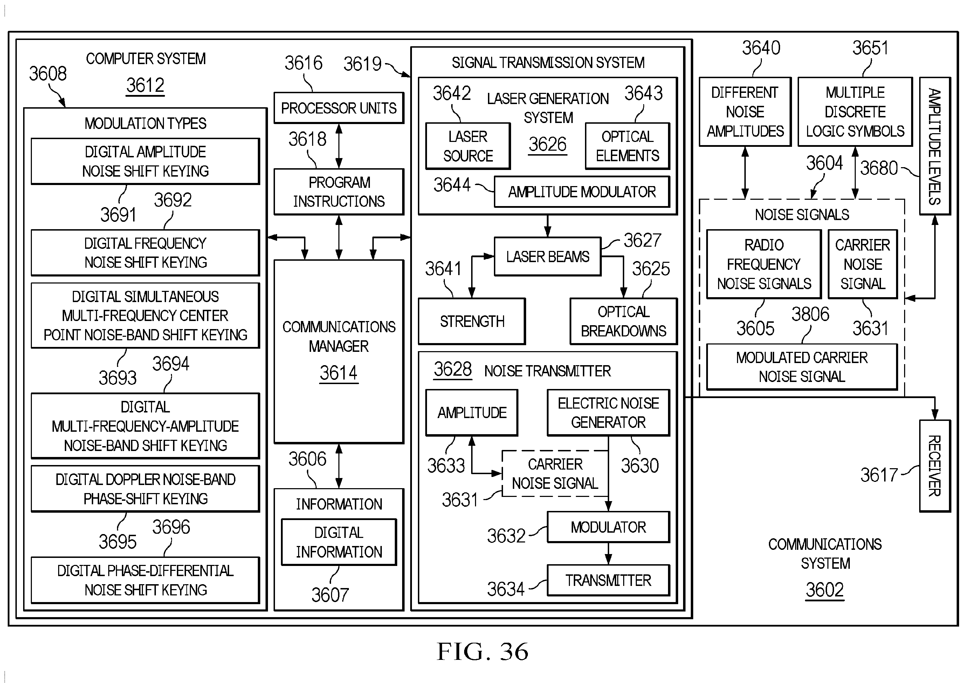

With reference next to **Figure 36****,** an illustration of a block diagram of a communication system is depicted in accordance with an illustrative embodiment. In this illustrative example, communications system **3602** operates to modulate noise signals **3604** to correspond to information **3606.** Noise signals **3604** are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including at least one of visible or non-visible light.

The modulation performed can be selected from a set of modulation types **3608.** As depicted, communications system **3602** comprises computer system **3612,** communications manager **3614,** and signal transmission system **3619.**

In the illustrative example, communications manager **3614** can be implemented in software, hardware, firmware, or a combination thereof. When software is used, the operations performed by communications manager **3614** can be implemented in program instructions configured to run on hardware, such as a processor unit. When firmware is used, the operations performed by communications manager **3614** can be implemented in program instructions and data and stored in persistent memory to run on a processor unit.

When hardware is employed, the hardware may include circuits that operate to perform the operations in communications manager **3614.** The circuits used to implement communications manager **3614** can take other forms in addition to or in place of a processor unit.

Computer system **3612** is a physical hardware system and includes one or more data processing systems. When more than one data processing system is present in computer system **3612,** those data processing systems are in communication with each other using a communications medium. The communications medium can be a network. The data processing systems can be selected from at least one of a computer, a server computer, a tablet computer, or some other suitable data processing system.

As depicted, computer system **3612** includes a number of processor units **3616** that are capable of executing program instructions **3618** implementing processes in the illustrative examples. In other words, program instructions **3618** are computer-readable program instructions.

As used herein, a processor unit in the number of processor units **3616** is a hardware device and is comprised of hardware circuits such as those on an integrated circuit that respond to and process instructions and program code that operate a computer. When the number of processor units **3616** executes program instructions **3618** for a process, the number of processor units **3616** can be one or more processor units that are in the same computer or in different computers. In other words, the process can be distributed between processor units **3616** on the same or different computers in computer system **3612.**

Further, the number of processor units **3616** can be of the same type or different type of processor units. For example, the number of processor units **3616** can be selected from at least one of a single core processor, a dual-core processor, a multi-processor core, a general-purpose central processing unit (CPU), a graphics processing unit (GPU), a digital signal processor (DSP), or some other type of processor unit.

In this illustrative example, modulation types **3608,** for example, include digital amplitude noise shift keying **3691,** digital frequency noise shift keying **3692,** digital simultaneous multi-frequency center point noise-band shift keying **3693,** digital multi-frequency-amplitude noise-band shift keying **3694,** digital doppler noise-band phase-shift keying **3695,** and digital phase-differential noise shift keying **3696.**

In this example, noise signals **3604** can be transmitted to receiver **3617** from signal transmission system **3619.** In this illustrative example, noise signals **3604** are received by receiver **3617.** Receiver **3617** is also depicted as part of communications system **3602.** In yet other illustrative examples, receiver **3617** may be a separate component from communications system **3602.**

Receiver **3617** is a hardware system and can include processes implemented in hardware or software that recover information **3606** from noise signals **3604.**

In this illustrative example, signal transmission system **3619** can take a number of different forms. For example, signal transmission system **3619** can be implemented using at least one of laser generation system **3626** or noise transmitter **3628.** Laser generation system **3626** can be implemented using laser generation systems as depicted in **Figures 2-7****.** With laser generation system **3626,** noise signals 3604 take the form of radio frequency noise signals **3605.**

As depicted, noise transmitter **3628** can include electric noise generator **3630,** modulator **3632,** and transmitter **3634.** In one illustrative example, noise transmitter **3628** can be implemented using a noise transmitter such as radio frequency transmitter **1002** as depicted in **Figure 10** and **Figure 11****.** In other illustrative examples, other types of noise transmitters can be used to transmit other types of noise signals **3604.**

In the illustrative examples, the noise generator can be implemented to generate electrical noise and other forms other than radio frequency noise signals. As result, noise signals **3604** can take different forms and can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including at least one of visible or non-visible light.

When using digital amplitude noise shift keying **3691,** communications manager **3614** identifies information **3606** in the form of digital information **3607** for transmission. Communications manager **3614** transmits noise signals **3604** with different noise amplitudes **3640** thus modulating or "shift keying" the noise signals **3604** to correspond to digital information **3607.** In other words, different noise amplitudes **3640** of noise signals **3604** can have amplitude levels **3680** that represent multiple discrete logic symbols **3651** for digital information **3607.** For example, different noise amplitudes **3640** can comprise two discrete amplitude levels in which a first discrete amplitude level corresponds to a logic 0 and a second discrete amplitude level corresponds to a logic 1.

In another example, different noise amplitudes **3640** comprise four discrete amplitude levels in which a first discrete amplitude level represents a logic "00," a second discrete amplitude level represents a logic "01," a third discrete amplitude level represents a logic "10," and a fourth discrete amplitude level represents a logic "11." In yet another illustrative example, different noise amplitudes **3640** comprise multiple discrete amplitude levels in which the multiple discrete amplitude levels represent multiple discrete logic symbols **3651** which are not limited to just 2 logical bits per symbol.

In one illustrative example, noise signals **3604** take the form of radio frequency noise signals **3605.** With this example, laser generation system **3626** is configured to emit a set of one or more laser beams **3627.** As result, in transmitting noise signals **3604,** communications manager **3614** controls emission of the set of one or more laser beams **3627** from laser generation system **3626** to at least one of cause or control optical breakdowns **3625** that generate radio frequency noise signals **3605** with different noise amplitudes **3640** that thereby modulate radio frequency noise signals **3605** to correspond to digital information **3607.** In other words, digital information **3607** is at least one of encoded, transferred, transformed, or modulated into radio frequency noise signals **3605** based on different amplitudes for radio frequency noise signals **3605.**

In controlling the emission of the set of one or more laser beams **3627,** communications manager **3614** can control strength **3641** of the set of one or more laser beams **3627** emitted from laser generation system **3626** to at least one of cause or control optical breakdowns **3625** that generate radio frequency noise signals **3605** with different noise amplitudes **3640** that thereby modulate radio frequency noise signals **3605** to correspond to digital information **3607.**

Communications manager **3614** can control strength **3641** of the set of one or more laser beams **3627** in a number of different ways. For example, strength **3641** of the set of one or more laser beams **3627** can be performed by controlling strength **3641** of the set of one or more laser beams **3627** emitted from laser source **3642** in laser generation system **3626.** For example, current, voltage, or power control can be used with laser diodes in laser source **3642** to change strength **3641.** In another example, pump source can be adjusted for laser source **3642** to change strength **3641.**

In another illustrative example, communications manager **3614** can control strength **3641** of the set of one or more laser beams **3627** using a set of optical elements **3643** to cause optical breakdowns **3625** that generate radio frequency noise signals **3605** with different noise amplitudes **3640** that thereby modulate radio frequency noise signals **3605** to correspond to the digital information **3607.** In this example, optical elements **3643** can include various fixed or adjustable elements such as a mirror, a lens, a focal focusing lens, or other optical element that can be adjusted to change strength **3641.**

In yet another illustrative example, communications manager **3614** can control strength **3641** of the set of one or more laser beams **3627** using amplitude modulator **3644** in laser generation system **3626.** In this example, amplitude modulator **3644** can modulate the amplitude, power, or intensity of the set of one or more laser beams **3627** emitted by laser source **3642.**

In another illustrative example, communications manager **3614** can transmit digital information **3607** using noise transmitter **3628** in signal transmission system **3619.** With this example, electric noise generator **3630** is configured to generate a carrier noise signal **3631,** which can be modulated or digitally shift keyed **to form** modulated carrier noise signal **3806.**

With this example, in generating noise signals **3604,** communications manager **3614** generates carrier noise signal using electric noise generator **3630.** Communications manager **3614** modulates or digitally "shift keys" amplitude **3633** of carrier noise signal **3631** using modulator **3632** to vary carrier noise signal **3631** with different noise amplitudes **3640** that thereby modulates or digitally "shift keys" carrier noise signal **3631** to at least one of correspond or correlate, directly or indirectly, to digital information **3607.** Communications manager **3614** transmits this carrier noise signal **3631** with different noise amplitudes **3640** as noise signals **3604** using transmitter **3634.**

In this illustrative example, receiver **3617** is configured to receive noise signals **3604,** in which digital information **3607** is modulated in noise signals **3604** using different noise amplitudes **3640.** Receiver **3617** is configured to demodulate digital information **3607** modulated in noise signals **3604** based on different noise amplitudes **3640** in noise signals **3604.**

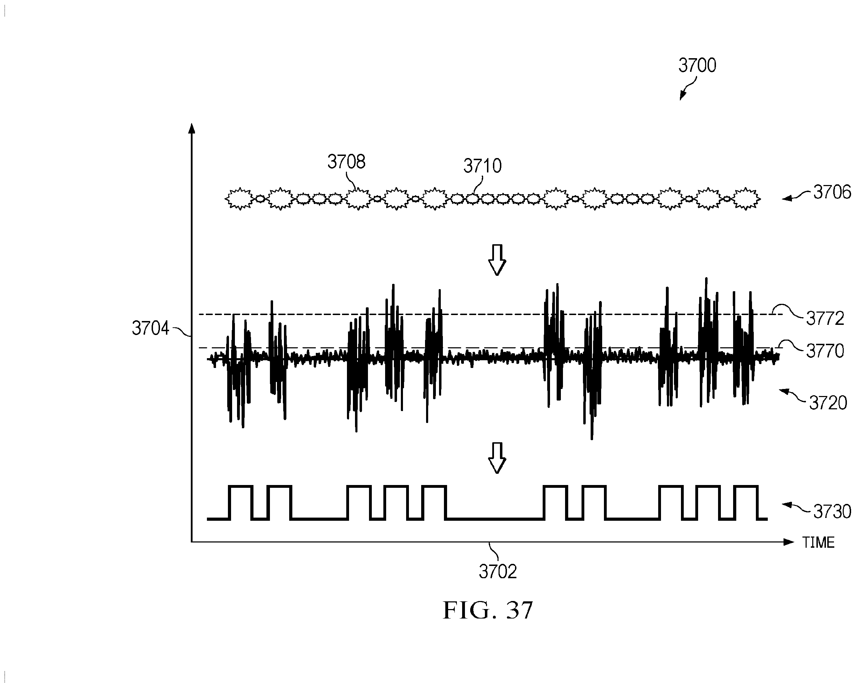

Turning next to **Figure 37****,** an illustration of information flow for transmitting digital information with digital amplitude noise shift keying using a laser generation system is depicted in accordance with an illustrative embodiment. In this example, information flow **3700** can be implemented using laser generation system **3626** in signal transmission system **3619** for communications system **3602** in **Figure 36****.** In this example, x-axis **3702** represents time for optical breakdowns, noise signals, and digital signals while y-axis **3704** represents a strength or amplitude for noise signals in information flow **3700.**

As depicted, optical breakdowns **3706** are generated with varying amplitude based on the digital information **3607** to be transmitted. As previously described, these optical breakdowns are plasma generated using laser generation system **3626.** Each optical breakdown in optical breakdowns **3706** is a plasma event generated by the set of one or more laser beams **3627** emitted by laser generation system **3626** in **Figure 36****.**

In this illustrative example, different optical breakdowns in optical breakdowns **3706** have different sizes, strengths, amplitudes, or powers. For example, optical breakdown **3708** is larger in size, strength, amplitude, or power than optical breakdown **3710.** The sizes, amplitudes, strengths, or powers of optical breakdowns **3706** is controlled through controlling amplitude, power, or strength **3641** of the set of one or more laser beams **3627.** As depicted, the optical breakdowns are generated such that individual laser pulses in the optical breakdowns **3706** have different noise amplitudes with respect to each other. The different noise amplitudes for a result of the modulation of noise signals to correspond to digital information.

The result of these optical breakdowns is radio frequency noise signals **3720** which are an example of radio frequency noise signals **3605** depicted in **Figure 36****.** As depicted, these radio frequency signals have different noise amplitudes with discrete amplitude levels that correspond to the digital information being transmitted. In this example, two discrete noise levels are present in radio frequency noise signals **3720.**

Digital signals **3730** can be recovered in response to receiver **3617** receiving radio frequency noise signals **3720** and radio frequency noise signals **3605** as depicted in **Figure 36****.** Thus, laser generation system **3626** is an example of one manner in which signal transmission system **3619** can transmit digital information **3607** in noise signals comprising radio frequency noise signals with varying amplitude.

In this example, the different noise amplitudes comprise two discrete amplitude levels in which first discrete amplitude level **3770** corresponds to a logic 0 and second discrete amplitude level **3772** corresponds to a logic 1. Alternatively, these could be inverted so that first discrete amplitude level **3770** corresponds to a logic 1 and second discrete amplitude level **3772** corresponds to a logic 0.

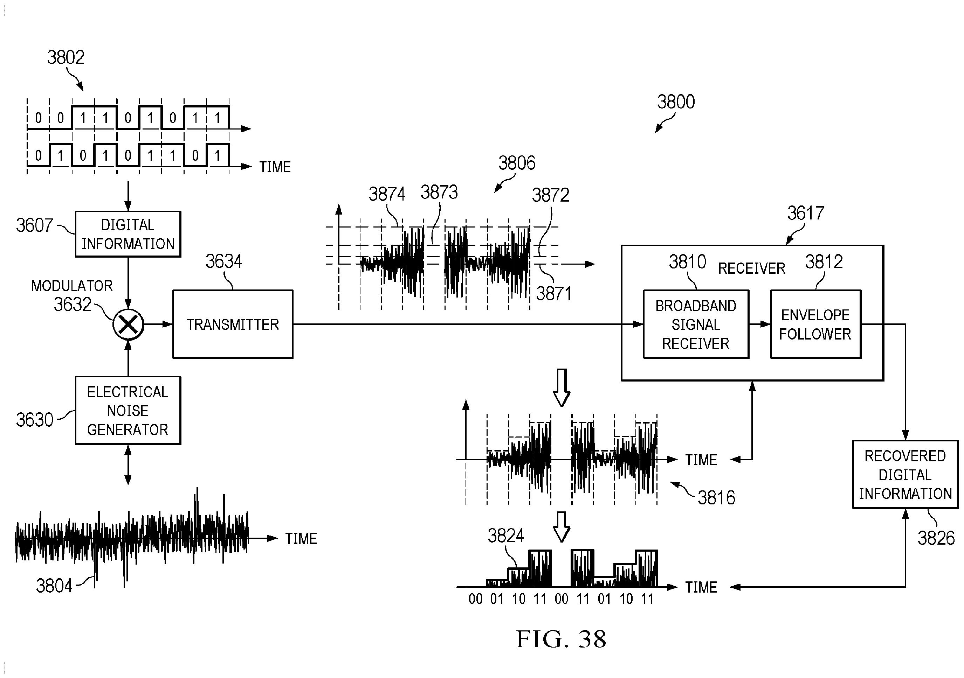

Turning next to **Figure 38****,** an illustration information flow for demonstrating transmitting digital information with digital amplitude noise shift keying using a noise transmitter is depicted in accordance with an illustrative embodiment. In this example, information flow **3800** can be implemented using noise transmitter **3628** in signal transmission system **3619** for communications system **3602** in **Figure 36****.**

As depicted in this example, digital input signal **3802** is an example of digital information **3607** that is to be transmitted using digital amplitude noise shift keying. In this example, electric noise generator **3630** generates carrier noise signal **3804.** Modulator **3632** is an amplitude modulator that modulates or digitally "shift keys" carrier noise signal **3804** with digital input signal **3802.** This modulation causes carrier noise signal **3804** to vary in amplitude **3633** of carrier noise signal **3804** in a manner that results in carrier noise signal **3804** with different noise amplitudes **3640** that is transmitted by transmitter **3634.** This carrier noise signal with different noise amplitudes **3640** is transmitted by transmitter **3634** as modulated carrier noise signal **3806.** Modulated carrier noise signal **3806** has different noise amplitudes. This modulated carrier noise signal has an amplitude that varies with different noise amplitudes in a manner that corresponds to or correlates with, directly or indirectly, with digital input signal **3802.**

As depicted in this example, modulated carrier noise signal **3806** has four discrete amplitude levels. In this example, first discrete amplitude level **3871** represents a logic "00," second discrete amplitude level **3872** represents a logic "01," third discrete amplitude level **3873** represents a logic "10," and fourth discrete amplitude level **3874** represents a logic "11."

As depicted, receiver **3617** includes broadband signal receiver **3810** and envelope follower **3812.** Broadband signal receiver **3810** is a hardware device that is configured to receive and process signals across a wide range of frequencies. In this example, broadband signal receiver **3810** receives modulated carrier noise signal **3806** with different noise amplitudes.

This reception of modulated carrier noise signal **3806** results in received signal **3816.** As depicted, envelope follower **3812** can detect amplitude variations in received signal **3816** to generate a signal having a shape that resembles, corresponds, or correlates to, directly or indirectly, those variations. In this example, the signal is recovered digital information signal **3824** for recovered digital information **3826.** In this example, envelope follower **3812** is implemented using envelope follower **1414** as depicted in **Figure 14** and **Figure 15B****.** As depicted in this example, recovered digital information signal **3824** for recovered digital information **3826** has the same or similar shape as digital input signal **3802** for digital information **3607.**

Illustration of this example is not meant to limit the manner in which other illustrative examples can be implemented. For example, in another illustrative example, modulated carrier noise signal **3806** can have some other number of discrete amplitude levels. For example, modulated carrier noise signal **3806** can have other numbers of discrete amplitude levels such as 5, 8, or some other number of discrete amplitude levels.

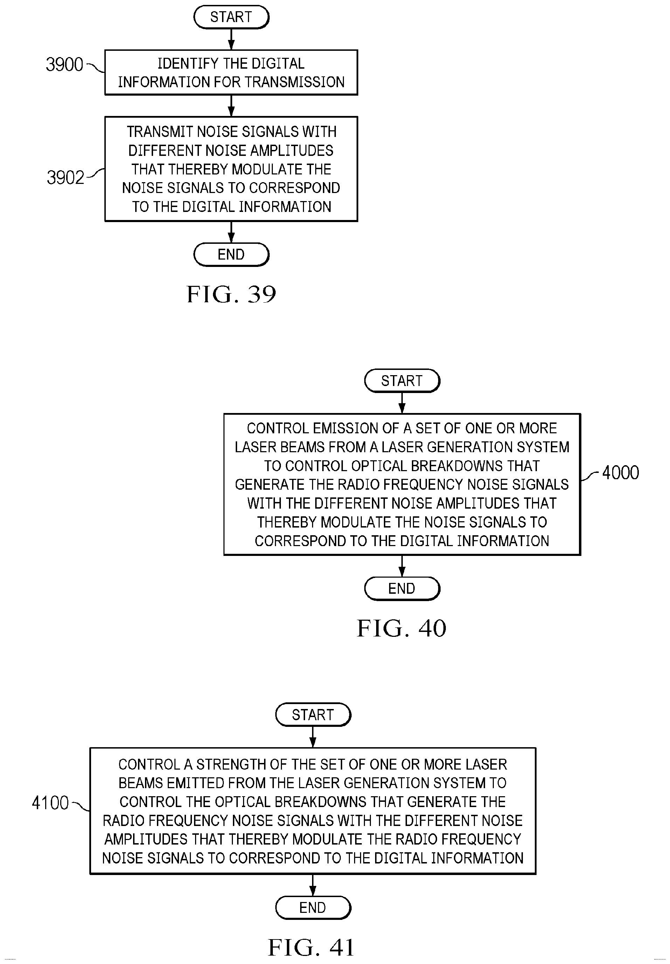

Turning now to **Figure 39****,** an illustration of a flowchart for communicating digital information is depicted in accordance with an illustrative embodiment. The process in **Figure 39** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** in **Figure 36****.**

The process begins by identifying the digital information for transmission (operation **3900**). The process transmits noise signals with different noise amplitudes that thereby modulate the noise signals to correspond to the digital information (operation **3902**). The process terminates thereafter.

In operation **3902,** the different noise amplitudes in the digital information are used to modulate the noise signals to correspond to or correlate to, directly or indirectly, the digital information.

Turning next to **Figure 40****,** an illustration of a flowchart of a process for transmitting radio frequency noise signals using a laser generation system is depicted in accordance with an illustrative embodiment. This flowchart is an example of an implementation for operation **3902** in **Figure 39****.** In this example, the noise signals take the form of radio frequency noise signals.

The process controls emission of a set of one or more laser beams from a laser generation system to control optical breakdowns that generate the radio frequency noise signals with the different noise amplitudes that thereby modulate the noise signals to correspond to the digital information (operation **4000**). The process terminates thereafter.

In other words, the discrete amplitudes of the digital information are used to control the emissions of the set of laser beams to at least one of cause or control optical breakdowns that generate at least one of the radio frequency noise signals or optical signals including at least one of visible or non-visible light.

The different amplitudes of the digital information are used to control these emissions which thereby modulate or digitally "shift keys" the radio frequency noise signals to correspond to or correlate with, directly or indirectly, the digital information. In other words, the control of the emissions of the set of one or more laser beams does not necessarily correlate exactly to the amplitude for digital information. In alternative examples, the control of the emissions of the set of the one or more laser beams may be modified in such a way that the final output noise modulated signal most closely corresponds to original digital input signal such that it may be received with minimum distortion by a receiver **3617** in **Figure 36****.**

Next in **Figure 41****,** an illustration of a flowchart of a process for controlling emission of a set of one or more laser beams is depicted in accordance with an illustrative embodiment. The process in this figure is an example of an implementation for operation **4000** in **Figure 40****.**

The process controls a strength of the set of one or more laser beams emitted from the laser generation system to control the optical breakdowns that generate the radio frequency noise signals with the different noise amplitudes that thereby modulate the radio frequency noise signals to correspond to the digital information (operation **4100**). The process terminates thereafter.

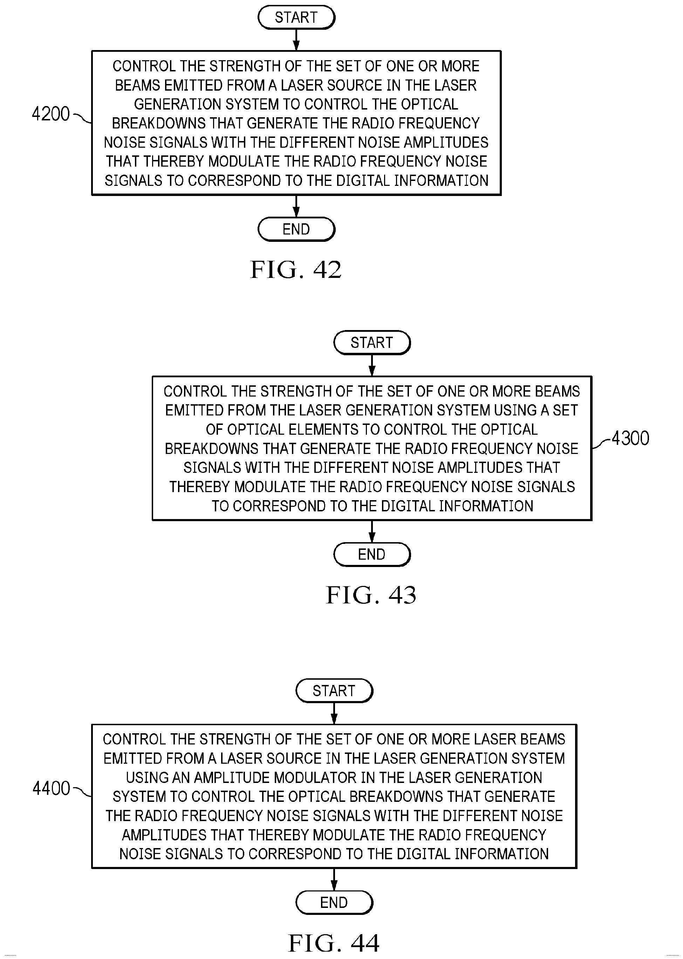

With reference now to **Figure 42****,** an illustration of a flowchart of a process for controlling emission of a set of one or more laser beams is depicted in accordance with an illustrative embodiment. The process in this figure is an example of an implementation for operation **4100** in **Figure 41****.**

The process controls the strength of the set of one or more beams emitted from a laser source in the laser generation system to control the optical breakdowns that generate the radio frequency noise signals with the different noise amplitudes that thereby modulate the radio frequency noise signals to correspond to the digital information (operation **4200**). The process terminates thereafter.

Turning next to **Figure 43****,** an illustration of a flowchart of a process for controlling emission of a set of one or more laser beams is depicted in accordance with an illustrative embodiment. The process in this figure is an example of an implementation for operation **4100** in **Figure 41****.**

The process controls the strength of the set of one or more beams emitted from the laser generation system using a set of optical elements to control the optical breakdowns that generate the radio frequency noise signals with the different noise amplitudes that thereby modulate the radio frequency noise signals to correspond to the digital information (operation **4300**). The process terminates thereafter.

With reference now to **Figure 44****,** an illustration of a flowchart of a process for controlling emission of a set of one or more laser beams is depicted in accordance with an illustrative embodiment. The process in this figure is an example of an implementation for operation **4100** in **Figure 41****.**

The process controls the strength of the set of one or more laser beams emitted from a laser source in the laser generation system using an amplitude modulator in the laser generation system to control the optical breakdowns that generate the radio frequency noise signals with the different noise amplitudes that thereby modulate the radio frequency noise signals to correspond to the digital information (operation **4400**)**.** The process terminates thereafter.

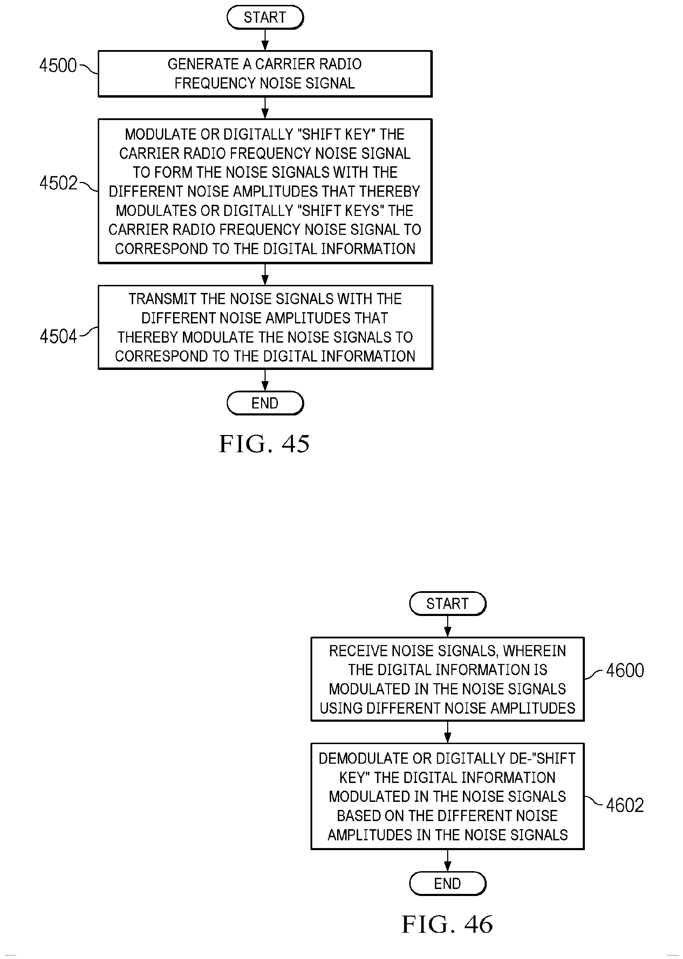

With reference now to **Figure 45****,** an illustration of a flowchart of a process for transmitting noise signals is depicted in accordance with an illustrative embodiment. The process in this figure is an example of an implementation for operation **3902** in **Figure 39****.**

The process generates a carrier radio frequency noise signal (operation **4500**). The process modulates or digitally "shift keys" the carrier radio frequency noise signal to form the noise signals with the different noise amplitudes that thereby modulates or digitally "shift keys" the carrier radio frequency noise signal to correspond to the digital information (operation **4502**).

The process transmits the noise signals with the different noise amplitudes that thereby modulate the noise signals to correspond to the digital information (operation **4504**). The process terminates thereafter.

Turning next to **Figure 46****,** an illustration of a flowchart of process for communicating digital information is depicted in accordance with an illustrative embodiment. The process in **Figure 46** can be implemented in hardware, software, or both. When implemented in software, the process can take the form of program instructions that are run by one or more processor units located in one or more hardware devices in one or more computer systems. For example, the process can be implemented in receiver **3617** in **Figure 36****.**

The process begins by receiving noise signals, wherein the digital information is modulated in the noise signals using different noise amplitudes (operation **4600**). The process demodulates or digitally de-"shift keys" the digital information modulated in the noise signals based on the different noise amplitudes in the noise signals (operation **4602**). The process terminates thereafter.

Some features of the illustrative examples for modulating digital information **3607** using digital amplitude noise shift keying **3691** in communications system **3602** are described in the following clauses. These clauses are examples of features and are not intended to limit other illustrative examples.
1. A communications system comprising:
   a computer system; and
   a communications manager in the computer system, wherein the communications manager is configured to:
      identify digital information for transmission; and
      transmit noise signals with different noise amplitudes that thereby modulate the noise signals to correspond to the digital information.
2. The communications system of claim 1, wherein the different noise amplitudes comprise amplitude levels that represent multiple discrete logic symbols.
3. The communications system of clause 1, wherein the different noise amplitudes comprise two discrete amplitude levels in which a first discrete amplitude level corresponds to a logic 0 and a second discrete amplitude level corresponds to a logic 1.
4. The communications system of clause 1, wherein the different noise amplitudes comprise four discrete amplitude levels in which a first discrete amplitude level represents a logic "00," a second discrete amplitude level represents a logic "01," a third discrete amplitude level represents a logic "10," and a fourth discrete amplitude level represents a logic "11."
5. The communications system of clause 1, wherein the different noise amplitudes comprise multiple discrete amplitude levels in which the multiple discrete amplitude levels represent multiple discrete logic symbols.
6. The communications system of clause 1, wherein the noise signals are radio frequency noise signals, and further comprising:
   a laser generation system configured to emit a set of one or more laser beams, wherein in transmitting the noise signals, the communications manager is configured to:
   control an emission of the set of one or more laser beams from the laser generation system to control optical breakdowns that generate the radio frequency noise signals with the different noise amplitudes that thereby modulate the radio frequency noise signals to correspond to the digital information.
7. The communications system of clause 6, wherein in controlling the emission of the set of one or more laser beams, the communications manager is configured to:
   control a strength of the set of one or more laser beams emitted from the laser generation system to control the optical breakdowns that generate the radio frequency noise signals with the different noise amplitudes that thereby modulate the radio frequency noise signals to correspond to the digital information.
8. The communications system of clause 7, wherein in controlling the strength of the set of one or more laser beams, the communication manager is configured to:
   control the strength of the set of one or more laser beams emitted from a laser source in the laser generation system to control the optical breakdowns that generate the radio frequency noise signals with the different noise amplitudes that thereby modulate the radio frequency noise signals to correspond to the digital information.
9. The communications system of clause 7, wherein in controlling the strength of the set of one or more laser beams, the communications manager is configured to:
   control the strength of the set of one or more laser beams emitted from the laser generation system using a set of optical elements to control the optical breakdowns that generate the radio frequency noise signals with the different noise amplitudes that thereby modulate the radio frequency noise signals to correspond to the digital information.
10. The communications system of clause 7, wherein in controlling the strength of the set of one or more laser beams, the communication manager is configured to:
   control the strength of the set of one or more laser beams emitted from the laser generation system using an amplitude modulator in the laser generation system to control the optical breakdowns that generate the radio frequency noise signals with the different noise amplitudes that thereby modulate the noise signals to correspond to the digital information.
11. The communications system of clause 1, further comprising:
   an electric noise generator configured to generate a carrier noise signal;
   a modulator;
   a transmitter, wherein in generating the noise signals, the communications manager is configured to:
      generate the carrier noise signal using the electric noise generator; and
      modulate an amplitude of the carrier noise signal using the modulator to vary the carrier noise signal with the different noise amplitudes that thereby modulates the carrier noise signal to correspond to the digital information.
12. The communications system of clause 1, wherein the noise signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including at least one of visible or non-visible light.
13. A communications system comprising:
   a receiver configured to:
   receive noise signals, in which digital information is modulated in the noise signals using different noise amplitudes; and
   demodulate the digital information previously modulated in the noise signals based on different noise amplitudes in the noise signals.
14. A method for communicating digital information, the method comprising:
   identifying the digital information for transmission; and
   transmitting noise signals with different noise amplitudes that thereby modulate the noise signals to correspond to the digital information.
15. The method of clause 14, wherein different noise amplitudes comprise discrete amplitude levels that represent multiple discrete logic symbols.
16. The method of clause 14, wherein different noise amplitudes comprise two discrete amplitude levels in which a first discrete amplitude level corresponds to a logic 0 and a second discrete amplitude level corresponds to a logic 1.
17. The method of clause 14, wherein different amplitudes comprise four discrete amplitude levels in which a first discrete amplitude level represents a logic "00," a second discrete amplitude level represents a logic "01," a third discrete amplitude level represents a logic "10," and a fourth discrete amplitude level represents a logic "11."
18. The method of clause 14, wherein the different noise amplitudes comprise multiple discrete amplitude levels in which the multiple discrete amplitude levels represent multiple discrete logic symbols.
19. The method of clause 14, wherein the noise signals are radio frequency noise signals, and wherein said transmitting the noise signals comprises:
   controlling emission of a set of one or more laser beams from a laser generation system to control optical breakdowns that generate the radio frequency noise signals with the different noise amplitudes that thereby modulate the noise signals to correspond to the digital information.
20. The method of clause 19, wherein said controlling the emission of the set of one or more laser beams comprises:
   controlling a strength of the set of one or more laser beams emitted from the laser generation system to control the optical breakdowns that generate the radio frequency noise signals with the different noise amplitudes that thereby modulate the radio frequency noise signals to correspond to the digital information.
21. The method of clause 20, wherein said controlling the strength of the set of one or more beams comprises:
   controlling the strength of the set of one or more beams emitted from a laser source in the laser generation system to control the optical breakdowns that generate the radio frequency noise signals with the different noise amplitudes that thereby modulate the radio frequency noise signals to correspond to the digital information.
22. The method of clause 20, wherein said controlling the strength of the set of one or more beams comprises:
   controlling the strength of the set of one or more beams emitted from the laser generation system using a set of optical elements to control the optical breakdowns that generate the radio frequency noise signals with the different noise amplitudes that thereby modulate the radio frequency noise signals to correspond to the digital information.
23. The method of clause 20, wherein said controlling the strength of the set of one or more beams comprises:
   controlling the strength of the set of one or more laser beams emitted from a laser source in the laser generation system using an amplitude modulator in the laser generation system to control the optical breakdowns that generate the radio frequency noise signals with the different noise amplitudes that thereby modulate the radio frequency noise signals to correspond to the digital information.
24. The method of clause 14, wherein said transmitting the noise signals comprises:
   generating a carrier radio frequency noise signal;
   modulating the carrier radio frequency noise signal to form the noise signals with the different noise amplitudes that thereby modulates the carrier radio frequency noise signal to correspond to the digital information; and
   transmitting the noise signals with the different noise amplitudes that thereby modulate the noise signals to correspond to the digital information.
25. The method of clause 14, wherein the noise signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including at least one of visible or non-visible light.
26. A method for communicating digital information, the method comprising:
   receiving noise signals, wherein the digital information is modulated in the noise signals using different noise amplitudes; and
   demodulating the digital information modulated in the noise signals based on the different noise amplitudes in the noise signals.
27. The method of clause 26, wherein a receiver receives the noise signals and demodulates the noise signals.

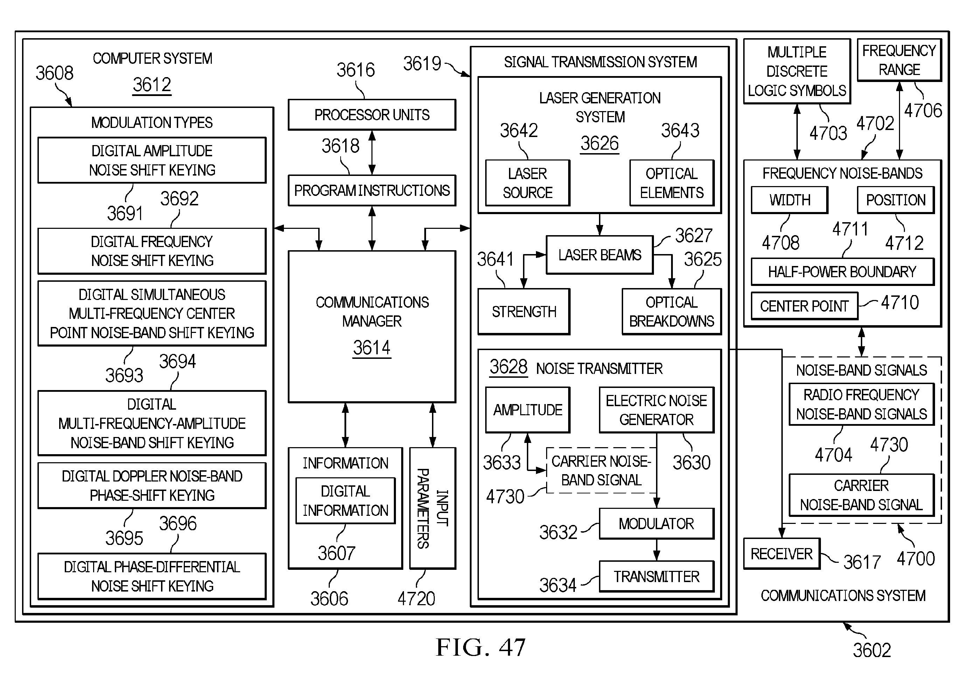

Turning now to Figure 47, an illustration of a block diagram of a communication system for transmitting noise signals using digital frequency noise modulation is depicted in accordance with an illustrative embodiment. In this illustrative example, communications system 3602 operates to modulate or "shift key" noise-band signals 4700 to correspond to information 3606 using digital frequency noise shift keying 3692. Noise-band signals 4700 can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, optical frequency noise signals including at least one of visible or non-visible light, or other types of noise signals.

In this example, communications manager **3614** identifies digital information **3607** for transmission. Additionally, communications manager **3614** transmits noise-band signals **4700** with different discrete changes to frequency range **4706** of frequency noise-bands **4702** of noise-band signals **4700** that thereby modulate noise-band signals **4700** to correspond to digital information **3607** identified for transmission. Different discrete changes to frequency range **4706** of frequency noise-bands **4702** means that the changes to frequency range **4706** of frequency noise-bands **4702** have a shift that is considered to be instantaneous without gradual or continuous variation. For example, a change in width **4708** of a frequency noise-band or position **4712** of frequency noise-bands **4702** occurs from one noise-band to another noise-band in frequency noise-bands **4702** with a sufficiently clear shift in these parameters such that electrical devices such as a receiver receiving noise-band signals with frequency noise-band having a discrete change can determine the point where the change occurs for use in identifying digital information in these signals.

In these examples, a discrete change means a change where a distinct and detectable variation or difference in the noise-band signal which corresponds to discrete digital information is present. This type of change is in contrast to a gradual change which typically corresponds to analog information.

For example, a discrete change in the frequency of a noise-band means that a receiver can determine or detect that a distinct variation or difference in the noise-band signal frequency has occurred which corresponds to discrete digital information. In another example, a discrete change in the amplitude of a noise-band means that a receiver can determine or detect that a distinct variation or difference in the noise-band signal amplitude has occurred which corresponds to discrete digital information.

In yet another example, a discrete change in the center-point of a noise-band means that a receiver can determine or detect that a distinct variation or difference in the center point of the noise-band signal has occurred which corresponds to discrete digital information. In another example, a discrete change in the bandwidth or width of a noise-band means that a receiver can determine or detect that a distinct variation or difference in the bandwidth or width of the noise-band signal has occurred which corresponds to discrete digital information. In another example, a discrete change in the slope, boundary, or half-power point of a noise-band means that a receiver can determine or detect that a distinct variation or difference in the slope, boundary, or half-power point of the noise-band signal has occurred which corresponds to discrete digital information.

In other words, different discrete changes to frequency range **4706** of frequency noise-bands **4702** means that frequency range **4706** is changed for one or more of frequency noise-bands **4702.** These changes are made to have frequency noise-bands **4702** correspond to digital information **3607.** These different discrete changes made to frequency noise-bands **4702** of noise-band signals **4700** cause the different discrete changes to frequency range **4706** of frequency noise-bands **4702** correspond to or correlate to, either directly or indirectly, the same or similar pattern as digital information **3607.**

In other words, the control of the different discrete changes to frequency range **4706** of frequency noise-bands **4702** do not necessarily correlate exactly to the varying digital information **3607.** In alternative examples, the control of the different discrete changes to frequency range **4706** of frequency noise-bands **4702** may be modified in such a way that the final output noise-modulated signal most closely corresponds to digital information **3607** such that it may be received with minimum distortion by a receiver **3617** in **Figure 47****.**

In this example, frequency noise-bands **4702** are a grouping, cluster, subset, or segmentation of noise-band signals **4700.** For example, frequency noise-bands **4702** can be at least one of "clusters of noise," "noise spectra," noise spectrum," "a frequency band of noise," "a pass-band of noise," "a band-pass of noise," "a frequency range of noise," or a "noise frequency range" which can have a lower half-power boundary and an upper half-power boundary. Frequency noise-bands **4702** for noise-band signals **4700** can be changed in a manner that corresponds to digital information **3607.** For example, noise-band signals **4700** can be modulated such that frequency noise-bands **4702** changes in at least one of width **4708** (bandwidth or frequency bandwidth), position **4712,** center point **4710,** or half-power boundary **4711.**

For example, the width **4708** of frequency noise-bands **4702** can be changed by using different discrete changes to frequency range **4706** of frequency noise-bands **4702.** In this example, a change in a frequency noise-band in frequency noise-bands **4702** means that the boundaries of frequencies encompassed by the frequency noise-bands can change such that width of that frequency noise-band changes in at least one of size or range.

In this example, different frequency noise-bands in frequency noise-bands **4702** can have different initial and final times for time duration, and lower and upper frequency bounds for frequency ranges. These can be modified or changed to designate digital information. In this manner, noise-band signals **4700** can be modulated to have different discrete changes of frequency noise-bands **4702** of noise-band signals **4700** in a manner that causes noise-band signals **4700** to correspond to or correlate to, either directly or indirectly, digital information **3607.**

In these examples, the different discrete changes of frequency noise-bands **4702** of noise-band signals **4700** represent multiple discrete logic symbols **4703.** For example, the different discrete changes can be at least one of position **4712** or width **4708** of the frequency noise-bands **4702.**

In one illustrative example, a first discrete change of frequency noise-bands **4702** of noise-band signals **4700** corresponds to a logic 0. A second discrete change of frequency noise-bands **4702** of noise-band signals **4700** corresponds to a logic 1.

In another illustrative example, the different discrete changes of the frequency noise-bands of the noise-band signals comprise four different discrete changes of frequency noise-bands **4702** of the noise-band signals **4700.** A first discrete change of the frequency noise-bands **4702** represents a logic "00," a second discrete change of the frequency noise-bands represents a logic "01," a third discrete change of the frequency noise-bands **4702** represents a logic "10," and a fourth discrete change of frequency noise-bands **4702** represents a logic "11." These discrete changes can be position **4712** or width **4708** of frequency noise-bands **4702** of the noise-band signals **4700.**

In one illustrative example, this transmission can be performed by laser generation system **3626.** With this example, communications manager **3614** controls an emission of a set of one or more laser beams **3627** from laser generation system **3626** to at least one of cause or control optical breakdowns **3625** that generate noise-band signals **4700** in the form of radio frequency noise-band signals **4704** with different discrete changes to frequency range **4706** of frequency noise-bands **4702** for radio frequency noise-band signals **4704** that thereby modulate the radio frequency noise-band signals **4704** to correspond to or correlate to, directly or indirectly, the digital information **3607.** In this example, at least one of width **4708,** position **4712,** half-power boundary **4711,** or center point **4710,** of frequency noise-bands **4702** can be varied to have different discrete changes to cause radio frequency noise-band signals **4704** to correspond to digital information **3607.** Position **4712** for each of frequency noise-bands **4702** can be identified using center point **4710** of each of frequency noise-bands **4702.** The change of a beginning frequency boundary or frequency range and an ending frequency boundary or frequency range in frequency noise-bands **4702** can result in different discrete changes for at least one of width **4708** or position **4712** of frequency noise-bands **4702.** In this example, the beginning of the frequency boundary or frequency range can be referred to as an initial or lower boundary of the frequency boundary or frequency range. The ending of the frequency boundary or range can be referred to as a final, higher, or upper boundary of the frequency boundary or frequency range. Thus, in this example, the different discrete changes are present between the ranges of frequencies of frequency noise-bands **4702** for noise-band signals **4700** that thereby modulate noise-band signals **4700** to correspond to digital information **3607.**

In one illustrative example, communications manager **3614** controls the emission of the set of one or more laser beams **3627** by controlling the emission of the set of one or more laser beams **3627** from laser generation system **3626** to at least one of cause or control optical breakdowns **3625** that generate radio frequency noise-band signals **4704** by varying a frequency location of center point **4710** of frequency noise-bands **4702** for radio frequency noise-band signals **4704.** In these examples, center point **4710** can be different for different ones of frequency noise-bands **4702.** The particular frequency location of center point **4710** for a frequency noise-band can correlate to a discrete logic symbol in multiple discrete logic symbols **4703** for that frequency noise-band. The frequency location of center point **4710** can be different for a particular frequency noise-band relative to other center points for other frequency noise-bands. These differences in the positions of the center points for the different frequency bands correlate to different discrete logic symbols in multiple discrete logic symbols **4703.** In this example, a variation of the frequency location of center point **4710** of frequency noise-bands **4702** for radio frequency noise-band signals **4704** thereby modulates or digitally "shift keys" radio frequency noise-band signals **4704** to correspond to digital information **3607.**

Thus, in this example, center point **4710** can be moved back and forth in frequency noise-bands **4702** to modulate radio frequency noise-band signals **4704** to correspond to digital information **3607.** In other words, the modulation of center point **4710** of frequency noise-bands **4702** for radio frequency noise-band signals **4704** is an example of one manner in which frequency noise-bands **4702** can be modulated to at least one of cause or control radio frequency noise-band signals **4704** to correspond to digital information **3607.**

In another illustrative example, communications manager **3614** can control the emission of the set of one or more laser beams **3627** from laser generation system **3626** to at least one of cause or control optical breakdowns **3625** that generate radio frequency noise-band signals **4704** by varying width **4708** of frequency noise-bands **4702** for radio frequency noise-band signals **4704.** In this example, a variation in width **4708** thereby modulates or digitally "shift keys" radio frequency noise-band signals **4704** to correspond to digital information **3607.** In other words, the width of radio frequency noise-band signals **4704** in frequency noise-bands **4702** can be increased and decreased to modulate radio frequency noise-band signals **4704** to correspond to digital information **3607.** In these examples, the change in width **4708** can occur by changing the boundaries start (initial and/or lower) and end (final and/or upper) frequencies in a frequency noise-band.

In another example, communications manager **3614** controls a set of one or more input parameters **4720** for the emission of a set of one or more of laser beams **3627** from the laser generation system **3626** to at least one of cause or control optical breakdowns **3625** that generate radio frequency noise-band signals **4704** by varying frequency noise-bands **4702** to result in the different discrete changes in frequency noise-bands **4702.** In this example, the different discrete changes to frequency range **4706** of frequency noise-bands **4702** of radio frequency noise-band signals **4704** thereby modulates or digitally "shift keys" radio frequency noise-band signals **4704** to correspond to or correlate with, directly or indirectly, digital information **3607.**

With this example, the set of one or more input parameters **4720** can take a number of different forms. For example, the set of one or more input parameters **4720** can for example be selected from one or more of, a mirror orientation, a deformable mirror position, a lens position, lens, a deformable lens position or some other element that can be positioned in a manner that changes an optical path length (OPL) for the set of one or more laser beams **3627.** In this example, the path length change can be both the optical path length and/or the physical path length. Another input parameter that can be changed in this example is the index of refraction (IoR). The optical path length is inversely proportional to the index of refraction.

These changes to input parameters **4720** can change frequency noise-bands **4702** of radio frequency noise-band signals **4704.** For example, changes can be made to at least one of width **4708** (bandwidth or frequency bandwidth) or position **4712** of frequency noise-bands **4702** for radio frequency noise-band signals **4704.** In other words, different noise-bands can have different changes in at least one of position **4712** or width **4708.**

In another example, communications manager **3614** can control noise transmitter **3628** in signal transmission system **3619** to transmit digital information **3607.** For example, in generating noise-band signals **4700,** communications manager **3614** can generate carrier noise-band signal **4730** using electric noise generator **3630.** Communications manager **3614** can modulate carrier noise-band signal **4730** using modulator **3632** to change frequency noise-bands **4702** of carrier noise-band signal **4730.**

In this example, different discrete changes can be made to frequency noise-bands **4702.** These different discrete changes to frequency range **4706** of frequency noise-bands **4702** for carrier noise-band signal **4730** thereby modulate carrier noise-band signal **4730** to correspond to digital information **3607.**

In this example, communications manager **3614** transmits carrier noise-band signal **4730** with different discrete changes to frequency range **4706** of frequency noise-bands **4702.** In this example, these changes cause carrier noise-band signal **4730** to correspond to or correlate with, directly or indirectly, digital information **3607.** This type of modulation of carrier noise-band signal **4730** can cause the different discrete changes that can be at least one of width **4708** or position **4712** of frequency noise-bands **4702** for carrier noise-band signal **4730.**

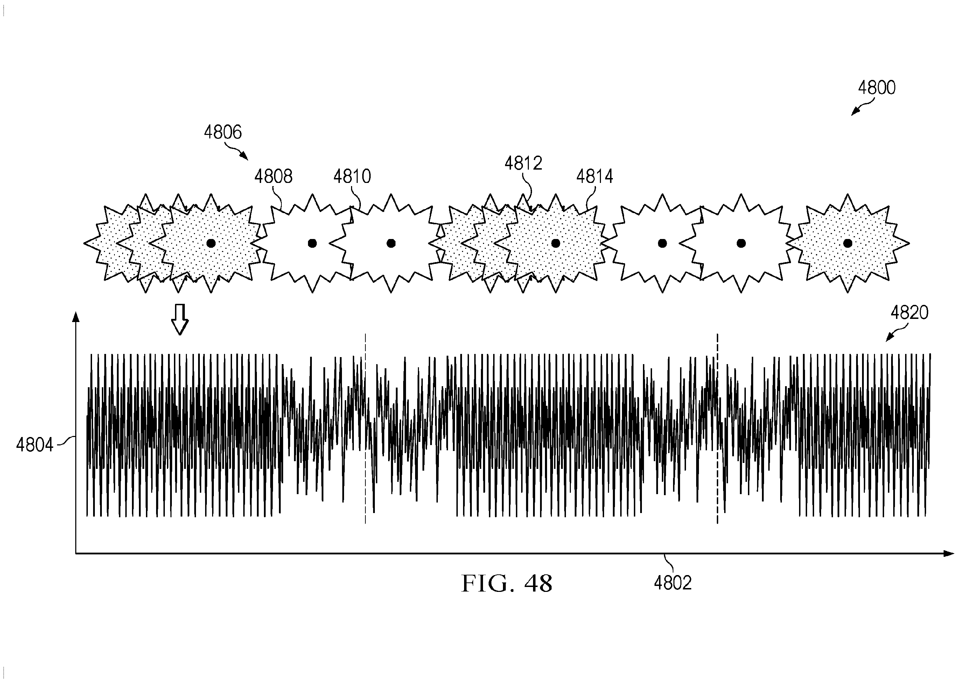

Turning to **Figure 48****,** an illustration of information flow for transmitting digital information with digital frequency noise modulation or digital frequency noise shift keying using a laser generation system is depicted in accordance with an illustrative embodiment. In this example, information flow **4800** can be implemented using laser generation system **3626** in signal transmission system **3619** for communications system **3602** in **Figure 47****.** In this example, x-axis **4802** represents time for optical breakdowns and noise signals while y-axis **4804** represents a strength of optical breakdowns and noise signals in information flow **4800.**

As depicted, optical breakdowns **4806** are generated with varying frequency based on the digital information to be transmitted. As previously described, these optical breakdowns are plasma generated using laser generation system **3626.** Each optical breakdown in optical breakdowns **4806** is a plasma event generated by the set of one or more laser beams **3627** emitted by laser generation system **3626** in **Figure 47****.**

As in this illustrative example, different optical breakdowns in optical breakdowns **4806** occur at different times that are not necessarily periodic because different timings, different intensities, and different frequencies or colors of different lasers may be used to affect the optical breakdowns **4806,** which in turn generate the different frequency-bands of radio frequency noise. In these examples, the different RF noise frequencies can be generated using a laser generator having at least one of different lasers, different pulses, different focal lengths, or different intensities.

In this example, the variation frequency can occur from the timing of laser pulses that generate optical breakdowns **4806.** For example, optical breakdown **4808** and optical breakdown **4810** occurs at a slower interval as compared to optical breakdown **4812** and optical breakdown **4814.**

As depicted, these radio frequency signals have varying frequencies of noise or noise-bands that are modulated through the frequency of optical breakdowns **4806** to at least one of corresponding to or correlating with, directly or indirectly, the digital information being transmitted. In this example, the different discrete changes in the frequency of radio frequency noise signals are a change in the frequency range that can include at least one of a change in the center point frequency location or width of radio frequency noise signals **4820.**

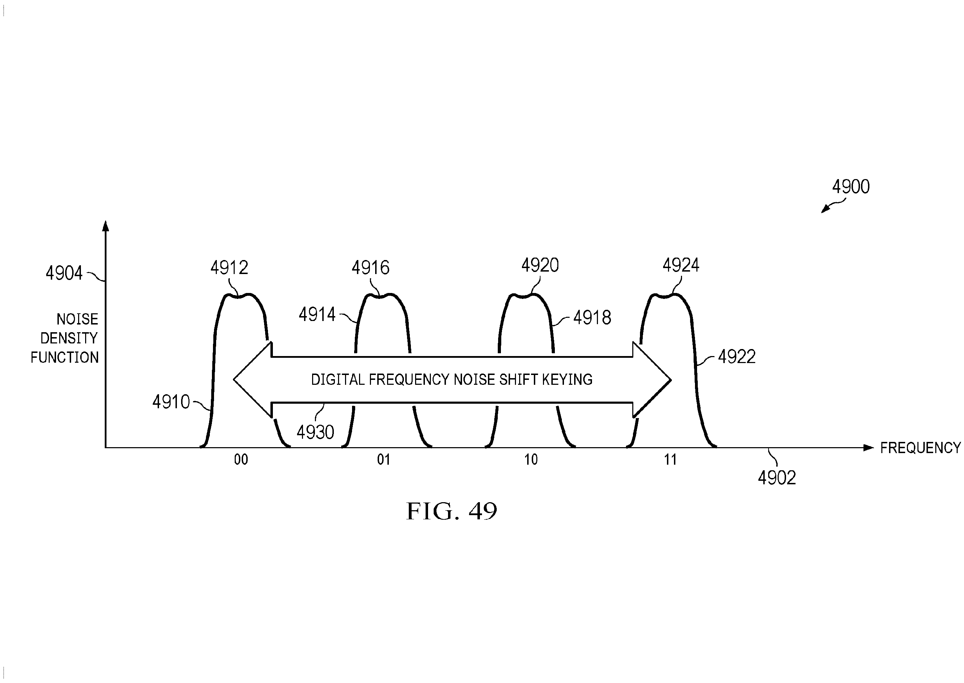

Turning next to **Figure 49****,** an illustration of frequency noise modulation of radio frequency signals through changing a frequency location of a center point of radio frequency noise-band signals is depicted in accordance with an illustrative embodiment. In this illustrative example, in graph **4900,** x-axis **4902** denotes frequency and y-axis **4904** denotes noise density, noise power density, or noise density function.

As depicted, four frequency noise-bands of noise-band signals are depicted with different discrete variations illustrated by the different center points. In this illustrative example, first frequency noise-band **4910** has first center point **4912;** second frequency noise-band **4914** has second center point **4916;** third frequency noise-band **4918** has third center point **4920;** fourth frequency noise-band **4922** has fourth center point **4924.** The center points have different discrete frequency changes relative to each other.

These different discrete frequency changes in the center points can be performed using digital frequency noise shift keying **4930.** The different center points correlate to different digital information. In this example, the digital information is in the form of multiple discrete logic symbols such as different patterns of logic "Os" and logic "1s."

For example, first frequency noise-band **4910** with first center point **4912** corresponds to logical "00;" second frequency noise-band **4914** with second center point **4916** corresponds to "01." Further in this example third frequency noise-band **4918** with third center point **4920** corresponds to "10" and fourth frequency noise-band **4922** with fourth center point **4924** corresponds to "11."

Thus, in this example, digital frequency noise shift keying **4930** occurs by changing the frequency location of the center point of radio frequency signals to different frequency locations resulting in different discrete changes to the frequency range of these frequency noise-bands. The amount of change in frequency location can be used to at least one of cause or control radio frequency noise-band signals to correspond to the digital signals being transmitted.

The illustration of four patterns for multiple discrete logic symbols in this figure is only presented as an example and not meant to limit the manner in which other illustrative examples can be implemented. For example, in another illustrative example, two frequency locations can be present for center points resulting in a "0" or logic "1." In another example, 16 frequency locations can be used for center points resulting in 16 patterns of multiple discrete logic symbols. Other numbers of frequency noise-bands and center points can be used in other examples.

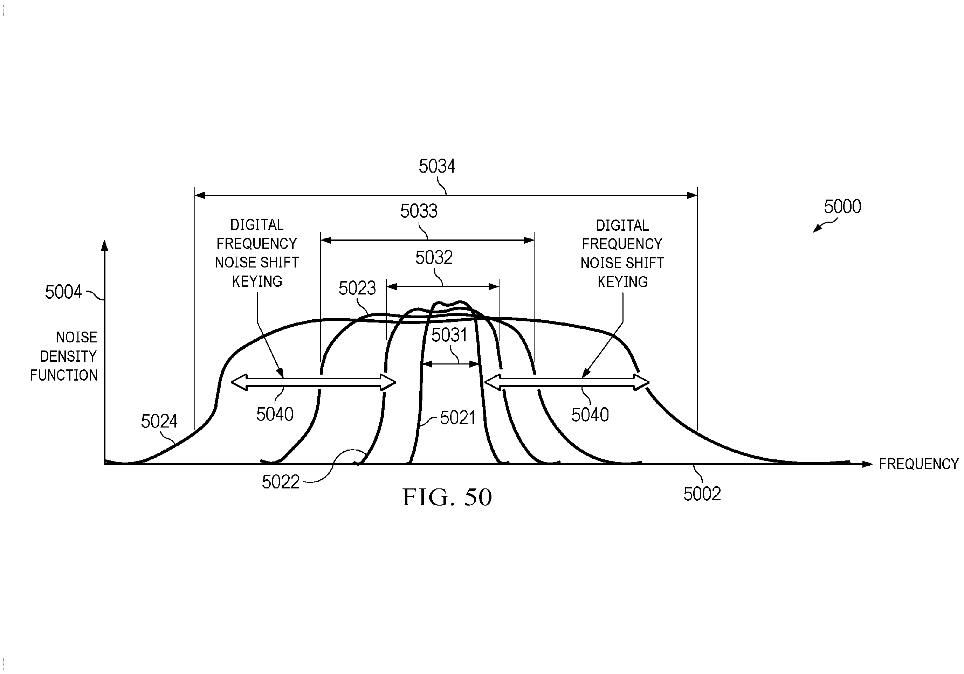

In **Figure 50****,** an illustration of frequency modulation of radio frequency signals through changing a width or bandwidth of noise-band signals is depicted in accordance with an illustrative embodiment. In this illustrative example, in graph **5000,** x-axis **5002** denotes frequency and y-axis **5004** denotes noise density function.

As depicted, radio frequency noise-band for radio frequency noise-band signals have different discrete changes in the form of different widths. First frequency noise-band **5021** has first width **5031;** second frequency noise-band **5022** has second width **5032;** third frequency noise-band **5023** has third width **5033;** and fourth frequency noise-band **5024** has fourth width **5034.**

In this example, digital frequency noise shift keying **5040** can be used to modulate frequency ranges of these frequency noise-bands of the frequency noise-band signals to different widths that correspond to digital signals being transmitted. In these examples, the different widths correspond to multiple discrete logic symbols that correspond to the digital signals.

In this example, a quadrature bit pattern is present for the multiple discrete logic symbols. First width **5031** corresponds to "00;" second width **5032** corresponds to "10;" third width **5033** corresponds to "10;" and fourth width **5034** corresponds to "11." Other widths can be used to correspond to at least one of different bit patterns or symbols that correspond to higher than quadrature symbols, such as 8 bits, 16 bits, or higher.

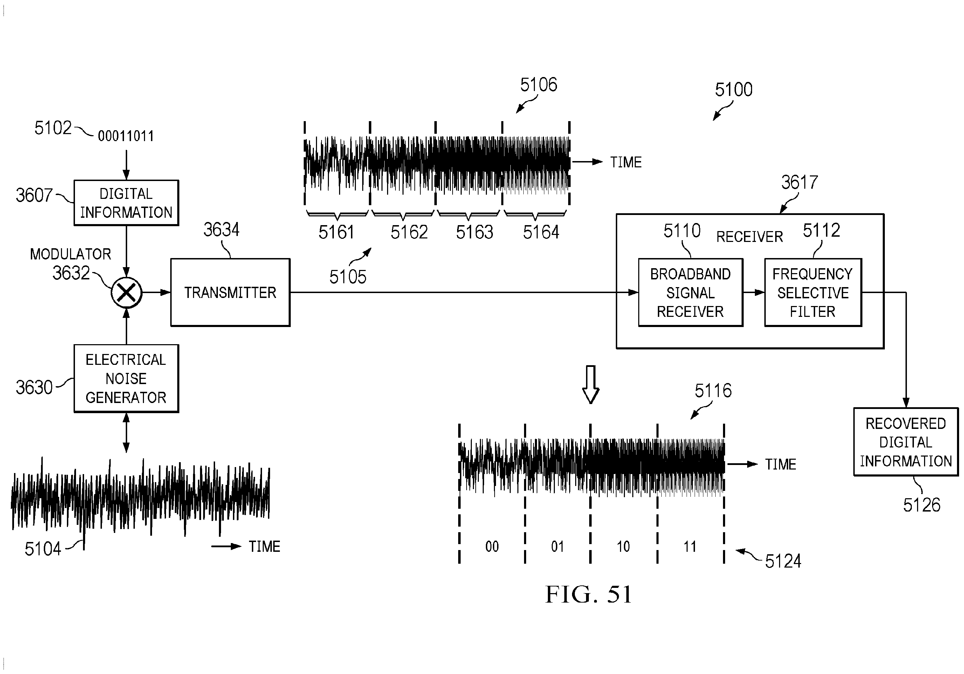

Turning next to **Figure 51****,** an illustration of information flow for transmitting digital information with digital frequency noise modulation using a noise transmitter is depicted in accordance with an illustrative embodiment. In this example, information flow **5100** can be implemented using noise transmitter **3628** in signal transmission system **3619** for communications system **3602** in **Figure 47****.**

As depicted in **Figure 51** in this example, digital input information **5102** is an example of digital information **3607** that is to be transmitted using digital frequency noise shift keying. As depicted, digital input information **5102** is in the form of bits.

In this example, electric noise generator **3630** generates carrier noise-band signal **5104.** In this example, modulator **3632** is a frequency modulator that modulates or digitally "shift keys" the frequency of carrier noise-band signal **5104** with digital information **3607.** This modulation causes carrier noise-band signal **5104** to vary in frequency in a manner that results in modulated carrier noise-band signal **5106** that has changes in a frequency range of the frequency noise-band for carrier noise-band signal **5104** that is transmitted by transmitter **3634.** This carrier noise-band signal with the frequency noise-band changes is transmitted by transmitter **3634** as modulated carrier noise-band signal **5106.**

As depicted, modulated carrier noise-band signal **5106** is comprised of frequency noise-bands **5105** and is not a sinusoidal wave form. In this example, frequency noise-bands **5105** includes frequency noise-band **5161,** frequency noise-band **5162,** frequency noise-band **5163,** and frequency noise-band **5164.** As depicted, different discrete frequency range changes are present in these frequency noise-bands. The different discrete changes thereby modulate modulated carrier noise-band signal **5106** to correlate to digital input information **5102.**

Modulated carrier noise-band signal **5106** is an example of carrier noise-band signal **5104** with frequency range changes in the frequency noise-bands **4702** in **Figure 47****.** This modulated transmission signal has a frequency noise-band that varies in a manner that corresponds to digital input information **5102.**

As depicted, receiver **3617** includes broadband signal receiver **5110** and frequency selective filter **5112.** Broadband signal receiver **5110** is at least one of a hardware device or software device that is configured to receive and process signals across a wide range of frequencies. In this example, broadband signal receiver **5110** receives modulated carrier noise-band signal **5106.**

This reception of modulated carrier noise-band signal **5106** results in received signal **5116.** As depicted in this example, received signal **5116** is the same or substantially the same as modulated carrier noise-band signal **5106.** In this example, a noise floor can also be present in received signal **5116** from broadband signal receiver **5110.** The noise floor can be from noise sources in broadband signal receiver **5110.**

In this example, frequency selective filter **5112** can detect frequency changes in the frequency noise-band for received signal **5116** to generate a signal having a shape that resembles those frequency noise-band variations. Frequency selective filter **5112** detects frequencies of received signal **5116** to generate multiple discrete logic symbols **5124.** In this example, the output signal from the frequency selective filter **5112** is multiple discrete logic symbols **5124** for recovered digital information **5126.** As depicted in this example, multiple discrete logic symbols **5124** for recovered digital information **5126** is the same as digital input information **5102.**

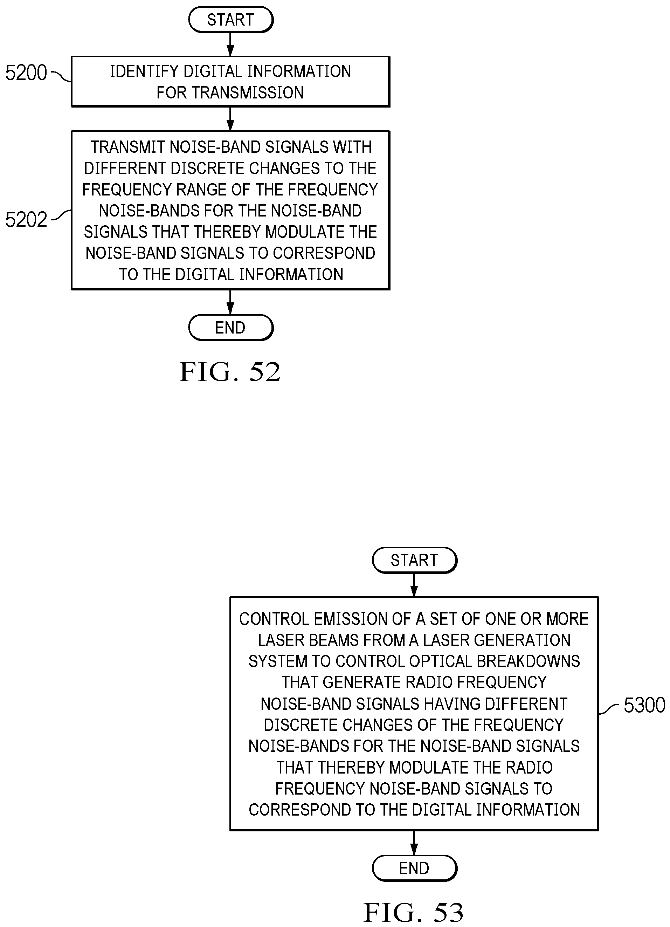

Turning next to **Figure 52****,** an illustration of a flowchart for communicating digital information is depicted in accordance with an illustrative embodiment. The process in **Figure 52** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** in **Figure 47****.**

The process identifies digital information for transmission (operation **5200**). The process transmits noise-band signals with different discrete changes to a frequency range of frequency noise-bands for the noise-band signals that thereby modulate the noise-band signals to correspond to the digital information (operation **5202**). The process terminates thereafter.

In **Figure 52****,** the noise-band signals can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including at least one of visible or non-visible light.

With reference next to **Figure 53****,** an illustration of a flowchart of a process for transmitting noise signals using a laser generation system is depicted in accordance with an illustrative embodiment. The process in this figure is an example of an implementation for operation **5202** in **Figure 53****.** In this example, the noise signals are radio frequency noise signals.

The process controls emission of a set of one or more laser beams from a laser generation system to control optical breakdowns that generate radio frequency noise-band signals having different discrete changes of the frequency noise-bands for the noise-band signals that thereby modulate the radio frequency noise-band signals to correspond to the digital information (operation **5300**). The process terminates thereafter.

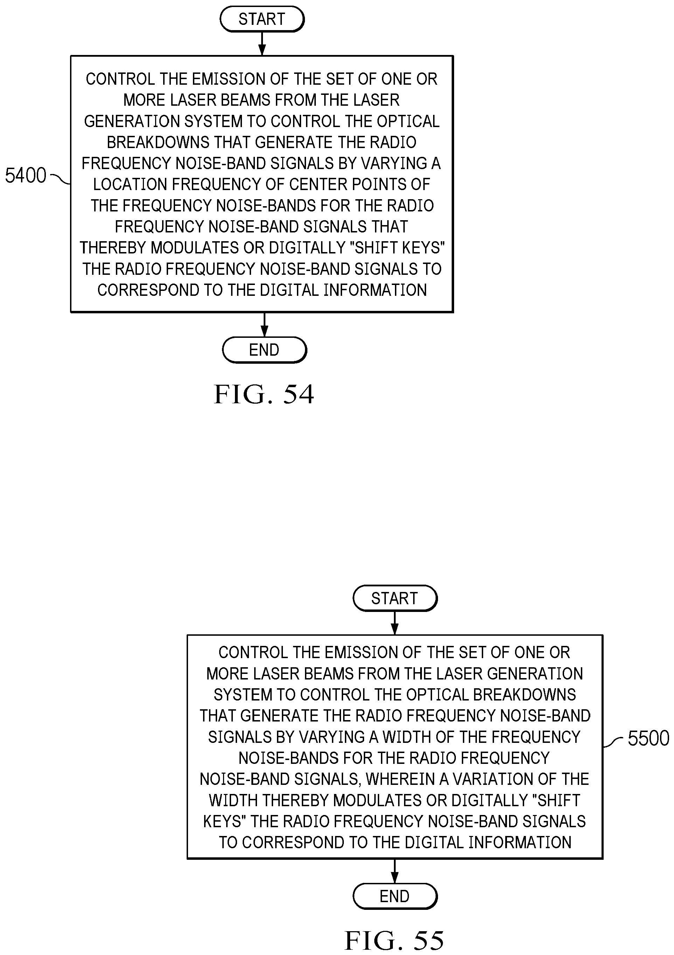

Next in **Figure 54****,** an illustration of a flowchart of a process for controlling emission of a set of one or more laser beams is depicted in accordance with an illustrative embodiment. The process in this figure is an example of an implementation for operation **5300** in **Figure 53****.**

The process controls the emission of the set of one or more laser beams from the laser generation system to control the optical breakdowns that generate the radio frequency noise-band signals by varying a frequency location of center points of the frequency noise-bands for the radio frequency noise-band signals that thereby modulates or digitally "shift keys" the radio frequency noise-band signals to correspond to the digital information (operation **5400**). The process terminates thereafter.

In **Figure 55****,** an illustration of a flowchart of a process for controlling emission of a set of one or more laser beams is depicted in accordance with an illustrative embodiment. The process in this figure is an example of an implementation for operation **5300** in **Figure 53****.**

The process controls the emission of the set of one or more laser beams from the laser generation system to control the optical breakdowns that generate the radio frequency noise-band signals by varying a width of the frequency noise-bands for the radio frequency noise-band signals, wherein a variation of the width thereby modulates or digitally "shift keys" the radio frequency noise-band signals to correspond to the digital information (operation **5500**). The process terminates thereafter.

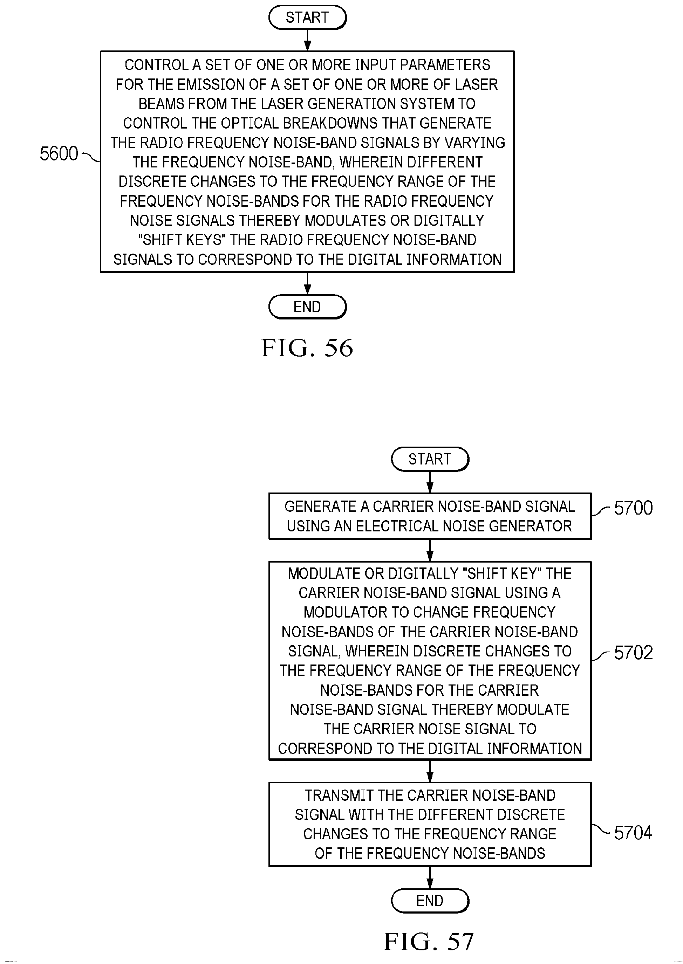

Turning now to **Figure 56****,** an illustration of a flowchart of a process for controlling emission of a set of one or more laser beams is depicted in accordance with an illustrative embodiment. The process in this figure is an example of an implementation for operation **5300** in **Figure 53****.**

The process controls a set of one or more input parameters for the emission of a set of one or more of laser beams from the laser generation system to control the optical breakdowns that generate the radio frequency noise-band signals by varying the frequency noise-band, wherein different discrete changes to the frequency range of the frequency noise-bands for the radio frequency noise signals thereby modulates or digitally "shift keys" the radio frequency noise-band signals to correspond to the digital information (operation **5600**). The process terminates thereafter.

With reference now to **Figure 57****,** an illustration of a flowchart of a process for transmitting noise signals using a noise transmitter is depicted in accordance with an illustrative embodiment. The process in this figure is an example of an implementation for operation **5302** in **Figure 53****.**

The process begins by generating a carrier noise-band signal using an electric noise generator (operation **5700**). The process modulates or digitally "shift keys" the carrier noise-band signal using a modulator to change frequency noise-bands of the carrier noise-band signal, wherein discrete changes to the frequency range of the frequency noise-bands for the carrier noise-band signal thereby modulate the carrier noise signal to correspond to the digital information (operation **5702**).

The process transmits the carrier noise-band signal with the different discrete changes to the frequency range of the frequency noise-bands (operation **5704**). The process terminates thereafter.

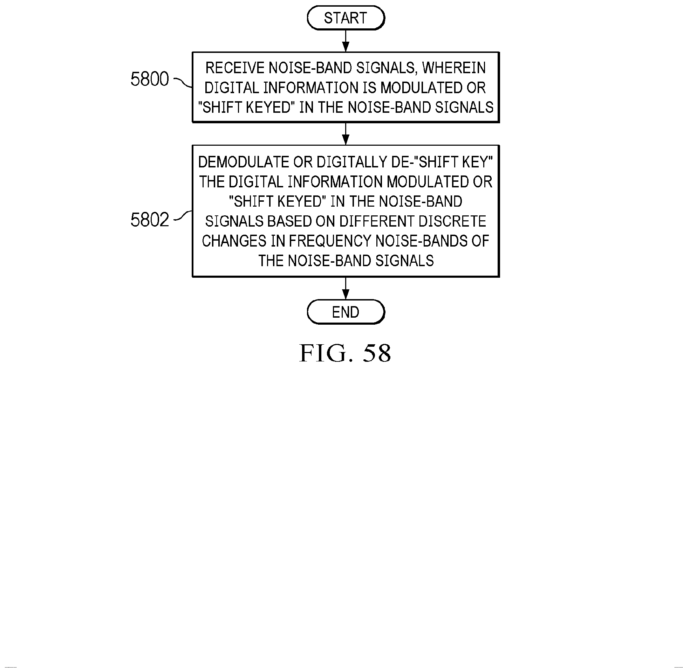

Turning next to **Figure 58****,** an illustration of a flowchart of a process for communicating digital information is depicted in accordance with an illustrative embodiment. The process in **Figure 58** can be implemented in hardware, software, or both. When implemented in software, the process can take the form of program instructions that are run by one or more processor units located in one or more hardware devices in one or more computer systems. For example, the process can be implemented in receiver **3617** in **Figure 47****.**

The process begins by receiving noise-band signals, wherein digital information is modulated or "shift keyed" in the noise-band signals (operation **5800**). The process demodulates or digitally de-"shift keys" the digital information modulated or "shift keyed" in the noise-band signals based on different discrete changes in frequency noise-bands of the noise-band signals (**5802**). The process terminates thereafter. In this example, the discrete changes in the frequency noise-bands are discrete changes in frequency ranges of the frequency noise-bands of the noise-band signals.

Some features of the illustrative examples for modulating digital information **3607** using digital frequency noise shift keying **3692** in communications system **3602** are described in the following clauses. These clauses are examples of features and are not intended to limit other illustrative examples.
1. A communications system comprising:
   a computer system; and
   a communications manager in the computer system, wherein the communications manager is configured to:
      identify digital information for transmission; and
      transmit noise-band signals with different discrete changes to a frequency range of frequency noise-bands of the noise-band signals that thereby modulate the noise-band signals to correspond to the digital information.
2. The communications system of clause 1, wherein the different discrete changes to the frequency range of the frequency noise-bands of the noise-band signals represent multiple discrete logic symbols.
3. The communications system of clause 1, wherein a first discrete change to the frequency range of the frequency noise-bands of the noise-band signals corresponds to a logic 0 and a second discrete change of the frequency noise-bands of the noise-band signals corresponds to a logic 1.
4. The communications system of clause 1, wherein the different discrete changes to the frequency range of the frequency noise-bands of the noise-band signals comprise four different discrete changes of the frequency noise-bands of the noise-band signals in which a first discrete change of the frequency noise-bands represents a logic "00," a second discrete change of the frequency noise-bands represents a logic "01," a third discrete change of the frequency noise-bands represents a logic "10," and a fourth discrete change of the frequency noise-bands represents a logic "11."
5. The communications system of clause 1, wherein the different discrete changes to the frequency range selected from at least one a position or a width of the frequency noise-bands of the noise-band signals correspond to multiple discrete logic symbols.
6. The communications system of clause 1, wherein the noise-band signals are radio frequency noise-band signals and further comprising:
   a laser generation system configured to emit a set of one or more laser beams, wherein in transmitting the noise-band signals, the communications manager is configured to:
   control an emission of a set of one or more laser beams from the laser generation system to control optical breakdowns that generate the radio frequency noise-band signals with the different discrete changes to the frequency range of the frequency noise-bands for the radio frequency noise-band signals that thereby modulate the radio frequency noise-band signals to correspond to the digital information.
7. The communications system of clause 6, wherein in controlling the emission of the set of one or more laser beams, the communications manager is configured to:
   control the emission of the set of one or more laser beams from the laser generation system to control the optical breakdowns that generate the radio frequency noise-band signals by varying a frequency location of a center point of the frequency noise-bands for the radio frequency noise-band signals that thereby modulates the radio frequency noise-band signals to correspond to the digital information.
8. The communications system of clause 6, wherein in controlling the emission of the laser beams, the communications manager is configured to:
   control the emission of the set of one or more laser beams from the laser generation system to control the optical breakdowns that generate the radio frequency noise-band signals by varying a width of the frequency noise-bands for the radio frequency noise-band signals that thereby modulates the radio frequency noise-band signals to correspond to the digital information.
9. The communications system of clause 6, wherein in controlling the emission of the laser beams, the communications manager is configured to:
   control a set of one or more input parameters for the emission of a set of one or more of laser beams from the laser generation system to control the optical breakdowns that generate the radio frequency noise-band signals by varying the frequency noise-bands such that different discrete changes to the frequency range of the frequency noise-bands for the radio frequency noise signals thereby modulates the radio frequency noise-band signals to correspond to the digital information.
10. The communications system of clause 1 further comprising:
   an electric noise generator configured to generate a carrier noise-band signal;
   a modulator; and
   a transmitter, wherein in transmitting the noise-band signals, the communications manager is configured to:
      generate the carrier noise-band signal using the electric noise generator;
      modulate the carrier noise-band signal using the modulator to change frequency noise-bands for the carrier noise-band signal, wherein different discrete changes to the frequency range of the frequency noise-bands for the carrier noise-band signal thereby modulate the carrier noise-band signal to correspond to the digital information; and
      transmit the carrier noise-band signal with the different discrete changes in a frequency range of the frequency noise-bands for the carrier noise-band signal.
11. The communications system of clause 10, wherein the carrier noise-band signal is selected from at least one of electromagnetic frequency noise signals, radio frequency noise signals, microwave frequency noise signals, audio frequency noise signals, ultrasonic frequency noise signals, ultra-low frequency noise signals, very low frequency noise-band signals, underwater frequency noise signals, or optical frequency noise signals including at least one of visible light or non-visible light.
12. The communications system of clause 1, wherein the different discrete changes in the frequency noise-bands for the noise-band signals are made to at least one of a width or a position of the frequency noise-bands.
13. The communications system of clause 1, wherein the different discrete changes are made to a frequency range of the frequency noise-bands for the noise-band signals.
14. A communications system comprising:
   a receiver configured to:
   receive noise-band signals, wherein digital information is modulated in the noise-band signals; and
   demodulate the digital information modulated in the noise-band signals based on different discrete changes of frequency noise-bands of the noise-band signals.
15. A method for communicating digital information, the method comprising:
   identifying the digital information for transmission; and
   transmitting noise-band signals with different discrete changes to a frequency range of frequency noise-bands for the noise-band signals that thereby modulate the noise-band signals to correspond to the digital information.
16. The method of clause 15, wherein the different discrete changes of the frequency noise-bands of the noise-band signals correspond to multiple discrete logic symbols.
17. The method of clause 15, wherein a first discrete change of the frequency noise-bands of the noise-band signals corresponds to a logic 0 and a second discrete change of the frequency noise-bands of the noise-band signals corresponds to a logic 1.
18. The method of clause 15, wherein the different discrete changes of the frequency noise-bands of the noise-band signals comprise four different discrete changes of the frequency noise-bands of the noise-band signals in which a first discrete change of the frequency noise-bands represents a logic "00," a second discrete change of the frequency noise-bands represents a logic "01," a third position of the frequency noise-bands represents a logic "10," and a fourth discrete change of the frequency noise-bands represents a logic "11."
19. The method of clause 15, wherein the different discrete changes selected from at least one a position and a width of the frequency noise-bands of the noise-band signals correspond to multiple discrete logic symbols.
20. The method of clause 15, wherein the noise-band signals are radio frequency noise-band signals and further comprising:
   controlling emission of a set of one or more laser beams from a laser generation system to control optical breakdowns that generate the radio frequency noise-band signals having with the different discrete changes of the frequency noise-bands for the noise-band signals that thereby modulate the radio frequency noise-band signals to correspond to the digital information.
21. The method of clause 20, wherein said controlling the emission of the set of one or more laser beams comprises:
   controlling the emission of the set of one or more laser beams from the laser generation system to control the optical breakdowns that generate the radio frequency noise-band signals by varying a frequency location of center points of the frequency noise-bands for the radio frequency noise-band signals that thereby modulates the radio frequency noise-band signals to correspond to the digital information.
22. The method of clause 20, wherein said controlling the emission of the laser beams comprises:
   controlling the emission of the set of one or more laser beams from the laser generation system to control the optical breakdowns that generate the radio frequency noise-band signals by varying a width of the frequency noise-bands for the radio frequency noise-band signals, wherein a variation of the width thereby modulates the radio frequency noise-band signals to correspond to the digital information.
23. The method of clause 20, wherein said controlling the emission of the laser beams comprises:
   controlling a set of one or more input parameters for the emission of a set of one or more of laser beams from the laser generation system to control the optical breakdowns that generate the radio frequency noise-band signals by varying the frequency noise-band, wherein different discrete changes to the frequency range of the frequency noise-bands for the radio frequency noise signals thereby modulates the radio frequency noise-band signals to correspond to the digital information.
24. The method of clause 15, wherein said transmitting the noise-band signals comprises:
   generating a carrier noise-band signal using an electric noise generator;
   modulating the carrier noise-band signal using a modulator to change frequency noise-bands of the carrier noise-band signal, wherein discrete changes to the frequency range of the frequency noise-bands for the carrier noise-band signal thereby modulate the carrier noise signal to correspond to the digital information; and
   transmitting the carrier noise-band signal with the different discrete changes to the frequency range of the frequency noise-bands.
25. The method of clause 15, wherein the noise-band signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals.
26. A method for communicating digital information, the method comprising:
   receiving noise-band signals, wherein the digital information is modulated in the noise-band signals; and
   demodulating the digital information modulated in the noise-band signals based on different discrete changes in frequency noise-bands of the noise-band signals.
27. The method of clause 26, wherein the different discrete changes in the frequency noise-bands are discrete changes in frequency ranges of the frequency noise-bands of the noise-band signals.
28. The method of clause 26, wherein the different discrete changes in the frequency noise-bands for the noise-band signals are made to at least one of a width or a position of the frequency noise-bands.

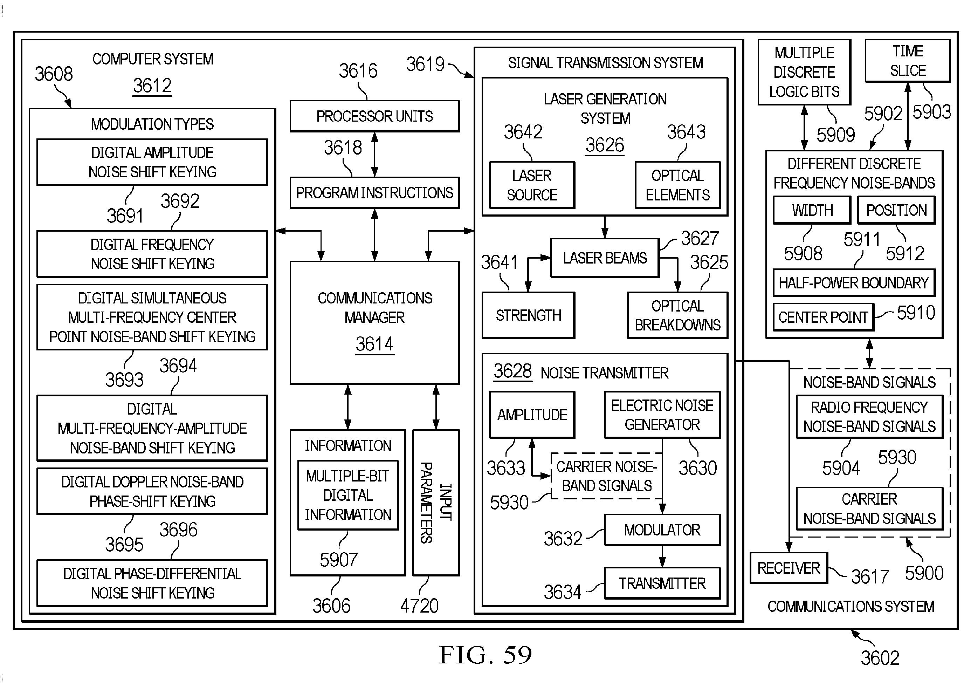

Turning now to Figure 59, an illustration of a block diagram of a communication system for transmitting noise signals using what may be variously called digital simultaneous multi-frequency noise-shift keying, digital simultaneous multi-frequency center point noise-shift keying, and/or digital simultaneous multi-frequency center point noise-band shift keying is depicted in accordance with an illustrative embodiment. In this illustrative example, communications system **3602** operates to modulate or "shift key" noise-band signals **5900** to correspond to information **3606** using digital simultaneous multi-frequency center point noise-band shift keying **3693.** Noise-band signals **5900** can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, optical frequency noise signals including at least one of visible or non-visible light, or other types of noise signals.

In this illustrative example, communications manager **3614** identifies multiple-bit digital information **5907** for transmission. Communications manager **3614** transmits noise-band signals **5900** having different discrete frequency noise-bands **5902** in time slice **5903** wherein each discrete frequency-band in different discrete frequency noise-bands **5902** corresponds to a different bit in multiple-bit digital information **5907,** whereby a simultaneous transmission of different discrete frequency noise-bands **5902** in time slice **5903** thereby modulates or digitally "shift keys" noise-band signals **5900** to correspond to multiple-bit digital information **5907.**

In this illustrative example, simultaneous transmission means that the different signals are sent at the same time or as close as possible to the same time such that the transmissions occur within time slice **5903.** Signals within time slice **5903** are considered to be simultaneous signals for purposes of transmission or receipt by receiver **3617** for demodulation to recover multiple-bit digital information **5907.**

In this example, communications manager **3614** transmits multiple discrete logic bits **5909** in multiple-bit digital information **5907** at the same time. This transmission occurs at the same time with different discrete frequency noise-bands **5902** being transmitted in the same time slice. Multiple discrete logic bits **5909** can be, for example, 2 bits of information, 8 bits, 16 bits, 32 bits, or some other number of bits which can be all transmitted within time slice **5903** using transmissions of different discrete frequency noise-bands within time slice **5903.** This is in contrast to transmitting a single frequency noise-band within time slice **5903** that can correspond to one or more discrete logic bits. In this example, each frequency noise-band within different discrete frequency noise-bands **5902** transmitted within time slice **5903** can represent a logic "0" or a "logic "1."

In this example, different discrete frequency noise-bands **5902** are a grouping of noise-band signals **5900.** For example, different discrete frequency noise-bands **5902** can be at least one of "clusters of noise," "noise spectra," noise spectrum," "a frequency band of noise," "a pass-band of noise," "a band-pass of noise," "a frequency range of noise," or a "noise frequency range" which can have a lower half-power boundary and an upper half-power boundary or other lower and upper boundary. Different discrete frequency noise-bands **5902** for noise-band signals **5900** can be changed in a manner that corresponds to multiple-bit digital information **5907.** For example, noise-band signals **5900** can be modulated such that different discrete frequency noise-bands **5902** change in at least one of width **5908** (bandwidth or frequency bandwidth), position **5912,** center frequency or center point **5910,** or half-power boundary **5911.**

In one illustrative example, this transmission can be performed using laser generation system **3626.** With this example, communications manager **3614** controls an emission of a set of one or more laser beams **3627** from laser generation system **3626** to at least one of cause or control optical breakdowns **3625** that generate noise-band signals **5900** having different discrete frequency noise-bands **5902** in time slice **5903.** Each frequency noise-band in the different discrete frequency noise-bands **5902** corresponds to a different bit in multiple-bit digital information **5907,** whereby the simultaneous transmission of different discrete frequency noise-bands **5902** in time slice **5903** thereby modulates or digitally "shift keys" radio frequency noise-band signals **5904** to correspond to multiple discrete logic bits **5909** in multiple-bit digital information **5907.**

In this example, at least one of width **5908,** position **5912,** or center frequency or center point **5910** of different discrete frequency noise-bands **5902** can be varied to have different discrete changes to cause radio frequency noise-band signals **5904** to correspond to multiple-bit digital information **5907.** Position **5912** for each of different discrete frequency noise-bands **5902** can be identified using center frequency or center point **5910** of each of different discrete frequency noise-bands **5902.** The change of a beginning, initial, or lower and ending, final, or upper of frequencies in different discrete frequency noise-bands **5902** can result in different discrete changes for at least one of width **5908** or position **5912** of different discrete frequency noise-bands **5902.** Thus, in this example, the different discrete changes are present between the ranges of frequencies of different discrete frequency noise-bands **5902** for noise-band signals **5900** that thereby modulate noise-band signals **5900** in time slice **5903** to correspond to multiple-bit digital information **5907.**

In one illustrative example, communications manager **3614** controls the emission of the set of one or more laser beams **3627** from laser generation system **3626** to at least one of cause or control optical breakdowns **3625** that generate radio frequency noise-band signals **5904** with discrete changes of center point **5910** of different discrete frequency noise-bands **5902** for radio frequency noise-band signals **5904.** Discrete changes of center point **5910** of different discrete frequency noise-bands **5902** for radio frequency noise-band signals **5904** in time slice **5903** correspond to multiple discrete logic bits **5909** in the multiple-bit digital information.

In these examples, center point **5910** is different for different ones of different discrete frequency noise-bands **5902.** The particular frequency location of center point **5910** for a frequency noise-band in different discrete frequency noise-bands **5902** can correlate to a bit represented by a frequency noise-band in different discrete frequency noise-bands **5902.** The frequency location of center point **5910** can be different for a particular frequency noise-band relative to other center points for other frequency noise-bands in different discrete frequency noise-bands **5902.**

These differences in the positions of center point **5910** for different discrete frequency noise-bands **5902** correlate to multiple discrete logic bits **5909** in time slice **5903** in which each bit can be a logic "0" or a "logic "1." A variation of the frequency location of center point **5910** of different discrete frequency noise-bands **5902** for radio frequency noise-band signals **5904** thereby modulates or digitally "shift keys" radio frequency noise-band signals **5904** to correspond to multiple discrete logic bits **5909** in multiple-bit digital information **5907.**

Thus, in this example, center point **5910** can be moved back and forth as different discrete frequency noise-bands **5902** to modulate radio frequency noise-band signals **5904** to correspond to multiple-bit digital information **5907.** In other words, the modulation of center point **5910** as different discrete frequency noise-bands **5902** for radio frequency noise-band signals **5904** is an example of one manner in which different discrete frequency noise-bands **5902** can be modulated to at least one of causing or controlling radio frequency noise-band signals **5904** to correspond to multiple-bit digital information **5907.**

In another illustrative example, communications manager **3614** can control the emission of the set of one or more laser beams **3627** from laser generation system **3626** to at least one of cause or control optical breakdowns **3625** that generate radio frequency noise-band signals **5904** in time slice **5903** by varying width **5908** of different discrete frequency noise-bands **5902** for radio frequency noise-band signals **5904** in time slice **5903.** Different widths of different discrete frequency noise-bands **5902** for radio frequency noise-band signals **5904** in time slice **5903** correspond to multiple discrete logic bits **5909** and thereby modulate radio frequency noise-band signals **5904** to correspond to multiple-bit digital information **5907.** For example, a set of multiple discrete logic bits **5909** can be a group of 2 bits, 4 bits, 7 bits, 16 bits, or some other number of bits that are all transmitted within time slice .**5903.** In these examples, multiple discrete logic bits **5909** do not necessarily have to correspond to an even number of bits.

In this example, a variation in width **5908** thereby modulates or digitally "shift keys" radio frequency noise-band signals **5904** to correspond to digital information **3607** in **Figure 36** or multiple-bit digital information **5907** in **Figure 59****.** In other words, width **5908** of radio frequency noise-band signals **5904** in different discrete frequency noise-bands **5902** can be increased and decreased to modulate radio frequency noise-band signals **5904** to correspond to multiple-bit digital information **5907.** In these examples, the change in width **5908** can occur by changing at least one of the boundaries lower, starting, or initial frequency, and at least one of the upper, ending, final frequency in a frequency noise-band by controlling or causing the manner in which optical breakdowns **3625** occur.

In another example, communications manager **3614** controls a set of one or more input parameters **4720** for the emission of a set of one or more of laser beams **3627** from laser generation system **3626** to at least one of cause or control optical breakdowns **3625** that generate radio frequency noise-band signals **5904** with discrete changes of different discrete frequency noise-bands **5902** in time slice **5903.** Different discrete frequency noise-bands **5902** for radio frequency noise-band signals **5904** in time slice **5903** correspond to different sets of multiple discrete logic bits **5909** and thereby modulate radio frequency noise-band signals **5904** to correspond to multiple-bit digital information **5907.**

With this example, the set of one or more input parameters **4720** can take a number of different forms. For example, the set of one or more input parameters **4720** can, for example, be selected from one or more of, a mirror orientation, a deformable mirror position, a lens position, lens, a deformable lens position or some other element that can be positioned in a manner that changes an optical path length (OPL) for the set of one or more laser beams **3627.** In this example, the path length change can be both the optical path length and/or the physical path length. Another input parameter that can be changed in this example is the index of refraction (IoR). The optical path length is inversely proportional to the index of refraction.

These changes to input parameters **4720** can cause discrete changes of different discrete frequency noise-bands **5902** of radio frequency noise-band signals **5904.** For example, changes can be made to at least one of width **5908** (bandwidth or frequency bandwidth) or position **5912** of different discrete frequency noise-bands **5902** for radio frequency noise-band signals **5904.** In other words, different noise-bands can have different changes in at least one of position **5912** or width **5908.**

In another example, communications manager **3614** can control noise transmitter **3628** in signal transmission system **3619** to transmit digital information **3607** in **Figure 36** or multiple-bit digital information **5907** in **Figure 59****.** For example, in generating noise-band signals **5900,** communications manager **3614** can generate carrier noise-band signals **5930** using electric noise generator **3630.**

In this example, communications manager **3614** modulates or digitally "shift keys" carrier noise-band signals **5930** using modulator **3632** to generate the carrier noise-band signals **5930** having different discrete frequency noise-bands **5902** in time slice **5903** wherein each discrete frequency noise-band in different discrete frequency noise-bands **5902** corresponds to a different bit in multiple-bit digital information **5907.** Different frequency-ranges of different discrete frequency noise-bands **5902** for the carrier noise-band signals **5930** correspond to different sets of multiple discrete logic bits **5909** and thereby modulate the carrier noise-band signals **5930** to correspond to the multiple-bit digital information **5907.**

Communications manager **3614** transmits carrier noise-band signals **5930** simultaneously with the different discrete frequency noise-bands in time slice **5903.** In this illustrative example, the simultaneous transmission of carrier noise-band signals **5930** means that these signals are sent at the same time or as close to the same time such that the signals are sent during time slice **5903.**

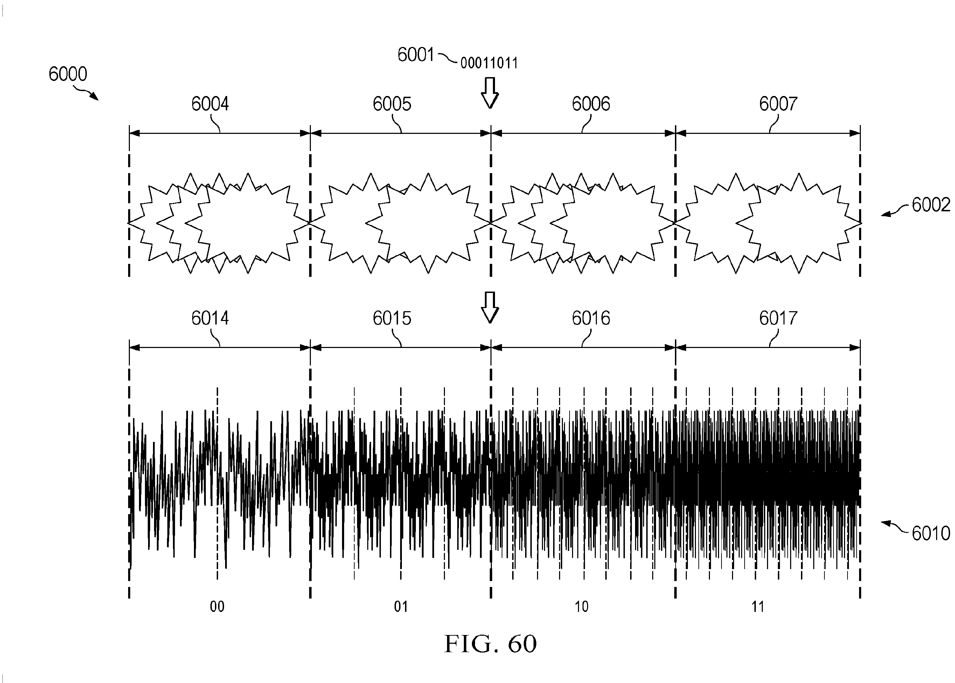

Turning next to **Figure 60****,** an illustration of information flow for transmitting digital information with what is variously called digital simultaneous multi-frequency noise-shift keying, digital simultaneous multi-frequency center point noise-shift keying, and/or digital simultaneous multi-frequency center point noise-band shift keying using a laser generation system is depicted in accordance with an illustrative embodiment. In this example, information flow **6000** can be implemented using laser generation system **3626** in signal transmission system **3619** for communications system **3602** in **Figure 47** and **Figure 59****.** In this example, optical breakdowns **6002** are generated using digital information **6001** and are at least one of controlled or caused within time slices. In this example, the time slices include time slice **6004,** time slice **6005,** time slice **6006,** and time slice **6007.** In other words, groups of optical breakdowns **6002** occur within each of the time slices. In this example, time slice **6004,** time slice **6005,** time slice **6006,** and time slice **6007,** are present, in which optical breakdowns occur simultaneously within each of these time slices. These optical breakdowns result in noise-band signals **6010** with different discrete frequency noise-bands in the time slices. In this example, in noise-band signals **6010** these time slices include time slice **6014,** time slice **6015,** time slice **6016,** and time slice **6017.** As depicted, time slice **6004** corresponds to time slice **1614,** time slice **6005** corresponds a time slice **6015,** time slice **6006** corresponds the time slice **6016,** and time slice **6007** corresponds to time slice **6017.** In this illustrative example, the different discrete frequency noise-bands in each of these time slices correspond to multiple discrete logic bits in multiple-bit digital information **5907.**

In this illustrative example, multiple bits can be transmitted in each time slice. As depicted, time slice **6014** contains logic symbol "00," time slice **6015** contains logic symbol "01," time slice **6016** contains logic symbol "10," and time slice **6017** contains logic symbol "11." In other examples, other numbers of bits can be present in a time slice. For example, 3 bits, 8 bits, 16 bits, 32 bits, or some other number bits can be present by transmitting different discrete frequency noise-bands within any time slice.

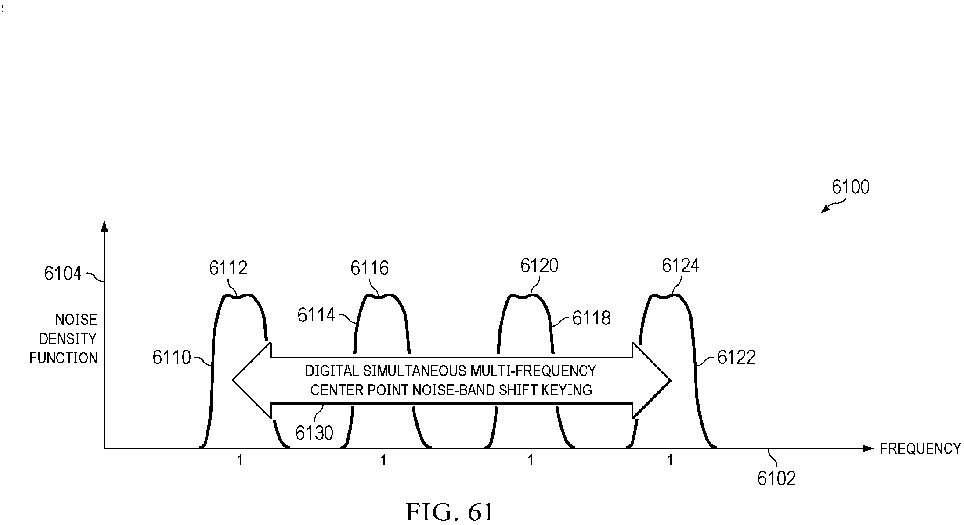

Turning next to **Figure 61****,** an illustration of frequency noise modulation of radio frequency signals through changing a frequency location of the center points of different discrete frequency noise-bands in radio frequency noise-band signals is depicted in accordance with an illustrative embodiment. In this illustrative example, in graph **6100,** x-axis **6102** denotes frequency and y-axis **6104** denotes noise density, noise power density, and/or noise density function.

As depicted, four different discrete frequency noise-bands of noise-band signals are depicted with different center points in a time slice. In other words, these four different discrete frequency noise-bands are transmitted simultaneously in the same time slice or time slot to correspond to multiple-bit digital information.

In this illustrative example, first frequency noise-band **6110** has first center point **6112;** second frequency noise-band **6114** has second center point **6116;** third frequency noise-band **6118** has third center point **6120;** fourth frequency noise-band **6122** has fourth center point **6124.** The center points have different discrete changes in positions relative to each other in which each position represents a bit position for 4 bits of multiple-bit digital information. In this example, first frequency noise-band **6110** is in the position of least significant bit and the fourth frequency noise-band **6122** is in the position of the most significant bit, when read as least significant bit on the left and most significant bit on the right.

These different discrete noise-band signals are all transmitted within the same timeslot in this example. This type of transmission is considered a simultaneous transmission such that multiple-bit digital information can be transmitted simultaneously.

These different discrete frequency locations of the center points determine whether a bit is a logical "1" or "0" for each center point frequency location for digital simultaneous multi-frequency center point noise-band shift keying **6130.** The different center points correlate to different bit positions. In this example, the existence of different discrete frequency noise-bands in all four center point frequency locations designates a "1111" for multiple-bit digital information.

Thus, in this example, digital simultaneous multi-frequency center point noise-band shift keying **6130** occurs by transmitting or not transmitting noise in frequency-band locations with center points for different discrete frequency-band noise signals resulting in different combinations of different discrete frequency noise-bands for the radio frequency noise-band signals in a timeslot. The original bits for transmission can be used to at least one of cause or control different discrete frequency noise-bands of radio frequency noise-band signals to correspond to the multiple-bit digital information being transmitted.

In another example, 16 frequency locations can be used for center points resulting in 16 bit positions for multiple discrete logic bits for different discrete frequency noise-bands in noise-band signals in the same timeslot. The frequency locations of these 16 center points for the different discrete frequency noise-bands correspond to 16 different bit positions in multiple-bit digital information, resulting in a logic "0" or a logic "1" for each of the 16 different bit positions. These noise-band signals are transmitted simultaneously by transmitting these noise-band signals with the different discrete noise-bands in a single timeslot.

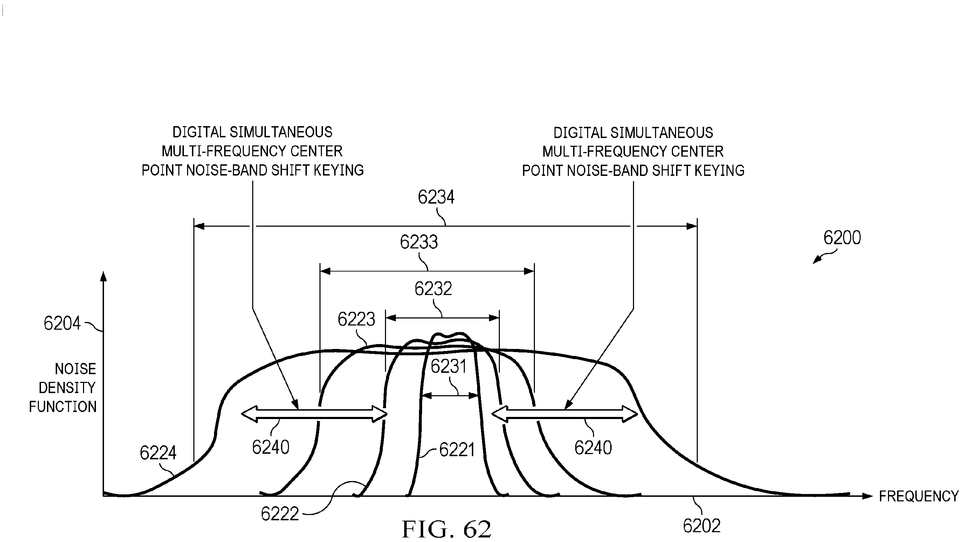

In **Figure 62****,** an illustration of frequency modulation of radio frequency signals through changing a width or bandwidth of different discrete noise-bands in noise-band signals transmitted in a timeslot is depicted in accordance with an illustrative embodiment. In this illustrative example, in graph **6200,** x-axis **6202** denotes frequency and y-axis **6204** denotes noise density function. y-axis **6204** can also denote noise amplitude in addition to or in place of noise density function.

As depicted, radio frequency noise-band for radio frequency noise-band signals have different discrete changes in the form of different widths. First frequency noise-band **6221** has first bandwidth or width **6231;** second frequency noise-band **6222** has second bandwidth or width **6232;** third frequency noise-band **6223** has third bandwidth or width **6233;** and fourth frequency noise-band **6224** has fourth bandwidth or width **6234.**

In this example, each of these widths correspond to a bit position or multiple-bit symbol. As depicted, when frequency noise-band **6221** having a narrow bandwidth or width **6231** is present or transmitted, it illustratively designates a multi-bit symbol such as a logical "00." When broader width **6232 of** frequency noise-band **6222** is present or transmitted, it illustratively designates a multi-bit symbol such as a logical "01." When even broader bandwidth or width **6233** of frequency noise-band **6223** is present or transmitted, it illustratively designates a multi-bit symbol such as a logical "10." When maximally broad bandwidth or width **6234** of frequency noise-band **6224** is present or transmitted, it illustratively designates a multi-bit symbol such as a logical "11." Thus, every one of the different frequency noise-bands with different bandwidths designates a different multi-bit symbol. As would be clear to those skilled in the art, more frequency noise-bands with different bandwidths than are shown here can be used to transmit more multi-bit symbols.

In this example, digital multi-bandwidth noise-band noise-shift keying **6240** can be used to modulate frequency bandwidth ranges of these frequency noise-bands of the frequency noise-band signals to different widths that correspond to digital signals being transmitted. In these examples, the different bits correspond to multiple discrete logic bits or symbols that correspond to the digital information.

Each of the frequency noise-bands with different bandwidths represents a particular bit or symbol based on the width of the frequency noise-band. If only two different bandwidths were used, each bandwidth could represent a logical "0" or logical "1." As depicted, two bit positions or symbols are represented by the 4 widths.

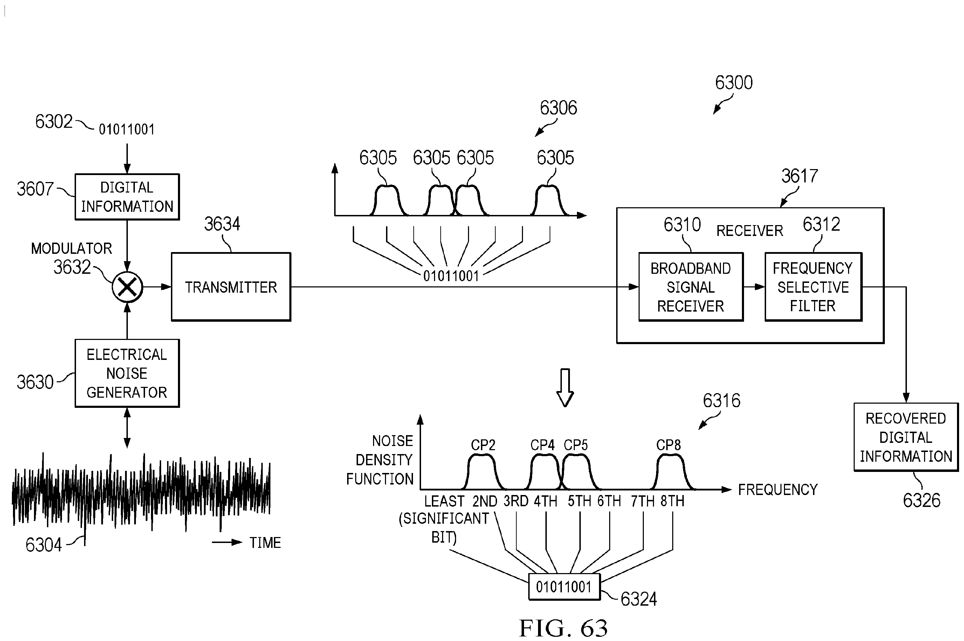

Turning next to **Figure 63****,** an illustration of information flow for transmitting digital information with what is variously called digital simultaneous multi-frequency noise-shift keying, digital simultaneous multi-frequency center point noise-shift keying, and/or digital simultaneous multi-frequency center point noise-band shift keying using a noise transmitter is depicted in accordance with an illustrative embodiment. In this example, information flow **6300** can be implemented using noise transmitter **3628** in signal transmission system **3619** for communications system **3602** in **Figure 59****.**

As depicted in **Figure 63** in this example, digital information **6302** is an example of digital information **3607** that is to be transmitted using digital simultaneous multi-frequency noise-shift keying. As depicted, digital information **6302** is in the form of bits as follows "01011001."

In this example, electric noise generator **3630** generates carrier noise-band signals **6304.** In this example, modulator **3632** is a frequency modulator that modulates or digitally "shift keys" different discrete frequency noise-bands in carrier noise-band signals **6304** to correspond to digital information **3607** by simultaneously passing different noise frequency-bands to correspond to the digital information **3607.** This modulation causes carrier noise-band signals **6304** to have different discrete frequency noise-bands in a timeslot. In alternative examples, electric noise generator **3630** and modulator **3632** comprise separate noise generators for each of individually tuned carrier noise-band signals shown in modulated carrier noise-band signals **6306.** In these alternative examples, modulator **3632** turns these tuned carrier noise-band signals on and off to correspond to digital information **3607** for digital information **6302.**

As a result, modulated carrier noise-band signals **6306** with different discrete frequency noise-bands are transmitted by transmitter **3634** in the timeslot. In this example, modulated carrier noise-band signals **6306** is similar to the four different noise-band frequencies shown in **Figure 61****,** except that modulated carrier noise-band signals **6306** in **Figure 63** shows eight discrete noise-band frequencies. These complex carrier noise-band signals have different discrete frequency noise-bands that represent different bit positions in which each bit position can be a logic "0" or a logic "1." The transmission of different discrete frequency noise-bands for frequency noise-band signals as modulated carrier noise-band signals **6306** in time slots results in digital simultaneous multi-frequency center point noise-band shift keying.

As depicted, modulated carrier noise-band signals **6306** is comprised of frequency noise-bands **6305** and is not a sinusoidal wave form. The transmissions or lack of transmissions of the different discrete noise-bands thereby modulate the modulated carrier noise-band signals **6306** to correlate to digital information **6302.**

Modulated carrier noise-band signals **6306** is an example of carrier noise-band signals **5930** with different discrete frequency noise-bands **5902** in **Figure 59****.** This modulated transmission signal has a frequency noise-band that varies in a manner that corresponds to digital information **6302.**

As depicted, receiver **3617** includes broadband signal receiver **6310** and frequency selective filter **6312.** Broadband signal receiver **6310** is at least one of a hardware device or software device that is configured to receive and process signals across a wide range of frequencies. In this example, broadband signal receiver **6310** receives modulated carrier noise-band signal **6306.**

This reception of modulated carrier noise-band signals **6306** results in received signal **6316.** As depicted in this example, received signal **6316** is the same or substantially the same as modulated carrier noise-band signals **6306.** In this example, a noise floor can also be present in received signal **6316** from broadband signal receiver **6310.** The noise floor can be from extraneous radio frequency noise sources or noise sources in broadband signal receiver **6310.**

In this example, frequency selective filter **6312** can detect frequency changes in the frequency noise-band for received signal **6316** to recover multiple discrete logic bits from received signal **6316.**

For example, frequency selective filter **6312** can be implemented using a frequency comb filter that is comprised of bandpass filters, amplitude detectors, and a frequency response analyzer. In this illustrative example, the bandpass filters pass selected ranges of frequencies. Each bandpass filter is configured to pass frequencies of a particular range. The amplitude detectors have inputs connected to the output of the bandpass filters. The amplitude detectors generate output signals in response to detecting signal amplitudes greater than a threshold. In this illustrative example, an amplitude detector is connected to each of the bandpass filters. As a result, amplitude detectors can indicate when different ranges of frequencies are detected from the received signal **6316.** The amplitude detectors can output a logic "0" or logic "1" based on the amplitude of the signal received from an associated bandpass filter.

Thus, frequency selective filter **6312** can detect discrete frequency noise-bands of received signal **6316** to generate multiple discrete logic bits **6324.** In this example, multiple discrete logic bits **6324** output from frequency selective filter **6312** forms recovered digital information **6326.** As depicted in this example, multiple discrete logic bits **6324** for recovered digital information **6326** are the same as the multiple discrete logic bits in digital information **6302** in digital information **3607.**

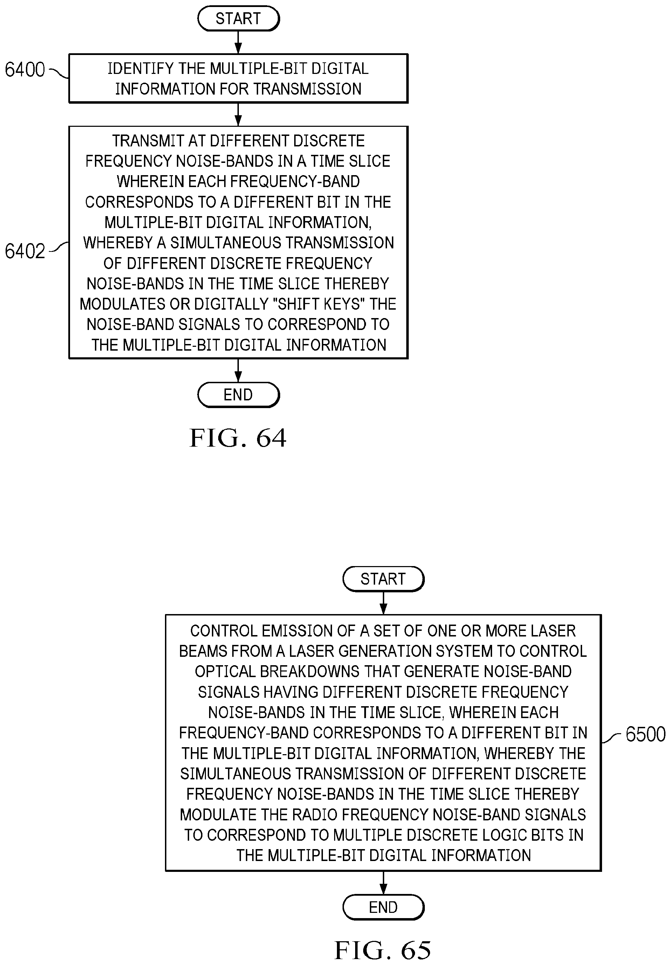

Turning next to **Figure 64****,** an illustration of a flowchart for communicating multiple-bit digital information is depicted in accordance with an illustrative embodiment. The process in **Figure 64** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** in **Figure 59****.**

The process begins by identifying the multiple-bit digital information for transmission (operation **6400**). The process transmits at different discrete frequency noise-bands in a time slice wherein each frequency-band corresponds to a different bit in the multiple-bit digital information, whereby a simultaneous transmission of different discrete frequency noise-bands in the time slice thereby modulates or digitally "shift keys" the noise-band signals to correspond to the multiple-bit digital information (operation **6402**). The process terminates thereafter. The different discrete frequency noise-bands have changes to at least one of a width or a position of the different discrete frequency noise-bands of the noise-band signals that thereby modulates or digitally "shift keys" the noise-band signals to correspond to the multiple-bit digital information.

With reference next to **Figure 65****,** an illustration of a flowchart of a process for transmitting noise signals using a laser generation system is depicted in accordance with an illustrative embodiment. The process in this figure is an example of an implementation for operation **6402** in **Figure 64****.** In this example, the noise signals are radio frequency noise signals.

The process controls emission of a set of one or more laser beams from a laser generation system to control optical breakdowns that generate noise-band signals having different discrete frequency noise-bands in the time slice, wherein each frequency-band corresponds to a different bit in the multiple-bit digital information, whereby the simultaneous transmission of different discrete frequency noise-bands in the time slice thereby modulate the radio frequency noise-band signals to correspond to multiple discrete logic bits in the multiple-bit digital information (operation **6500**). The process terminates thereafter.

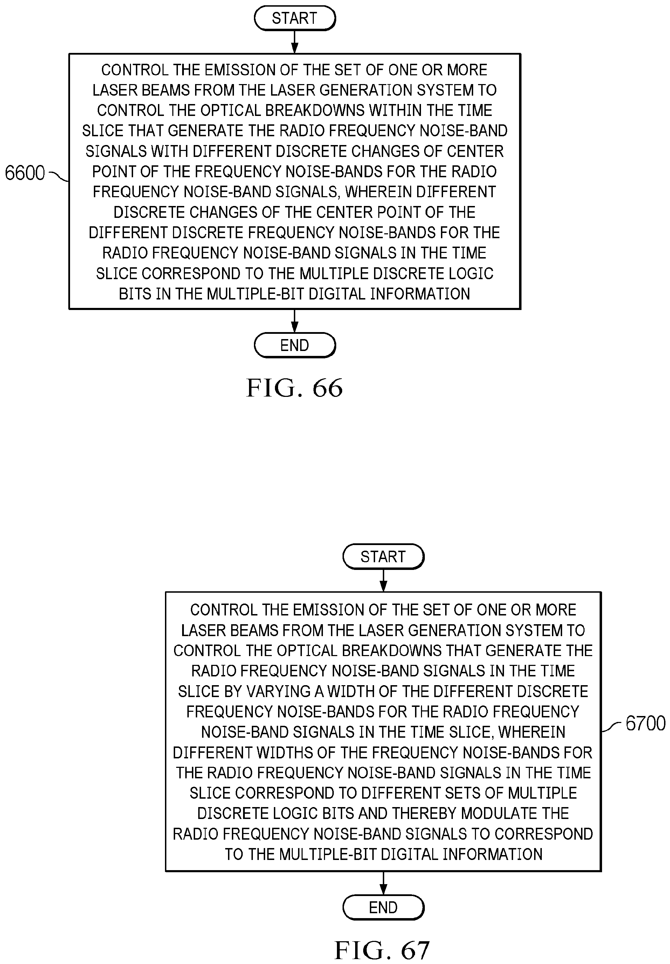

Next in **Figure 66****,** an illustration of a flowchart of a process for controlling emission of a set of one or more laser beams is depicted in accordance with an illustrative embodiment. The process in this figure is an example of an implementation for operation **6500** in **Figure 65****.**

The process controls the emission of the set of one or more laser beams from the laser generation system to control the optical breakdowns within the time slice that generate the radio frequency noise-band signals with different discrete changes of center point of the frequency noise-bands for the radio frequency noise-band signals, wherein different discrete changes of the center point of the different discrete frequency noise-bands for the radio frequency noise-band signals in the time slice correspond to the multiple discrete logic bits in the multiple-bit digital information (operation **6600**). The process terminates thereafter.

In **Figure 67** an illustration of a flowchart of a process for controlling emission of a set of one or more laser beams is depicted in accordance with an illustrative embodiment. The process in this figure is an example of an implementation for operation **6500** in **Figure 65****.**

The process controls the emission of the set of one or more laser beams from the laser generation system to control the optical breakdowns that generate the radio frequency noise-band signals in the time slice by varying a width of the different discrete frequency noise-bands for the radio frequency noise-band signals in the time slice, wherein different widths of the frequency noise-bands for the radio frequency noise-band signals in the time slice correspond to different sets of multiple discrete logic bits and thereby modulate the radio frequency noise-band signals to correspond to the multiple-bit digital information (operation **6700**). The process terminates thereafter.

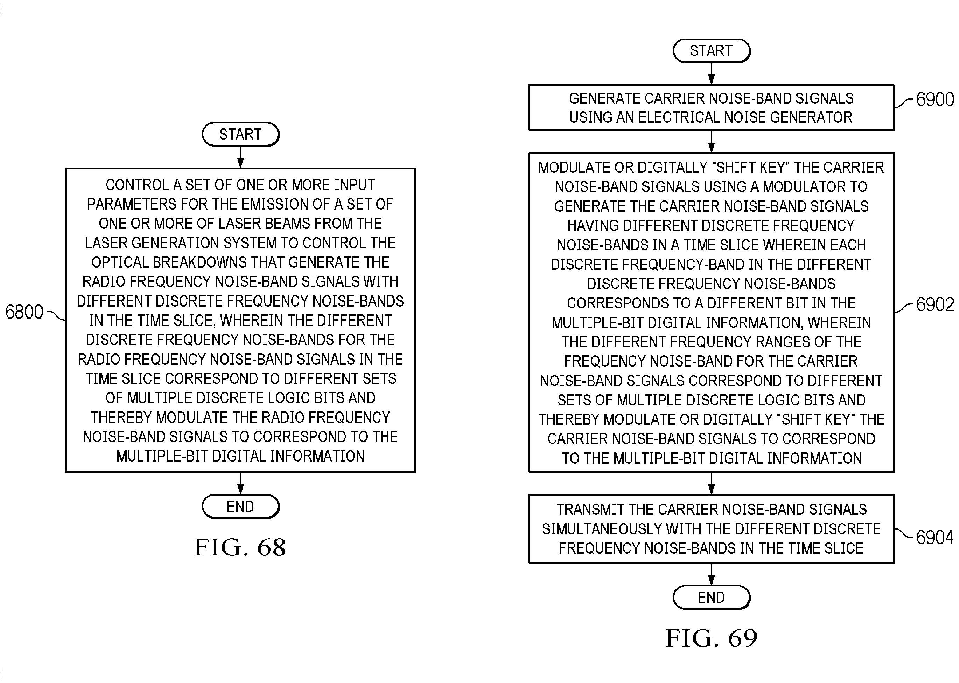

Turning now to **Figure 68****,** an illustration of a flowchart of a process for controlling emission of a set of one or more laser beams is depicted in accordance with an illustrative embodiment. The process in this figure is an example of an implementation for operation **6500** in **Figure 65****.**

The process controls a set of one or more input parameters for the emission of a set of one or more of laser beams from the laser generation system to control the optical breakdowns that generate the radio frequency noise-band signals with different discrete frequency noise-bands in the time slice, wherein the different discrete frequency noise-bands for the radio frequency noise-band signals in the time slice correspond to different sets of multiple discrete logic bits and thereby modulate the radio frequency noise-band signals to correspond to the multiple-bit digital information (operation **6800**). The process terminates thereafter.

With reference now to **Figure 69****,** an illustration of a flowchart of a process for transmitting noise signals using a noise transmitter is depicted in accordance with an illustrative embodiment. The process in this figure is an example of an implementation for operation **6402** in **Figure 64****.**

The process begins by generating carrier noise-band signals using an electric noise generator **(6900).** The process modulates or digitally "shift keys" the carrier noise-band signals using a modulator to generate the carrier noise-band signals having different discrete frequency noise-bands in a time slice wherein each discrete frequency-band in the different discrete frequency noise-bands corresponds to a different bit in the multiple-bit digital information, wherein the different frequency ranges of the frequency noise-band for the carrier noise-band signals correspond to different sets of multiple discrete logic bits and thereby modulate or digitally "shift key" the carrier noise-band signals to correspond to the multiple-bit digital information (operation **6902**).

The process transmits the carrier noise-band signals simultaneously with the different discrete frequency noise-bands in the time slice (operation **6904**). The process terminates thereafter.

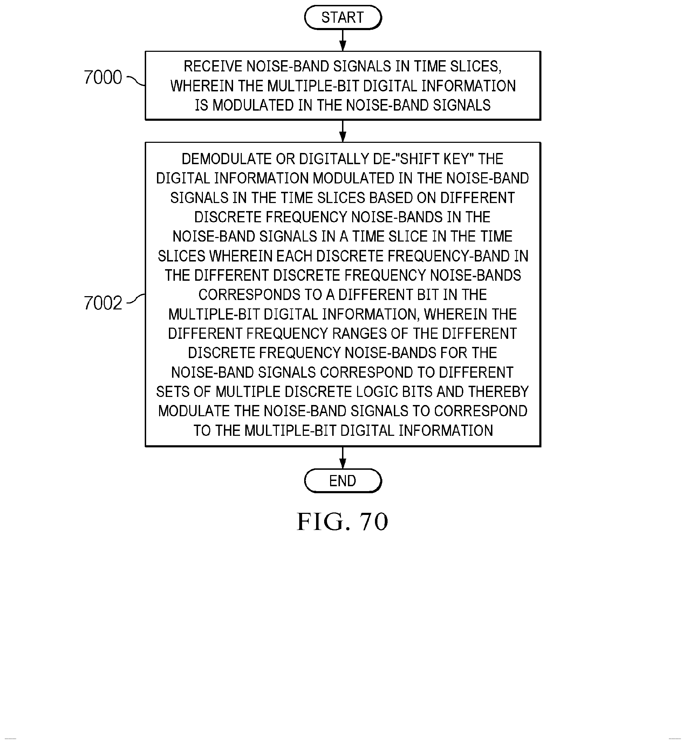

Turning next to **Figure 70****,** an illustration of a flowchart of process for communicating multiple-bit digital information is depicted in accordance with an illustrative embodiment. The process in **Figure 70** can be implemented in hardware, software, or both. When implemented in software, the process can take the form of program instructions that are run by one or more processor units located in one or more hardware devices in one or more computer systems. For example, the process can be implemented in receiver **3617** in **Figure 59****.**

The process receives noise-band signals in time slices, wherein the multiple-bit digital information is modulated in the noise-band signals (operation 7000). The process demodulates or digitally de-"shift key" the digital information modulated in the noise-band signals in the time slices based on different discrete frequency noise-bands in the noise-band signals in a time slice in the time slices wherein each discrete frequency-band in the different discrete frequency noise-bands corresponds to a different bit in the multiple-bit digital information, wherein the different frequency ranges of the different discrete frequency noise-bands for the noise-band signals correspond to different sets of multiple discrete logic bits and thereby modulate the noise-band signals to correspond to the multiple-bit digital information (operation **7002**). The process terminates thereafter. In this example, the changes in the frequency noise-band are changes in a frequency-range of the frequency noise-band of the noise-band signals.

Some features of the illustrative examples for modulating digital information **3607** using digital simultaneous multi-frequency center point noise-band shift keying **3693** in communications system **3602** are described in the following clauses. These clauses are examples of features and are not intended to limit other illustrative examples.

A communications system comprising:
a computer system; and
a communications manager in the computer system, wherein the communications manager is configured to:
   identify multiple-bit digital information for transmission; and
   transmit noise-band signals having different discrete frequency noise-bands in a time slice wherein each discrete frequency-band in the different discrete frequency noise-bands corresponds to a different bit in the multiple-bit digital information, whereby a simultaneous transmission of different discrete frequency noise-bands in the time slice thereby modulates the noise-band signals to correspond to the multiple-bit digital information.

2. The communications system of clause 1, wherein the noise-band signals are radio frequency noise-band signals and further comprising:
a laser generation system configured to emit a set of one or more laser beams, wherein in transmitting the noise-band signals, the communications manager is configured to:
control an emission of a set of one or more laser beams from the laser generation system to control optical breakdowns that generate the radio frequency noise-band signals having different discrete frequency noise-bands in the time slice, wherein each frequency noise-band in the different discrete frequency noise-bands corresponds to the different bit in the multiple-bit digital information, whereby the simultaneous transmission of the different discrete frequency noise-bands in the time slice thereby modulates the radio frequency noise-band signals to correspond to multiple discrete logic bits in the multiple-bit digital information.

3. The communications system of clause 2, wherein in controlling the emission of the set of one or more laser beams, the communications manager is configured to:
control the emission of the set of one or more laser beams from the laser generation system to control the optical breakdowns within the time slice that generate the radio frequency noise-band signals with different discrete changes of a center point of the different discrete frequency noise-bands for the radio frequency noise-band signals, wherein the different discrete changes of the center point of the different discrete frequency noise-bands for the radio frequency noise-band signals in the time slice correspond to the multiple discrete logic bits in the multiple-bit digital information.

4. The communications system of clause 2, wherein in controlling the emission of the set of one or more laser beams, the communications manager is configured to:
control the emission of the set of one or more laser beams from the laser generation system to control the optical breakdowns that generate the radio frequency noise-band signals in the time slice by varying a width of the different discrete frequency noise-bands for the radio frequency noise-band signals in the time slice, wherein different widths of the different discrete frequency noise-bands for the radio frequency noise-band signals in the time slice correspond to multiple discrete logic bits and thereby modulate the radio frequency noise-band signals to correspond to the multiple-bit digital information.

5. The communications system of clause 2, wherein in controlling the emission of the set of one or more laser beams, the communications manager is configured to:
control a set of one or more input parameters for the emission of a set of one or more of laser beams from the laser generation system to control the optical breakdowns that generate the radio frequency noise-band signals with different discrete changes of the different discrete frequency noise-bands in the time slice, wherein the different discrete frequency noise-bands for the radio frequency noise-band signals in the time slice correspond to different sets of multiple discrete logic bits and thereby modulate the radio frequency noise-band signals to correspond to the multiple-bit digital information.

6. The communications system of clause 1 further comprising:
an electric noise generator configured to generate a carrier noise-band signal; and
a modulator; and
a transmitter,
wherein in transmitting the noise-band signals, the communications manager is configured to:
   generate the carrier noise-band signals using the electric noise generator;
   modulate the carrier noise-band signals using the modulator to generate the carrier noise-band signals having different discrete frequency noise-bands in a time slice wherein each discrete frequency noise-band in the different discrete frequency noise-bands corresponds to a different bit in the multiple-bit digital information, wherein different frequency ranges of the different discrete frequency noise-bands for the carrier noise-band signals correspond to different sets of multiple discrete logic bits and thereby modulate the carrier noise-band signals to correspond to the multiple-bit digital information; and
   transmit the carrier noise-band signals simultaneously with the different discrete frequency noise-bands in the time slice.

7. The communications system of clause 6, wherein the carrier noise-band signals are selected from at least one of electromagnetic frequency noise signals, radio frequency noise signals, microwave frequency noise signals, audio frequency noise signals, ultrasonic frequency noise signals, ultra-low frequency noise signals, very low frequency noise-band signals, underwater frequency noise signals, or optical frequency noise signals.

8. The communications system of clause 1, wherein the different discrete frequency noise-bands have changes to at least one of a width or a position of the different discrete frequency noise-bands of the noise-band signals that thereby modulates the noise-band signals to correspond to the multiple-bit digital information.

9. A method for communicating multiple-bit digital information, the method comprising:
identifying the multiple-bit digital information for transmission; and
transmitting at different discrete frequency noise-bands in a time slice wherein each frequency-band corresponds to a different bit in the multiple-bit digital information, whereby a simultaneous transmission of different discrete frequency noise-bands in the time slice thereby modulates the noise-band signals to correspond to the multiple-bit digital information.

10. The method of clause 9, wherein the noise-band signals are radio frequency noise-band signals and further comprising:
controlling emission of a set of one or more laser beams from a laser generation system to control optical breakdowns that generate noise-band signals having different discrete frequency noise-bands in the time slice, wherein each frequency-band corresponds to the different bit in the multiple-bit digital information, whereby the simultaneous transmission of different discrete frequency noise-bands in the time slice thereby modulate the radio frequency noise-band signals to correspond to multiple discrete logic bits in the multiple-bit digital information.

11. The method of clause 10, wherein said controlling the emission of the set of one or more laser beams comprises:
controlling the emission of the set of one or more laser beams from the laser generation system to control the optical breakdowns within the time slice that generate the radio frequency noise-band signals with different discrete changes of center point of the frequency noise-bands for the radio frequency noise-band signals, wherein the different discrete changes of the center point of the different discrete frequency noise-bands for the radio frequency noise-band signals in the time slice correspond to the multiple discrete logic bits in the multiple-bit digital information.

12. The method of clause 10, wherein said controlling the emission of the set of one or more laser beams comprises:
controlling the emission of the set of one or more laser beams from the laser generation system to control the optical breakdowns that generate the radio frequency noise-band signals in the time slice by varying a width the different discrete frequency noise-bands for the radio frequency noise-band signals in the time slice, wherein different widths of the frequency noise-bands for the radio frequency noise-band signals in the time slice correspond to different sets of multiple discrete logic bits and thereby modulate the radio frequency noise-band signals to correspond to the multiple-bit digital information.

13. The method of clause 10, wherein said controlling the emission of the set of one or more laser beams comprises:
controlling a set of one or more input parameters for the emission of a set of one or more of laser beams from the laser generation system to control the optical breakdowns that generate the radio frequency noise-band signals with different discrete frequency noise-bands in the time slice, wherein the different discrete frequency noise-bands for the radio frequency noise-band signals in the time slice correspond to different sets of multiple discrete logic bits and thereby modulate the radio frequency noise-band signals to correspond to the multiple-bit digital information.

14. The method of clause 9, wherein said transmitting the noise-band signals comprises:
generating carrier noise-band signals using an electric noise generator;
modulating the carrier noise-band signals using a modulator to generate the carrier noise-band signals having different discrete frequency noise-bands in a time slice wherein each discrete frequency-band in the different discrete frequency noise-bands corresponds to a different bit in the multiple-bit digital information, wherein different frequency ranges of the frequency noise-band for the carrier noise-band signals correspond to different sets of multiple discrete logic bits and thereby modulate the carrier noise-band signals to correspond to the multiple-bit digital information; and
transmitting the carrier noise-band signals simultaneously with the different discrete frequency noise-bands in the time slice.

15. The method of clause 9, wherein the noise-band signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals.

16. The method of clause 9, wherein the different discrete frequency noise-bands have changes to at least one of a width or a position of the different discrete frequency noise-bands of the noise-band signals that thereby modulates the noise-band signals to correspond to the multiple-bit digital information.

17. A method for communicating multiple-bit digital information, the method comprising:
receiving noise-band signals in time slices, wherein the multiple-bit digital information is modulated in the noise-band signals; and
demodulating the digital information modulated in the noise-band signals in the time slices based on different discrete frequency noise-bands in the noise-band signals in a time slice in the time slices wherein each discrete frequency-band in the different discrete frequency noise-bands corresponds to a different bit in the multiple-bit digital information, wherein different frequency ranges of the different discrete frequency noise-bands for the noise-band signals correspond to different sets of multiple discrete logic bits and thereby modulate the noise-band signals to correspond to the multiple-bit digital information.

18. The method of clause 17, wherein the different discrete frequency noise-bands have changes in a frequency range of the different discrete frequency noise-bands of the noise-band signals.

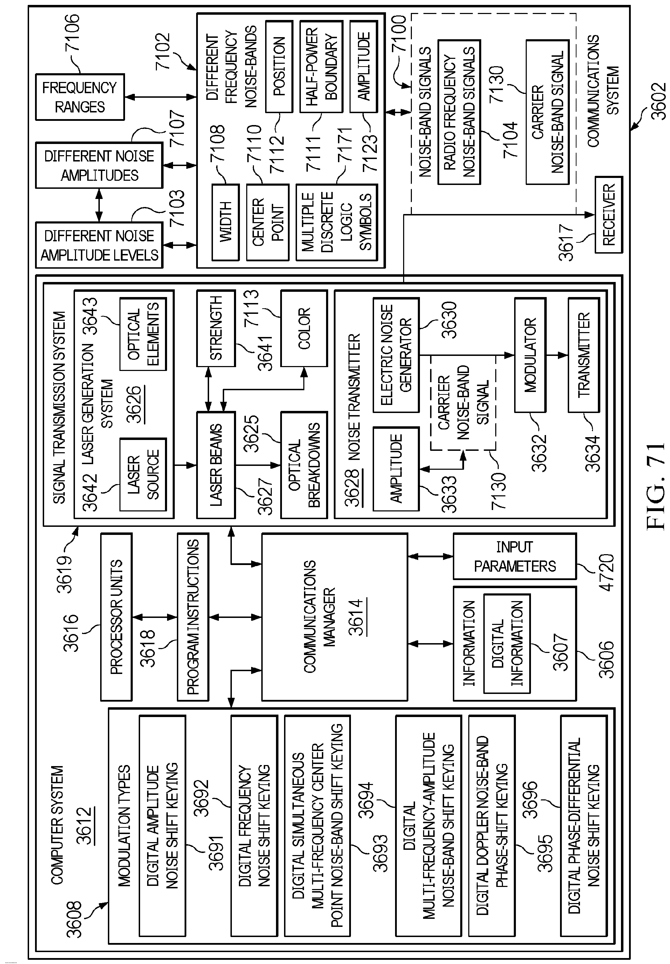

Turning now to **Figure 71****,** an illustration of a block diagram of a communication system for transmitting noise signals using Digital Multi-Frequency-Amplitude Noise-Band Shift Keying (DMFANBSK) **3694** is depicted in accordance with an illustrative embodiment. In this illustrative example, communications system **3602** operates to modulate or "shift-key" noise-band signals **7100** to correspond to information **3606** using digital multi-frequency-amplitude noise-band shift keying **3694.** Noise-band signals **7100** can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, optical frequency noise signals including at least one of visible or non-visible light, or other types of noise signals.

In this example, communications manager **3614** identifies digital information **3607** for transmission. Additionally, communications manager **3614** transmits noise-band signals **7100** with different discrete changes of different frequency noise-bands **7102** and different noise amplitude levels **7103** of different frequency noise-bands **7102** that thereby modulate noise-band signals **7100** to correspond to the digital information **3607.**

Different discrete changes to at least one of different frequency noise-bands **7102** or to different noise amplitude levels **7103** means that the changes to at least one of frequencies or amplitudes of different frequency noise-bands **7102** have a shift that is considered to be instantaneous without gradual or continuous variation used with digital signals. For example, a change in bandwidth or width **7108,** frequency location or position **7112,** amplitude **7123** of different frequency noise-bands **7102** changes the noise-band characteristics from one noise-band to another noise-band in different frequency noise-bands **7102** with a sufficiently clear shift in these parameters such that electrical devices such as a receiver receiving noise-band signals with frequency noise-band having a discrete change can determine the point where the change occurs for use in identifying digital information.

In these examples, a discrete change means a change that is a distinct and detectable variation or difference in the noise-band signal which corresponds to discrete digital information, as opposed to a gradual change which typically corresponds to analog information. For example, a discrete change in the frequency of a noise-band means that a receiver can determine or detect that a distinct variation or difference in the noise-band signal frequency has occurred which corresponds to discrete digital information. In another example, a discrete change in the amplitude of a noise-band means that a receiver can determine or detect that a distinct variation or difference in the noise-band signal amplitude has occurred which corresponds to discrete digital information. In another example, a discrete change in the center-point of a noise-band means that a receiver can determine or detect that a distinct variation or difference in the center point of the noise-band signal has occurred which corresponds to discrete digital information. In another example, a discrete change in the bandwidth or width of a noise-band means that a receiver can determine or detect that a distinct variation or difference in the bandwidth or width of the noise-band signal has occurred which corresponds to discrete digital information. In another example, a discrete change in the slope, boundary, or half-power point of a noise-band means that a receiver can determine or detect that a distinct variation or difference in the slope, boundary, or half-power point of the noise-band signal has occurred which corresponds to discrete digital information.

In other words, different discrete changes to frequency ranges **7106** of different frequency noise-bands **7102** means that frequency ranges **7106** is changed for one or more of different frequency noise-bands **7102.** These changes are made to have different frequency noise-bands **7102** correspond to digital information **3607.** These different discrete changes made to frequency ranges **7106** of noise-band signals **7100** cause the different discrete changes to frequency ranges **7106** of different frequency noise-bands **7102** to correspond to or correlate to, either directly or indirectly, the same or similar pattern as digital information **3607.**

The control of the different discrete changes to frequency ranges **7106** of different frequency noise-bands **7102** do not necessarily correlate exactly to the varying digital information **3607.** In alternative examples, the control of the different discrete changes to frequency ranges **7106** of different frequency noise-bands **7102** may be modified in such a way that the final output noise-modulated signal most closely corresponds to digital information **3607** such that it may be received with minimum distortion by a receiver **3617** in **Figure 71****.**

In this example, different frequency noise-bands **7102** are groupings of noise-band signals **7100.** For example, different frequency noise-bands **7102** can be at least one of "clusters of noise," "noise spectra," noise spectrum," "a frequency band of noise," "a pass-band of noise," "a band-pass of noise," "a frequency range of noise," or a "noise frequency range" which can have a lower half-power boundary and an upper half-power boundary. Different frequency noise-bands **7102** for noise-band signals **7100** can be changed in a manner that corresponds to digital information **3607.** For example, noise-band signals **7100** can be modulated such that different frequency noise-bands **7102** change in at least one of width **7108** (bandwidth or frequency bandwidth), position **7112,** center point **7110,** or half-power boundary **7111.**

For example, width **7108** of different frequency noise-bands **7102** can be changed by using different discrete changes to frequency ranges **7106** of different frequency noise-bands **7102.** In this example, a change in a frequency noise-band in different frequency noise-bands **7102** means that the boundaries of frequencies encompassed by the different frequency noise-bands can change such that width of that frequency noise-band changes in size.

In this example, different frequency noise-bands **7102** can have different starting, initial, and/or lower frequency boundary changes and different ending, finishing, and/or upper frequency boundary changes. In this manner, noise-band signals **7100** can be modulated to have different discrete changes of different frequency noise-bands **7102** of noise-band signals **7100** in a manner that causes noise-band signals **7100** to correspond to or correlate to, either directly or indirectly, digital information **3607.** In a similar fashion, changes to amplitude **7123** of different frequency noise-bands **7102** can result in different noise amplitude levels **7103** that also correlate directly or indirectly to digital information **3607.**

In these examples, the different discrete changes of the different frequency noise-bands **7102** and the different noise amplitude levels **7103** of different frequency noise-bands **7102** correspond to multiple discrete logic symbols in digital information **3607.** For example, the different discrete changes can be at least one of position **7112,** width **7108,** amplitude of the different frequency noise-bands **7102,** or half-power boundary **7111.**

In one illustrative example, the use of two different frequency noise-bands and two different amplitudes of the different frequency noise-bands can be used to represent multiple discrete logic symbols such as "00," "01," "10," and "11." In this example, different frequency noise-bands **7102** can have multiple frequency and multiple amplitude combinations to represent the multiple discrete logic symbols.

In one illustrative example, this transmission can be performed by laser generation system **3626.** With this example, communications manager **3614** controls an emission of a set of one or more laser beams **3627** from laser generation system **3626** to at least one of causing or controlling optical breakdowns **3625** that generate noise-band signals **7100** in the form of radio frequency noise-band signals **7104** with the different discrete changes of different frequency noise-bands **7102** and different noise amplitude levels **7103** of different frequency noise-bands **7102** that thereby modulate the radio frequency noise-band signals **7104** to correspond to digital information **3607.**

In this example, at least one of width **7108,** position **7112,** or center point **7110,** of different frequency noise-bands **7102** can be varied to have different discrete changes to cause radio frequency noise-band signals **7104** to correspond to digital information **3607.** Position **7112** for each of different frequency noise-bands **7102** can be identified using center point **7110** of each of different frequency noise-bands **7102.** The change of a beginning, initial, and/or lower frequency boundary and/or the change of an ending, finishing, and/or upper frequency boundary in different frequency noise-bands **7102** cans result in different discrete changes for at least one of width **7108** or position **7112** of different frequency noise-bands **7102.** Thus, in this example, the different discrete changes are present between the ranges of frequencies of different frequency noise-bands **7102** for noise-band signals **7100** that thereby modulate noise-band signals **7100** to correspond to digital information **3607.**

Further in this example, different noise amplitude levels **7103** can be changed for different frequency noise-bands **7102** in combination with changing frequency ranges **7106** for different frequency noise-bands **7102** to thereby modulate noise-band signals **7100** to correspond to digital information **3607.**

In one illustrative example, communications manager **3614** controls the emission of the set of one or more laser beams **3627** by controlling the emission of the set of one or more laser beams **3627** from laser generation system **3626** to at least one of cause or control optical breakdowns **3625** that generate radio frequency noise-band signals **7104** by varying the frequency location of center point **7110** of different frequency noise-bands **7102** for radio frequency noise-band signals **7104** and varying different noise amplitude levels **7103** of different frequency noise-bands **7102** for radio frequency noise-band signals **7104** that thereby modulates or digitally "shift keys" radio frequency noise-band signals **7104** to correspond to digital information **3607.**

The particular frequency location of center point **7110** and amplitude **7123** for a frequency noise-band can correlate to a logic symbol in multiple discrete logic symbols **7171** for that frequency noise-band. At least one of the frequency locations of center point **7110** or the amplitude **7123** can be different for a particular frequency noise-band relative to other center points and other amplitudes for other frequency noise-bands.

These differences in the positions of the center points and amplitudes for the different frequency bands correlate to different discrete logic symbols in multiple discrete logic symbols **7171.** In this example, a variation of the frequency location of center point **7110** of different frequency noise-bands **7102** and different noise amplitude levels **7103** for radio frequency noise-band signals **7104** thereby modulates or digitally "shift keys" radio frequency noise-band signals **7104** to correspond to digital information **3607.**

In another illustrative example, communications manager **3614** can control the emission of the set of one or more laser beams **3627** from laser generation system **3626** to at least one of cause or control optical breakdowns **3625** that generate radio frequency noise-band signals **7104** by varying width **7108** of different frequency noise-bands **7102** for radio frequency noise-band signals **7104** and varying different noise amplitude levels **7103** of the different frequency noise-bands **7102** for radio frequency noise-band signals **7104** that thereby modulates or digitally "shift keys" the radio frequency noise-band signals **7104** to correspond to digital information **3607.**

In other words, the width **7108** of radio frequency noise-band signals **7104** in different frequency noise-bands **7102** can be increased and decreased to modulate radio frequency noise-band signals **7104** to correspond to digital information **3607.** In these examples, the change in width **7108** can occur by changing the starting, initial, and/or lower frequency boundaries and/or the ending, finishing, and/or upper frequency boundaries in a frequency noise-band.

In another example, communications manager **3614** controls a set of one or more input parameters **4720** for the emission of a set of one or more of laser beams **3627** from the laser generation system **3626** to at least one of cause or control optical breakdowns **3625** that generate radio frequency noise-band signals **7104** with the different discrete changes of different frequency noise-bands **7102** and different noise amplitude levels **7103** of the different noise amplitudes **7107** of different frequency noise-bands **7102** that thereby modulates or digitally "shift keys" radio frequency noise-band signals **7104** to correspond to or correlate with, directly or indirectly, digital information **3607.**

With this example, the set of one or more input parameters **4720** can take a number of different forms. For example, the set of one or more input parameters **4720** can, for example, be selected from one or more of, a mirror orientation, a deformable mirror position, a lens position, a lens, a deformable lens position or some other element that can be positioned in a manner that changes an optical path length (OPL) for the set of one or more laser beams **3627.** In this example, the path length change can be both the optical path length and/or the physical path length. Another input parameter that can be changed in this example is the index of refraction (IoR). The optical path length is inversely proportional to the index of refraction.

These changes to input parameters **4720** can change different frequency noise-bands **7102** of radio frequency noise-band signals **7104.** For example, changes can be made to at least one of width **7108** (bandwidth or frequency bandwidth), position **7112,** amplitude **7123,** center point **7110,** and half-power boundary **7111** of different frequency noise-bands **7102** for radio frequency noise-band signals **7104.** In other words, different noise-bands can have different changes in at least one of position **7112,** width **7108,** amplitude **7123,** center point **7110,** and half-power boundary **7111.**

In controlling the emission of the set of one or more laser beams **3627,** communications manager **3614** can control color **7113** of the set of one or more laser beams emitted from laser generation system **3626** to control optical breakdowns **3625** that generate radio frequency noise-band signals **7104** by varying width **7108** of different frequency noise-bands **7102** for radio frequency noise-band signals **7104** and varying noise amplitude levels of different frequency noise-bands **7102** for radio frequency noise-band signals **7104** that thereby modulates or digitally "shift keys" radio frequency noise-band signals **7104** to correspond to the digital information **3607.**

In another example, communications manager **3614** can control noise transmitter **3628** in signal transmission system **3619** to transmit digital information **3607.** For example, in generating noise-band signals **7100,** communications manager **3614** can generate carrier noise-band signal **7130** using electric noise generator **3630.** Communications manager **3614** can modulate carrier noise-band signal **7130** using modulator **3632** to change different frequency noise-bands **7102** of carrier noise-band signal **7130.**

In this example, different discrete changes can be made to different frequency noise-bands **7102.** These different discrete changes to frequency ranges **7106** and different noise amplitudes **7107** of different frequency noise-bands **7102** for carrier noise-band signal **7130** thereby modulate carrier noise-band signal **7130** to correspond to digital information **3607.**

In this example, communications manager **3614** transmits carrier noise-band signal **7130** with different discrete changes to frequency ranges **7106** of different frequency noise-bands **7102.** In this example, these changes cause carrier noise-band signal **7130** to correspond to or correlate with, directly or indirectly, digital information **3607.** This type of modulation of carrier noise-band signal **7130** can cause the different discrete changes that can be at least one of width **7108** or position **7112** of different frequency noise-bands **7102** for carrier noise-band signal **7130.**

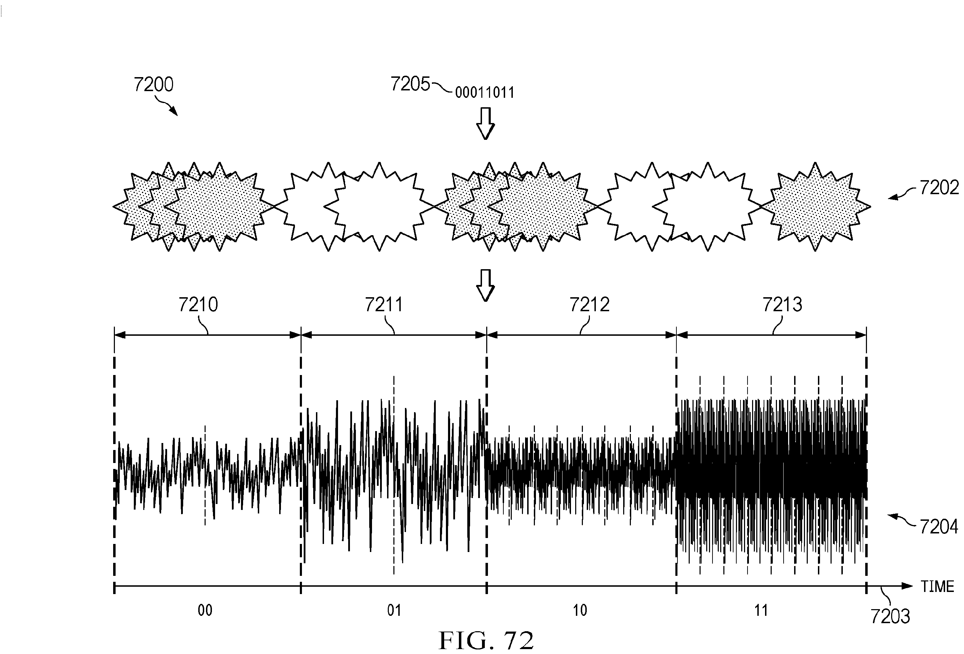

Turning next to **Figure 72****,** an illustration of information flow **7200** for transmitting digital information with Digital Multi-Frequency-Amplitude Noise-Band Shift Keying (DMFANBSK) noise modulation using a laser generation system is depicted in accordance with an illustrative embodiment. In this example, information flow **7200** can be implemented using laser generation system **3626** in signal transmission system **3619** for communications system **3602** in **Figure 71****.** In this example, in **Figure 72****,** optical breakdowns **7202** are generated using digital information **7205.** In this example, optical breakdowns **7202** are at least one of controlled or caused to generate radio frequency noise-band signals **7104** in **Figure 71** using digital information.

In this example, in **Figure 72****,** radio frequency noise-band signals **7204** resulting from optical breakdowns **7202** have different frequency noise-bands with different noise amplitude levels shown in the time-domain as shown by x-axis **7203.** In this example, two different frequencies and two different amplitudes are generated in radio frequency noise-band signals **7204.**

As depicted in this example, frequency noise-band **7210** has lower frequency characteristics and a lower noise amplitude level that corresponds to "00," frequency noise-band **7211** has lower frequency characteristics and a higher noise amplitude level that corresponds to "01," frequency noise-band **7212** has higher frequency characteristics and a lower noise amplitude level that corresponds to "10," frequency noise-band **7213** has higher frequency characteristics and a higher noise amplitude level that corresponds to "11." Thus, a logic symbol of two bits (four digits) can be transmitted with two different frequencies and two different amplitude levels. Clearly, multiple different frequencies and multiple different amplitudes can be used to transmit many more simultaneous bits and symbols.

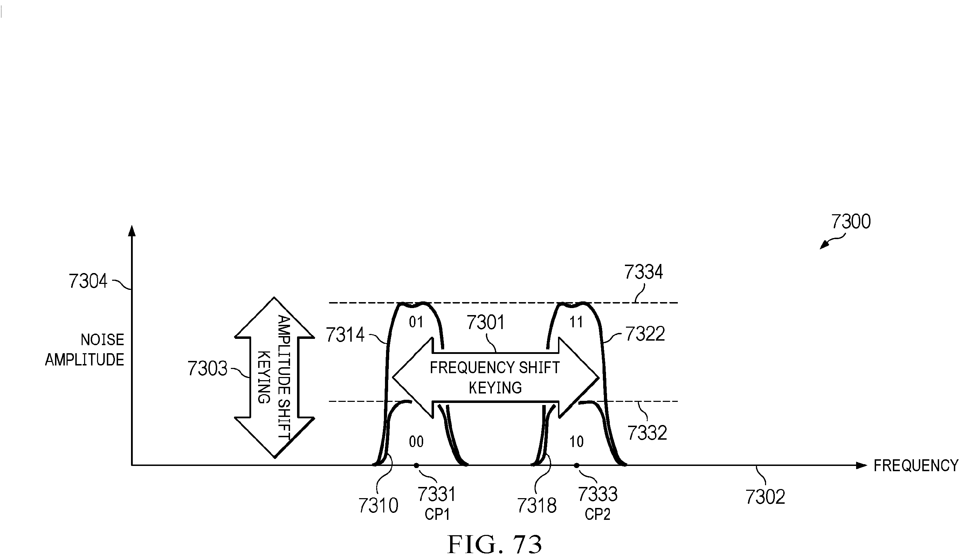

Turning next to **Figure 73****,** an illustration of Digital Multi-Frequency-Amplitude Noise-Band Shift Keying of radio frequency signals through changing a frequency location of the center point and an amplitude of different discrete frequency noise-bands in radio frequency noise-band signals is depicted in accordance with an illustrative embodiment. In this illustrative example, in graph **7300,** x-axis **7302** denotes frequency and y-axis **7304** denotes noise amplitude, noise power, and/or noise power density.

In this example, two frequencies and two amplitude levels are used to modulate or digitally "shift key" different frequency and amplitude noise-bands with frequency noise-band signals to modulate or digitally "shift key" the frequency noise-band signals to correspond to digital information. In this example, frequency shift keying **7301** and amplitude shift keying **7303** are used to modulate or "shift key" these different frequency noise-bands for the noise-band signals.

As depicted in the example, first frequency noise-band **7310** has first center point CP1 **7331** and first amplitude **7332** and second frequency noise-band **7314** has first center point CP1 **7331** and second amplitude **7334.** In this example, third frequency noise-band **7318** has second center point CP1 **7333** and first amplitude **7332** and fourth frequency noise-band **7322** has second center point CP2 **7333** and second amplitude **7334.** The discrete changes between different center points and amplitudes represent different discrete logic symbols with different bit patterns. For example, first frequency noise-band **7310** represents "00," second frequency noise-band **7314** represents "01," third frequency noise-band **7318** represents "10," and fourth frequency noise-band **7322** represents "11."

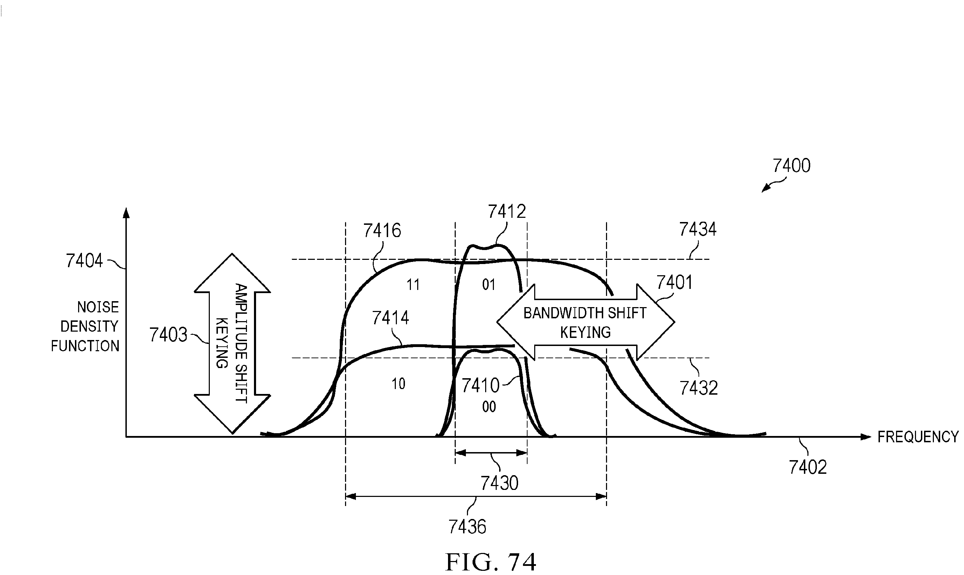

In **Figure 74****,** an illustration of Digital Multi-Frequency-Amplitude Noise-Band Shift Keying of radio frequency signals through changing a width or bandwidth and an amplitude of different discrete noise-bands in noise-band signals transmitted in a timeslot is depicted in accordance with an illustrative embodiment. In this illustrative example, in graph **7400,** x-axis **7402** denotes frequency and y-axis **7404** denotes noise, noise amplitude, noise power, and/or noise density function.

In this example, the width and the amplitude of different frequency noise-bands of noise-band signals are modulated or "shift keyed" to generate noise-band signals that correspond to digital information. This example, bandwidth shift keying **7401** is used modulate or digitally "shift key" the bandwidth of the different frequency noise-bands and amplitude shift keying **7403** is used to modulate the amplitude of the different frequency noise-bands.

As depicted, first frequency noise-band **7410** has first width **7430** and first amplitude **7432,** and second frequency noise-band **7412** has first width **7430** and second amplitude **7434.** Further, in this example, third frequency noise-band **7414** has second width **7436** and first amplitude **7432,** and fourth frequency noise-band **7416** has second width **7436** and second amplitude **7434.**

These discrete changes to the width and amplitude of the frequency noise-bands are used modulate or digitally "shift key" the noise-band signals to correlate to digital information. In this example, first frequency noise-band **7410** represents "00," second frequency noise-band **7412** represents "01," third frequency noise-band **7414** represents "10," and fourth frequency noise-band **7416** represents "11". In other examples, more than two frequencies and more than two amplitudes are used to simultaneously "shift key" many more bits in a single time slice.

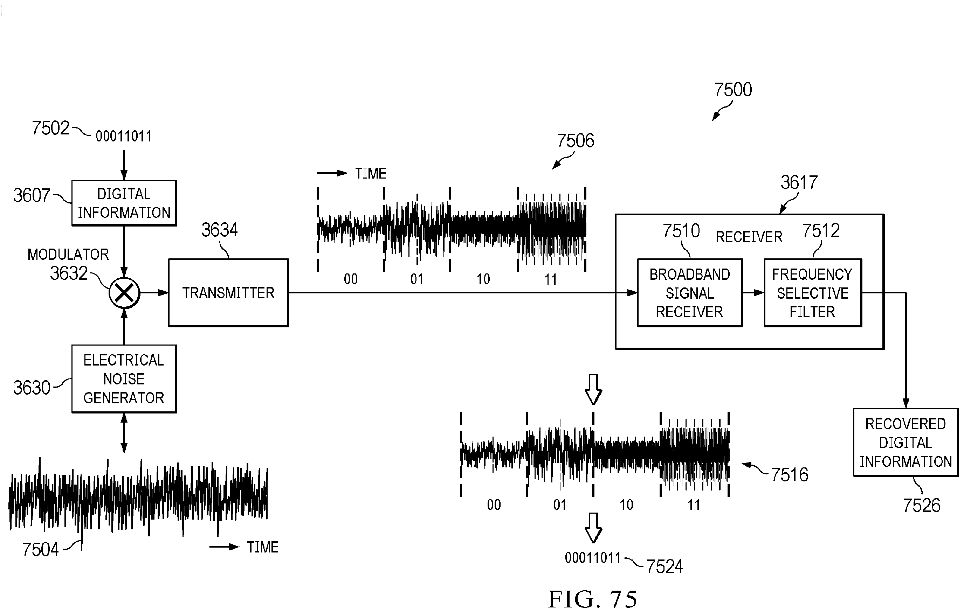

Turning next to **Figure 75****,** an illustration of information flow for transmitting digital information with digital multi-frequency-amplitude noise-band shift keying using a noise transmitter is depicted in accordance with an illustrative embodiment. In this example, information flow **7500** can be implemented using noise transmitter **3628** in signal transmission system **3619** for communications system **3602** in **Figure 71****.**

As depicted in **Figure 75** in this example, digital information **7502** is an example of digital information **3607** in **Figure 71** that is to be transmitted using digital multi-frequency-amplitude noise-band shift keying **3694.** As depicted, digital information **7502** comprises multiple discrete logic symbols in the form of bits having a bit pattern as follows "00011011."

In this example, electric noise generator **3630** generates carrier noise-band signal **7504.** In this example, modulator **3632** can be implemented using a bandpass or bandwidth filter and an amplitude modulator that modulates or digitally "shift keys" different frequency noise-bands in carrier noise-band signals **7504** to correspond to digital information **3607.** This modulation causes carrier noise-band signals **7504** to have different discrete frequency noise-bands at different discrete amplitude levels in a timeslot.

As a result, modulated carrier noise-band signal **7506** with different discrete frequency noise-bands at different discrete amplitude levels are transmitted by transmitter **3634.** As depicted, modulated carrier noise-band signal **7506** is comprised of frequency noise-bands and is not a sinusoidal wave form. The different discrete changes thereby modulate or "shift key" carrier noise-band signal **7506** to correlate to digital information **7502.**

As depicted, receiver **3617** includes broadband signal receiver **7510** and frequency selective filter **7512.** Broadband signal receiver **7510** is at least one of a hardware device or software device that is configured to receive and process signals across a wide range of frequencies. In this example, broadband signal receiver **7510** receives modulated or "shift keyed" carrier noise-band signal **7506.**

This reception of modulated or "shift keyed" carrier noise-band signal **7506** by broadband signal receiver **7510** results in received signal **7516.** As depicted in this example, received signal **7516** is the same or substantially the same as modulated carrier noise-band signal **7506.**

In this example, frequency selective filter **7512** can detect frequency and amplitude changes in the frequency noise-band for received signal **7516** to recover multiple discrete logic bits from received signal **7516.**

For example, frequency selective filter **7512** can be implemented using a frequency comb filter. A frequency comb filter can be comprised of bandpass filters, amplitude detectors, and a frequency response analyzer. In this illustrative example, the bandpass filters pass selected ranges of frequencies. Each bandpass filter is configured to pass frequencies of a particular range. The amplitude detectors have inputs connected to the output of bandpass filters. The amplitude detectors generate output signals in response to detecting signal amplitudes greater than a threshold or within certain thresholds. In this illustrative example, an amplitude detector is connected to each of the bandpass filters. As a result, amplitude detectors can indicate when different ranges of frequencies are detected from input of received signal **7516** and what the amplitude levels or values are of noise in those different frequency ranges. In this example, each bandpass filter can be connected to multiple amplitude detectors such that the different noise-band amplitude levels can be detected for each center point or width for the different frequency noise-bands.

Thus, frequency selective filter **7512** can detect discrete amplitudes of discrete frequency noise-bands of received signal **7516** to generate multiple discrete logic bits **7524.** In this example, multiple discrete logic bits **7524** output by frequency selective filter **7512** forms recovered digital information **7526.** As depicted in this example, multiple discrete logic bits **7524** for recovered digital information **7526** are the same bits that were transmitted as digital information **7502.**

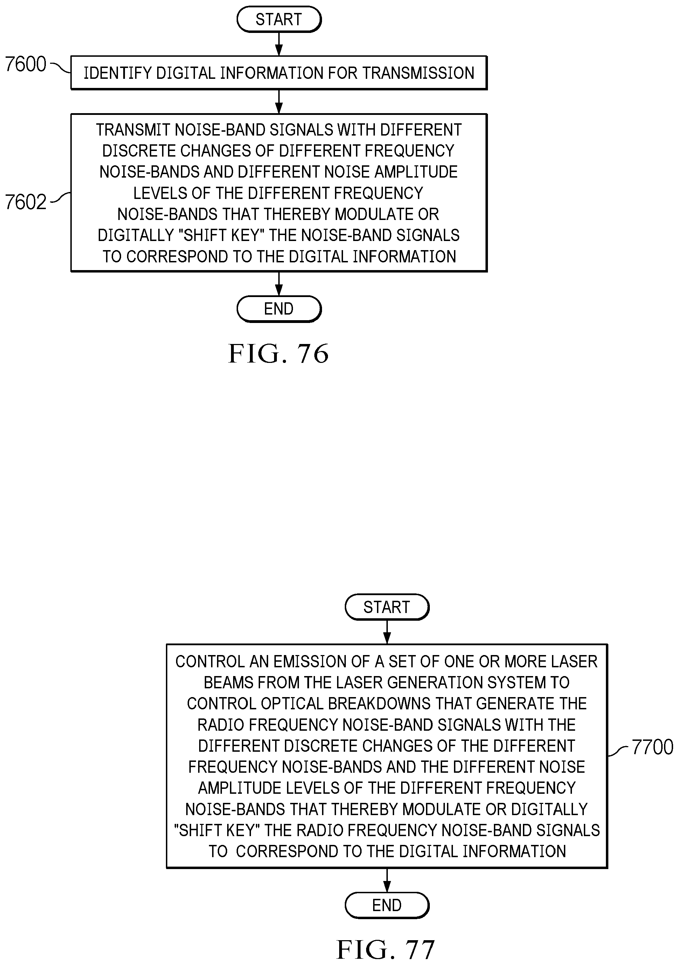

Turning now to **Figure 76****,** an illustration of a flowchart for communicating digital information is depicted in accordance with an illustrative embodiment. The process in **Figure 76** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** in **Figure 71****.**

The process begins by identifying digital information for transmission (operation **7600).** The process transmits noise-band signals with different discrete changes of different frequency noise-bands and different noise amplitude levels of the different frequency noise-bands that thereby modulate or digitally "shift key" the noise-band signals to correspond to the digital information (operation **7602).** The process terminates thereafter.

In this example, discrete changes in the frequency noise-band for the noise-band signals are made to at least one of a width or a position of the frequency noise-band. Discrete changes can be made to an amplitude of the frequency noise-band for the noise-band signals.

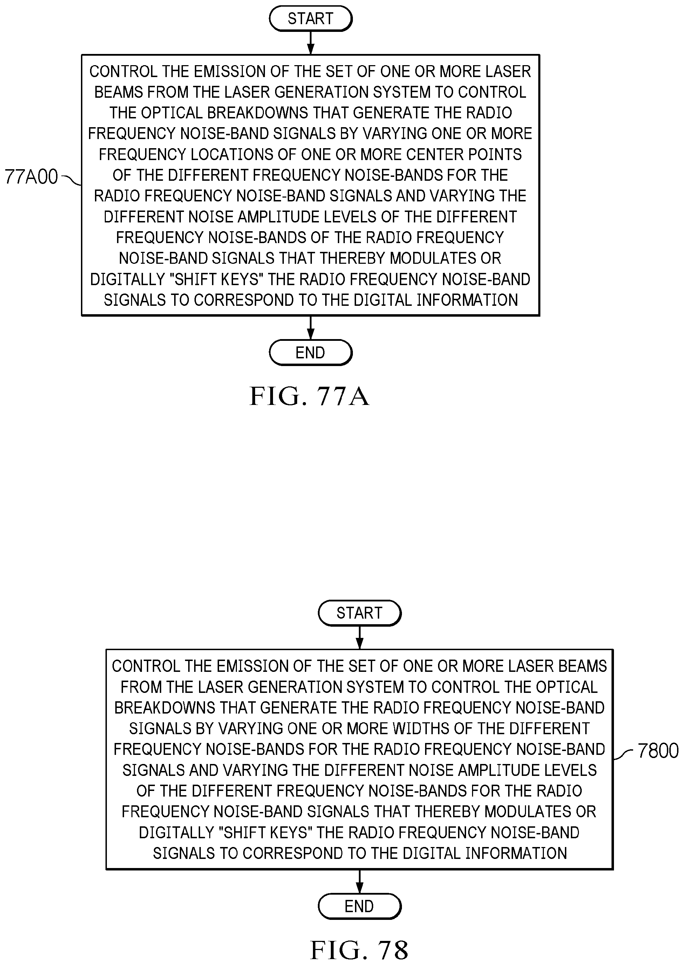

With reference next to **Figure 77****,** an illustration of a flowchart of a process for transmitting noise signals using a laser generation system is depicted in accordance with an illustrative embodiment. The process in this figure is an example of an implementation for operation **7602** in **Figure 76****.** In this example, the noise signals are radio frequency noise signals.

The process controls an emission of a set of one or more laser beams from the laser generation system to control optical breakdowns that generate the radio frequency noise-band signals with the different discrete changes of the different frequency noise-bands and the different noise amplitude levels of the different frequency noise-bands that thereby modulate or digitally "shift key" the radio frequency noise-band signals to correspond to the digital information (operation **7700).** The process terminates thereafter.

Next in **Figure 77A****,** an illustration of a flowchart of a process for controlling emission of a set of one or more laser beams is depicted in accordance with an illustrative embodiment. The process in this figure is an example of an implementation for operation **7700** in **Figure 77****.**

The process controls the emission of the set of one or more laser beams from the laser generation system to control the optical breakdowns that generate the radio frequency noise-band signals by varying one or more frequency locations of one or more center points of the different frequency noise-band for the radio frequency noise-band signals and varying the different noise amplitude levels of the different frequency noise-bands of the radio frequency noise-band signals that thereby modulate or digitally "shift key" the radio frequency noise-band signals to correspond to the digital information (operation **77A00).** The process terminates thereafter.

In **Figure 78****,** an illustration of a flowchart of a process for controlling emission of a set of one or more laser beams is depicted in accordance with an illustrative embodiment. The process in this figure is an example of an implementation for operation **7700** in **Figure 77****.**

The process controls the emission of the set of one or more laser beams from the laser generation system to control the optical breakdowns that generate the radio frequency noise-band signals by varying one or more widths of the different frequency noise-bands for the radio frequency noise-band signals and varying the different noise amplitude levels of the different frequency noise-bands for the radio frequency noise-band signals that thereby modulates or digitally "shift keys" the radio frequency noise-band signals to correspond to the digital information (operation 7800). The process terminates thereafter.

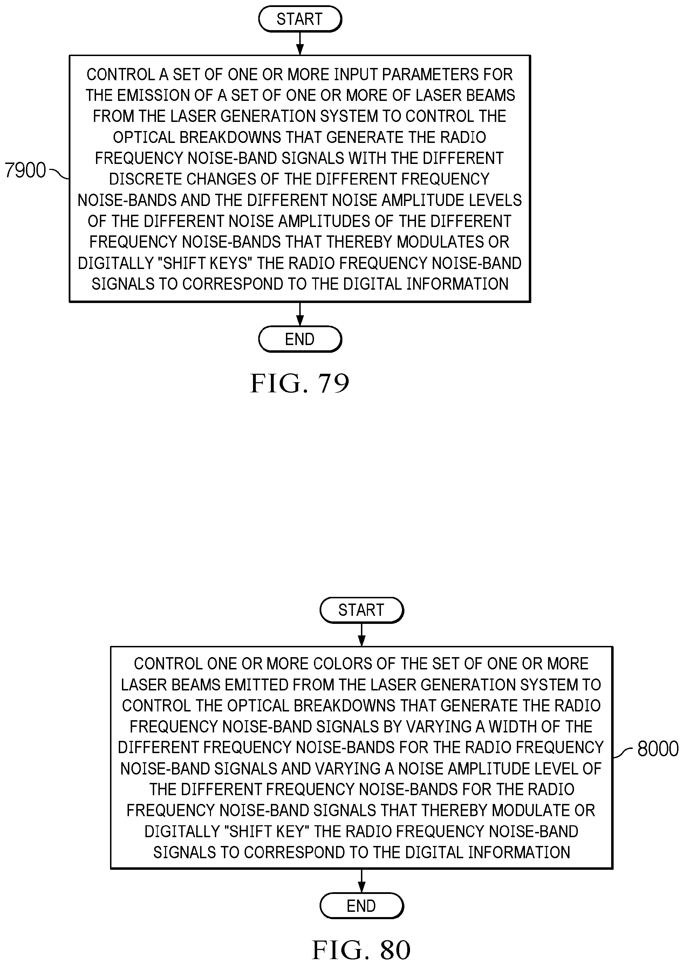

Turning now to **Figure 79****,** an illustration of a flowchart of a process for controlling emission of a set of one or more laser beams is depicted in accordance with an illustrative embodiment. The process in this figure is an example of an implementation for operation **7700** in **Figure 77****.**

The process controls a set of one or more input parameters for the emission of a set of one or more of laser beams from the laser generation system to control the optical breakdowns that generate the radio frequency noise-band signals with the different discrete changes of the different frequency noise-bands and the different noise amplitude levels of the different noise amplitudes of the different frequency noise-bands that thereby modulates or digitally "shift keys" the radio frequency noise-band signals to correspond to the digital information (operation 7900). The process terminates thereafter.

Turning now to **Figure 80****,** an illustration of a flowchart of a process for controlling emission of a set of one or more laser beams is depicted in accordance with an illustrative embodiment. The process in this figure is an example of an implementation for operation **7700** in **Figure 77****.**

The process controls one or more colors of the set of one or more laser beams emitted from the laser generation system to control the optical breakdowns that generate the radio frequency noise-band signals by varying a width of the different frequency noise-bands for the radio frequency noise-band signals and varying a noise amplitude level of the different frequency noise-bands for the radio frequency noise-band signals that thereby modulate or digitally "shift key" the radio frequency noise-band signals to correspond to the digital information (operation **8000).** The process terminates thereafter.

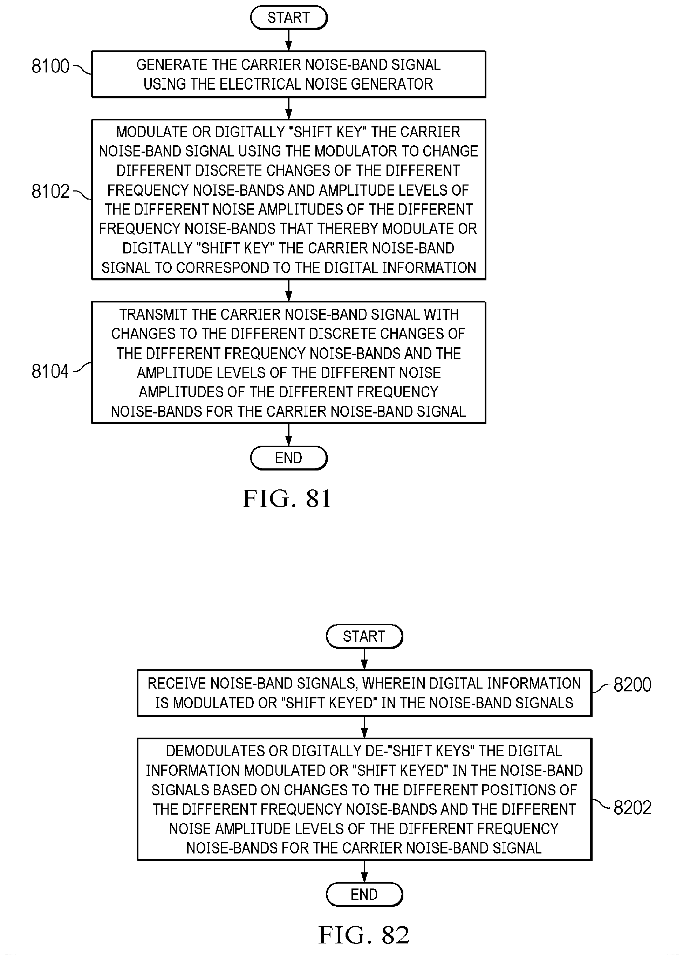

With reference now to **Figure 81****,** an illustration of a flowchart of a process for transmitting noise signals using a noise transmitter is depicted in accordance with an illustrative embodiment. The process in this figure is an example of an implementation for operation **7602** in **Figure 76****.**

The process generates the carrier noise-band signal using the electric noise generator (operation **8100).** The process modulates or digitally "shift key" the carrier noise-band signal using the modulator to change different discrete changes of the different frequency noise-bands and amplitude levels of the different noise amplitudes of the different frequency noise-bands that thereby modulate or digitally "shift key" the carrier noise-band signal to correspond to the digital information (operation **8102).**

The process transmits the carrier noise-band signal with changes to the different discrete changes of the different frequency noise-bands and the amplitude levels of the different noise amplitudes of the different frequency noise-bands for the carrier noise-band signal (operation **8104).** The process terminates thereafter.

Turning next to **Figure 82****,** an illustration of a flowchart of a process for communicating multiple-bit digital information is depicted in accordance with an illustrative example. The process in **Figure 82** can be implemented in hardware, software, or both. When implemented in software, the process can take the form of program instructions that are run by one or more processor units located in one or more hardware devices in one or more computer systems. For example, the process can be implemented in receiver **3617** in **Figure 71****.**

The process receives noise-band signals, wherein digital information is modulated or "shift keyed" in the noise-band signals (operation **8200).** The process demodulates or digitally de-"shift keys" the digital information modulated of "shift keyed" in the noise-band signals based on changes to the different positions of the different frequency noise-bands and the different noise amplitude levels of the different frequency noise-bands for the carrier noise-band signal (operation **8202).** The process terminates thereafter.

Some features of the illustrative examples for modulating digital information **3607** using digital multi-frequency-amplitude noise-band shift keying **3694** in communications system **3602** are described in the following clauses. These clauses are examples of features and are not intended to limit other illustrative examples.
1. A communications system comprising:
   a computer system; and
   a communications manager in the computer system, wherein the communications manager is configured to:
   identify digital information for transmission; and
   transmit noise-band signals with different discrete changes of different frequency noise-bands and different noise amplitude levels of the different frequency noise-bands that thereby modulate the noise-band signals to correspond to the digital information.
2. The communications system of clause 1, wherein the different discrete changes of the different frequency noise-bands and the different noise amplitude levels of the different frequency noise-bands correspond to multiple discrete logic symbols in the digital information.
3. The communications system of clause 1, wherein the noise-band signals are radio frequency noise-band signals and further comprising:
   a laser generation system configured to emit a set of one or more laser beams,
   wherein in transmitting the noise-band signals, the communications manager is configured to:
      control an emission of a set of one or more laser beams from the laser generation system to control optical breakdowns that generate the radio frequency noise-band signals with the different discrete changes of the different frequency noise-bands and the different noise amplitude levels of the different frequency noise-bands that thereby modulate the radio frequency noise-band signals to correspond to the digital information.
4. The communications system of clause 3, wherein in controlling the emission of the set of one or more laser beams, the communications manager is configured to:
   control the emission of the set of one or more laser beams from the laser generation system to control the optical breakdowns that generate the radio frequency noise-band signals by varying a location of a center point of the different frequency noise-band for the radio frequency noise-band signals and varying the different noise amplitude levels of the different frequency noise-bands of the radio frequency noise-band signals that thereby modulates the radio frequency noise-band signals to correspond to the digital information.
5. The communications system of clause 3, wherein in controlling the emission of the laser beams, the communications manager is configured to:
   control the emission of the set of one or more laser beams from the laser generation system to control the optical breakdowns that generate the radio frequency noise-band signals by varying a width of the different frequency noise-bands for the radio frequency noise-band signals and varying the different noise amplitude levels of the different frequency noise-bands for the radio frequency noise-band signals that thereby modulates the radio frequency noise-band signals to correspond to the digital information.
6. The communications system of clause 3, wherein in controlling the emission of the laser beams, the communications manager is configured to:
   control a set of one or more input parameters for the emission of a set of one or more of laser beams from the laser generation system to control the optical breakdowns that generate the radio frequency noise-band signals with the different discrete changes of the different frequency noise-bands and the different noise amplitude levels of the different noise amplitudes of the different frequency noise-bands that thereby modulates the radio frequency noise-band signals to correspond to the digital information.
7. The communications system of clause 3, wherein in controlling the emission of the laser beams, the communications manager is configured to:
   control one or more colors of the set of one or more laser beams emitted from the laser generation system to control the optical breakdowns that generate the radio frequency noise-band signals by varying a width of the different frequency noise-bands for the radio frequency noise-band signals and varying a noise amplitude level of the different frequency noise-bands for the radio frequency noise-band signals that thereby modulates the radio frequency noise-band signals to correspond to the digital information.
8. The communications system of clause 1 further comprising:
   an electric noise generator configured to generate a carrier noise-band signal;
   a modulator; and
   a transmitter, wherein in transmitting the noise-band signals, the communications manager is configured to:
      generate the carrier noise-band signal using the electric noise generator;
      modulate the carrier noise-band signal using the modulator to change different discrete changes of the different frequency noise-bands and amplitude levels of the different noise amplitudes of the different frequency noise-bands that thereby modulate the carrier noise-band signal to correspond to the digital information; and
      transmit the carrier noise-band signal with changes to the different discrete changes of the different frequency noise-bands and the amplitude levels of the different noise amplitudes of the different frequency noise-bands for the carrier noise-band signal.
9. The communications system of clause 8, wherein the carrier noise-band signal is selected from at least one of electromagnetic frequency noise signals, radio frequency noise signals, microwave frequency noise signals, audio frequency noise signals, ultrasonic frequency noise signals, ultra-low frequency noise signals, very low frequency noise-band signals, underwater frequency noise signals, or optical frequency noise signals.
10. The communications system of clause 1, wherein changes in the frequency noise-band for the noise-band signals are made to at least one of a width or a position of the frequency-noise-band.
11. The communications system of clause 1, wherein changes are made to an amplitude of the frequency noise-band for the noise-band signals.
12. A method for communicating digital information, the method comprising:
   identifying digital information for transmission; and
   transmitting noise-band signals with different discrete changes of different frequency noise-bands and different noise amplitude levels of the different frequency noise-bands that thereby modulate the noise-band signals to correspond to the digital information.
13. The method of clause 12, wherein the noise-band signals are radio frequency noise-band signals and further comprising:
   controlling an emission of a set of one or more laser beams from the laser generation system to control optical breakdowns that generate the radio frequency noise-band signals with the different discrete changes of the different frequency noise-bands and the different noise amplitude levels of the different frequency noise-bands that thereby modulate the radio frequency noise-band signals to correspond to the digital information.
14. The method of clause 13, wherein said controlling the emission of the set of one or more laser beams comprises:
   controlling the emission of the set of one or more laser beams from the laser generation system to control the optical breakdowns that generate the radio frequency noise-band signals by varying one or more locations of one or more center points of the different frequency noise-band for the radio frequency noise-band signals and varying the different noise amplitude levels of the different frequency noise-bands of the radio frequency noise-band signals that thereby modulates the radio frequency noise-band signals to correspond to the digital information.
15. The method of claim 13, wherein said controlling the emission of the laser beams comprises:
   controlling the emission of the set of one or more laser beams from the laser generation system to control the optical breakdowns that generate the radio frequency noise-band signals by varying one or more widths of the different frequency noise-bands for the radio frequency noise-band signals and varying the different noise amplitude levels of the different frequency noise-bands for the radio frequency noise-band signals that thereby modulates the radio frequency noise-band signals to correspond to the digital information.
16. The method of clause 13, wherein said controlling the emission of the laser beams comprises:
   controlling a set of one or more input parameters for the emission of a set of one or more of laser beams from the laser generation system to control the optical breakdowns that generate the radio frequency noise-band signals with the different discrete changes of the different frequency noise-bands and the different noise amplitude levels of the different noise amplitudes of the different frequency noise-bands that thereby modulates the radio frequency noise-band signals to correspond to the digital information.
17. The method of clause 13, wherein controlling the emission of the laser beams comprises:
   controlling one or more colors of the set of one or more laser beams emitted from the laser generation system to control the optical breakdowns that generate the radio frequency noise-band signals by varying a width of the different frequency noise-bands for the radio frequency noise-band signals and varying a noise amplitude level of the different frequency noise-bands for the radio frequency noise-band signals that thereby modulates the radio frequency noise-band signals to correspond to the digital information.
18. The method of clause 12, wherein said transmitting the noise-band signals comprises:
   generating the carrier noise-band signal using the electric noise generator;
   modulating the carrier noise-band signal using the modulator to change different discrete changes of the different frequency noise-bands and amplitude levels of the different noise amplitudes of the different frequency noise-bands that thereby modulate the carrier noise-band signal to correspond to the digital information; and
   transmitting the carrier noise-band signal with changes to the different discrete changes of the different frequency noise-bands and the amplitude levels of the different noise amplitudes of the different frequency noise-bands for the carrier noise-band signal.
19. The method of clause 12, wherein the noise-band signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including at least one of visible or non-visible light.
20. A method for communicating digital information, the method comprising:
   receiving noise-band signals, wherein digital information is modulated in the noise-band signals; and
   demodulating the digital information modulated in the noise-band signals based on changes to the different positions of the different frequency noise-bands and the different noise amplitude levels of the different frequency noise-bands for the carrier noise-band signal.
21. The communications system of clause 1, wherein changes in the frequency noise-band for the noise-band signals are made to at least one of a width or a position of the frequency-noise-band.
22. The communications system of clause 1, wherein changes are made to an amplitude of the frequency noise-band for the noise-band signals.

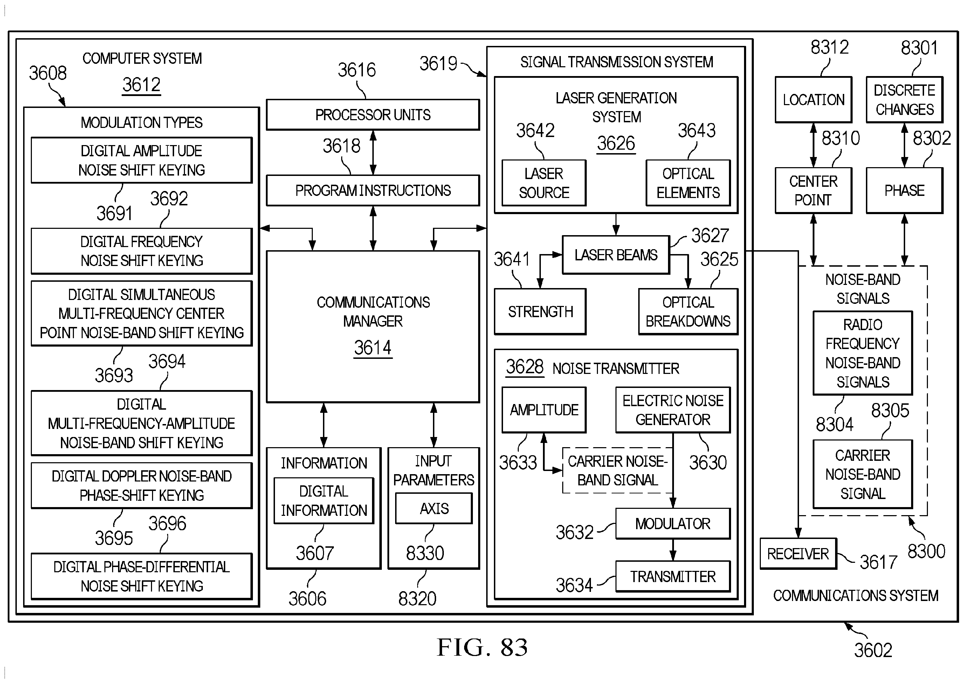

Turning now to **Figure 83****,** an illustration of a block diagram of a communications system **3602** for transmitting noise-band signals **8300** using digital phase noise modulation or digital doppler noise-band phase-shift keying **3695** is depicted in accordance with an illustrative embodiment. In this illustrative example, communications system **3602** operates to modulate or digitally "shift key" noise-band signals **8300** to correspond to information **3606** as digital information **3607** using digital doppler noise-band phase-shift keying **3695.**

In this illustrative example, noise-band signals **8300** can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including at least one of visible or non-visible light.

In this illustrative example, communications manager **3614** identifies digital information **3607** for transmission. Communications manager **3614** transmits noise-band signals **8300** with discrete changes **8301** from phase **8302** of the noise-band signals that thereby modulates or digitally "shift keys" noise-band signals **8300** to correspond to digital information **3607.**

In one illustrative example, communications manager **3614** uses laser generation system **3626** to transmit noise-band signals **8300** in the form of radio frequency noise-band signals **8304.** With this example, communications manager **3614** controls an emission of a set of one or more laser beams **3627** from laser generation system **3626** to at least one of cause or control optical breakdowns **3625** that generate radio frequency noise-band signals **8304** with discrete changes **8301** in phase **8302** that thereby modulates or digitally "shift keys" radio frequency noise-band signals **8304** to correspond to digital information **3607.**

In controlling the emission of the set of one or more laser beams **3627,** communications manager **3614** can control the emission of the set of one or more laser beams **3627** from laser generation system **3626** to at least one of cause or control optical breakdowns **3625** that generate radio frequency noise-band signals by varying a position or frequency location **8312** of center point **8310** on the spectrum of radio frequency noise-band signals **8304.** In this example, variation of position or frequency location **8312** of center point **8310** on the spectrum of radio frequency noise-band signals **8304** thereby modulates or digitally "shift keys" phase **8302** of radio frequency noise-band signals **8304** to correspond to digital information **3607.**

In this illustrative example, the variation in position or frequency location **8312** of center point **8310** on the electromagnetic spectrum can be performed in a number of different ways. For example, communications manager **3614** controls a set of one or more input parameters **8320** for an emission of a set of one or more laser beams **3627** from laser generation system **3626** to at least one of cause or control optical breakdowns **3625** that generate radio frequency noise-band signals by varying frequency location **8312** of center point **8310** on the electromagnetic spectrum of radio frequency noise-band signals **8304.** A variation of frequency location **8312** of center point **8310** on the electromagnetic spectrum of radio frequency noise-band signals **8304** thereby modulates or digitally "shift keys" phase **8302** of radio frequency noise-band signals **8304** to correspond to digital information **3607.**

In controlling input parameters **8320,** communications manager can control directing the set of one or more laser beams **3627** along axis **8330** such that optical breakdowns **3625** vary in space along axis **8330** to generate radio frequency noise-band signals **8304** with discrete changes **8301** in phase **8302** occurring along axis **8330** that thereby modulates or digitally "shift keys" the radio frequency noise-band signals **8304** to correspond to the digital information **3607.**

In this example, discrete changes **8301** in phase **8302** caused by a changed frequency location **8312** of center point **8310** results in a phase shift. Discrete changes **8301** in phase **8302** can be implemented through change in a laser position or mirror position using optical elements **3643** in laser generation system **3626** to cause a discrete shift in the physical location of the optical breakdowns **3625.** These optical elements can include mirrors, lenses, and other devices. The change can occur through changing a focal length of a mirror or other components to at least one of cause or control a phase shift in the electromagnetic spectrum by physically shifting the position of the optical breakdowns **3625.** In other cases, a mirror or lens can move to pivot a laser beam.

Additional examples of input parameters **8320** that can be controlled to perform phase shifting include varying a frequency location of a lower half power point of radio frequency noise-band signals **8304,** varying a frequency location of an upper half power point of radio frequency noise-band signals **8304,** as well as other parameters that can be adjusted to perform phase shifting of radio frequency noise-band signals **8304.**

In another illustrative example, communications manager **3614** can use noise transmitter **3628** to transmit noise-band signals **8300** in the form of carrier noise-band signal **8305** with discrete changes **8301** in phase **8302.** In this example, communications manager **3614** modulates or digitally "shift keys" carrier noise-band signal **8305** using modulator **3632** to form carrier noise-band signal **8305** with discrete changes **8301** in phase **8302** of carrier noise-band signal **8305** that thereby modulates or digitally "shift keys" phase **8302** of carrier noise-band signal **8305** to correspond to digital information **3607.**

In this example, the discrete changes **8301** in phase **8302** can take a number of forms. For example, for a Doppler phase shift the carrier noise-band signal can be a discrete shift in a bandpass range of frequencies. In another example, discrete Doppler phase shift of a bandpass range of colored noise frequencies, slope, or curvature of range of noise frequencies can occur using noise transmitter **3628.** In yet another example, a discrete Doppler shift of modulation of white, pink, red (Brownian), purple, or gray noise can occur using noise transmitter **3628.** Also, discrete multi-color noise Doppler shifts (electronic approach as opposed to lasers) can occur using noise transmitter **3628.**

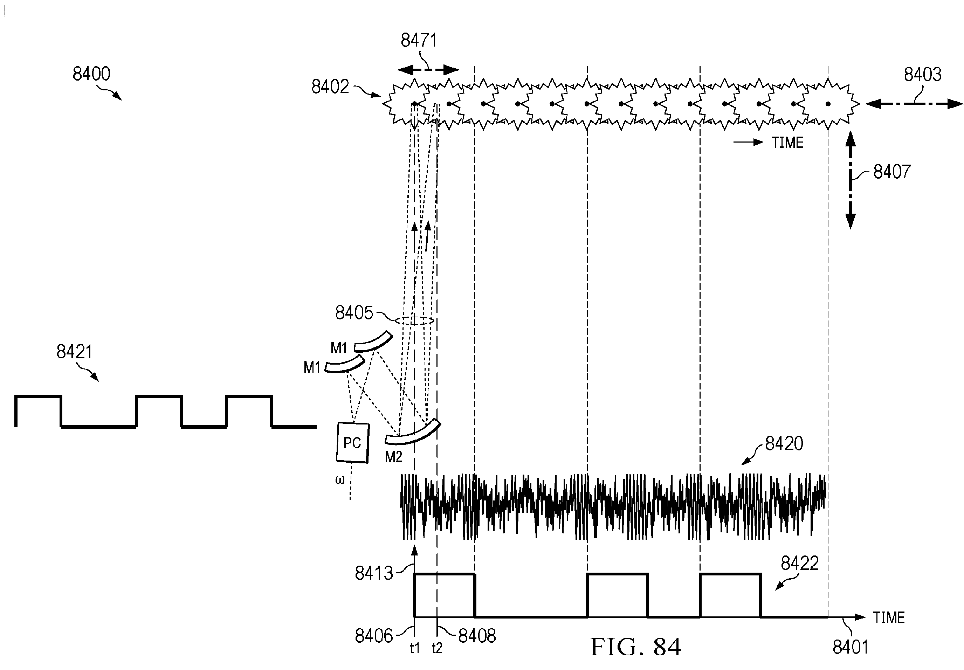

Turning next to **Figure 84****,** an illustration of information flow in transmitting digital information with digital phase noise modulation using a laser generation system is depicted in accordance with an illustrative embodiment. In this example, information flow **8400** can be implemented using laser generation system **3626** in signal transmission system **3619** for communications system **3602** in **Figure 83****.** In this example in **Figure 84****,** x-axis **8401** represents time for optical breakdowns **8402** and noise signals **8406** in information flow **8400.** Y-axis **8413** for radio frequency noise-band signal **8420** and output digital information **8422** represents amplitude or signal strength of these noise signals and digital signals.

As depicted, optical breakdowns **8402** are generated with varying phase based on input digital signal **8421** to be transmitted. As previously described, these optical breakdowns are plasma generated using laser generation system **3626** emitting laser beams **3627** in **Figure 83** to modulate radio frequency noise-band signal **8420** in **Figure 84** to correspond to input digital signal **8421.** Each optical breakdown in optical breakdowns **8402** is a plasma event generated by the set of one or more laser beams **3627** emitted by laser generation system **3626** in **Figure 84****.**

As depicted, the act of pivoting laser beam **8405** in the direction of arrow **8471** during the generation of optical breakdowns **8402** results in a respective positive or negative Doppler phase shift in a lateral direction causing a Doppler noise-band phase shift along lateral axis **8403.** This phase shift can be likened to the Doppler audio phase shift. The temporary discrete movement of the pivoting laser beam **8405** to the right in the direction of arrow **8471** during the generation of optical breakdowns **8402** results in a positive phase shift to a receiver on the right side of the optical breakdowns **8402.** Returning the pivoting laser beam **8405** to the left in the direction of arrow **8471** during the generation of optical breakdowns **8402** results in a negative phase shift for a receiver on the right side of the optical breakdowns **8402.** Thus, discrete movements to the right and left of the pivoting laser beam **8405** results in detectable phase shifts in the optical and RF spectrum in receivers in the direction of receivers along lateral axis **8403.**

In this example, the phase of optical breakdowns **8402** can change along lateral axis **8403.** As depicted, laser beam **8405** can generate optical breakdowns **8402** at time t1 **8406.**

As long as laser beam **8405** does not pivot as this timing is used, the phase of optical breakdowns **8402** does not change. In this example, laser beam **8405** can move or pivot in the direction of arrow **8471** such that optical breakdowns **8402** are continuously generated from time t1 **8406** to time t2 **8408.** When this pivot occurs between time t1 **8406** and time t2 **8408,** the change in position of the generation of optical breakdowns **8402** during time t1 to t2 results in a phase shift in the lateral direction along lateral axis **8403.**

In this illustrative example, the change in timing and optical breakdown physical location can be performed by changing the position of the laser or a mirror. This change can at least one of cause or control a phase shift in one or both of lateral axis **8403** and vertical axis **8407.** As depicted in **Figure 84****,** vertical axis **8407** is perpendicular to lateral axis **8403.** In this illustrative example, the phase shift will be along the lateral axis **8403,** with almost no phase shift along the vertical axis **8407.**

As depicted, these optical breakdowns result in radio frequency noise-band signal **8420** with changes in phase. These discrete changes in phase encode digital information that can be recovered. In this example, processing of radio frequency noise-band signal **8420** results in output digital information **8422** which corresponds to or correlates with, directly or indirectly, input digital signal **8421.**

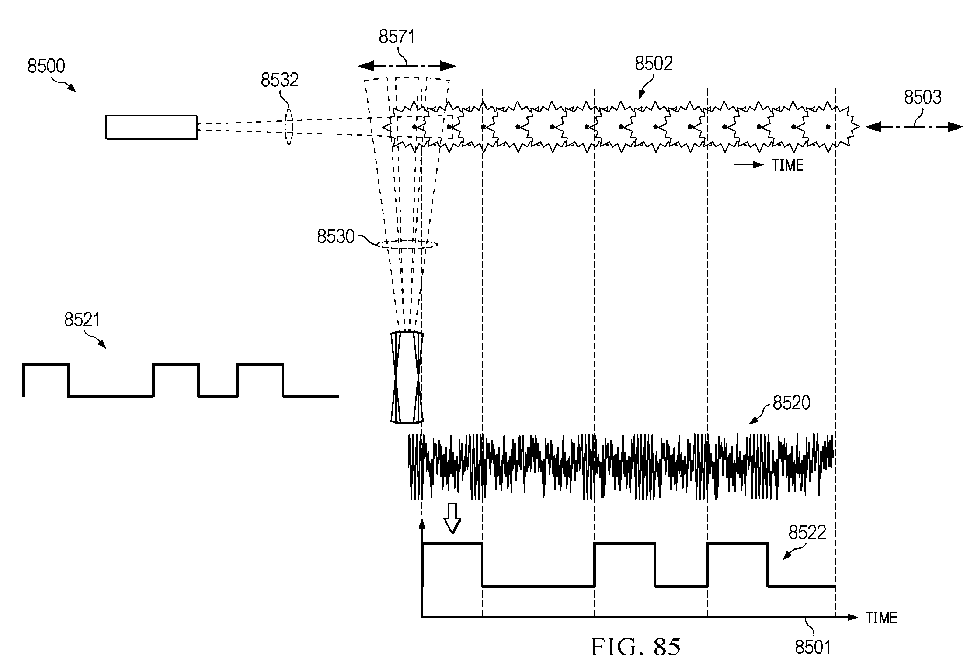

Turning next to **Figure 85****,** an illustration of information flow in transmitting digital information with digital phase noise modulation using a laser generation system is depicted in accordance with an illustrative embodiment. In this example, information flow **8500** can be implemented using laser generation system **3626** in signal transmission system **3619** for communications system **3602** in **Figure 83****.** In this example in **Figure 85****,** x-axis **8501** represents time for optical breakdowns **8502,** radio frequency noise-band signal **8520,** and output digital signal **8522** in information flow **8500.**

In this example, optical breakdowns **8502** are generated using laser beam **8530** and laser beam **8532** where the energy from both lasers creates optical breakdown at the intersection point of the lasers. In this example, laser beam **8532** is emitted in a direction along axis **8503.** Laser beam **8530** is emitted in one or more directions to intersect laser beam **8532.** In this illustrative example, laser beam **8530** can be pivoted relative to laser beam **8532** in the direction of arrow **8571** to shift the timing and physical locations at which optical breakdowns **8502** are generated. This discrete change in timing and physical locations of optical breakdowns **8502** generates a phase shift in a direction along axis **8503.** The phase shift is generated based on input digital signal **8521.** The discrete phase shift in this example can also be referred to as a Doppler noise-band shift, or Doppler noise-band phase shift, resulting in digital doppler noise-band phase-shift keying.

As a result, radio frequency noise-band signal **8520** is generated with discrete changes in phase to at least one of correspond or correlate with, directly or indirectly, the digital information in input digital signal **8521.** In this example, radio frequency noise-band signal **8520** can be received and decoded to generate output digital signal **8522.**

In this illustrative example, the axes for laser beam **8532** and laser beam **8530** are at or near right angles (i.e., 90 degrees). The movement of laser beam **8530** along axis **8503,** thus causes optical breakdowns **8502** to also shift along axis **8503.** This means that the directionality of the phase shift will also be along axis **8503.** However, if, in another illustrative example, the axes for laser beam **8532** and laser beam **8530** are not at or near right angles (e.g., at 45 degrees), then the directionality of the phase shift would be in the direction of the change in physical location of the optical breakdowns **8502.** This would generally be along the axis of the stationary laser beam but controlled by the moving or pivoting intersecting laser beam. However, both lasers can pivot as long as the lasers continue to intersect. The result is that the direction of the change in physical location of the optical breakdowns **8502** moves as the intersection point moves, causing the phase shift to be along the axis of the moving optical breakdowns **8502.**

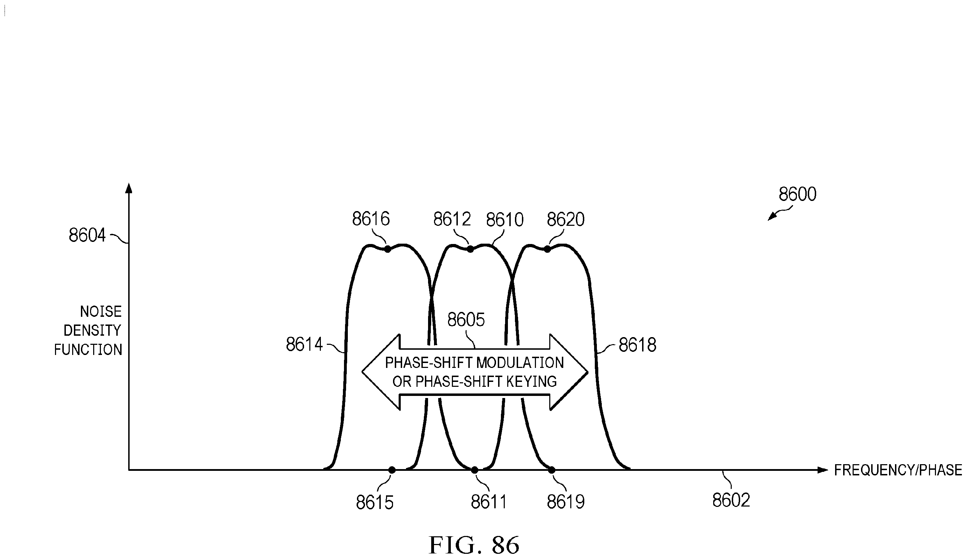

In **Figure 86****,** an illustration of digital phase noise modulation, digital phase-shift noise modulation, digital noise-band phase-shift keying, or digital doppler noise shift keying is depicted in accordance with an illustrative embodiment. As depicted in graph **8600,** x-axis **8602** represents frequency and/or phase and y-axis **8604** represents a noise density function and/or noise amplitude. In this example, the modulation or "shift keying" of noise-band signals is performed using phase-shift modulation or phase-shift keying **8605.**

In this illustrative example, noise-band signal **8610** has phase **8611** and center point **8612,** and noise-band signal **8614** has phase **8615** and center point **8616.** Noise-band signal **8618** has phase **8619** and center point **8620.**

As depicted in this example, the phase of noise-band signal **8614** and noise-band signal **8618** are shifted relative to phase **8611** of noise-band signal **8610.** These shifts are discrete changes that can be detected by a receiver. These discrete changes enable the receiver to determine the digital information modulated by the phase shifts in the noise-band signals. These phase shifts are performed by changing the center points in this example.

As depicted, noise-band signal 8610 with center point **8612** has phase **8611** and is considered to be a normal bandpass noise. Noise-band signal **8614** with center point **8616** has phase **8615** with a Doppler phase shift to a lower bandpass noise relative to noise-band signal **8610.** Noise-band signal **8618** with center point **8620** has phase **8619** with a Doppler phase shift to a higher bandpass noise relative to noise-band signal **8610.**

In one example, noise-band signal **8610** with center point **8612** and phase **8611** makes a discrete shift to noise-band signal **8618** with center point **8620** and phase **8619** resulting in a positive Doppler phase-shift. In this example, the positive Doppler phase-shift indicates a digital change from a logical "0" to a logical "1." In this example, when noise-band signal **8618** with center point **8620** and phase **8619** shifts back to noise-band signal **8610** with center point **8612** and phase **8611** the negative Doppler phase-shift indicates a digital change from a logical "1" to a logical "0."

In another illustrative example, the logical "1" and logical "0" are inverted from the previous example. In another example, the positive or negative Doppler phase-shift indicates a change in logical state from the previous logical state such that a previous logical "0" shifts to a subsequent logical "1," or a previous logical "1" shifts to a subsequent logical "0." In another example, noise-band signal **8610** with center point **8612** and phase **8611** makes a discrete shift to noise-band signal **8614** with center point **8616** and phase **8615** resulting in a negative Doppler phase-shift. In this example, the negative Doppler phase-shift indicates a digital change from a logical "0" to a logical "1," or inversely from a logical "1" to a logical "0" or a digital change from an existing logical state to a different logical state from the previous logical state.

In yet another illustrative example, the noise-band signal **8610** with center point **8612** and phase **8611** makes a momentary discrete shift to noise-band signal **8618** with center point **8620** and phase **8619** and then momentarily shifts discretely back, resulting in a complete positive and negative Doppler phase-shift. In this example, the complete positive and negative Doppler phase-shift indicates a digital change from a logical "0" to a logical "1," or a digital change from a logical "1" to a logical "0," or a digital change from a previous logical state ("0" or "1") to a different subsequent logical state ("1" or "0"). Thus, the set of center points of the noise-band signals are shifted in frequency to create a phase-shift with discrete changes in relative phase that thereby modulates or digitally "shift keys" the noise-band signals to correspond to the digital information.

In other words, the shifting in the phase of noise-band signals can be used to at least one of cause or control, directly or indirectly, the shift or change in phase of the noise signals to correlate to the digital information being transmitted. As depicted, this shift in phase is Doppler shift and can be performed using either or both laser generation system **3626** and noise transmitter **3628** in signal transmission system **3619** in **Figure 83****.**

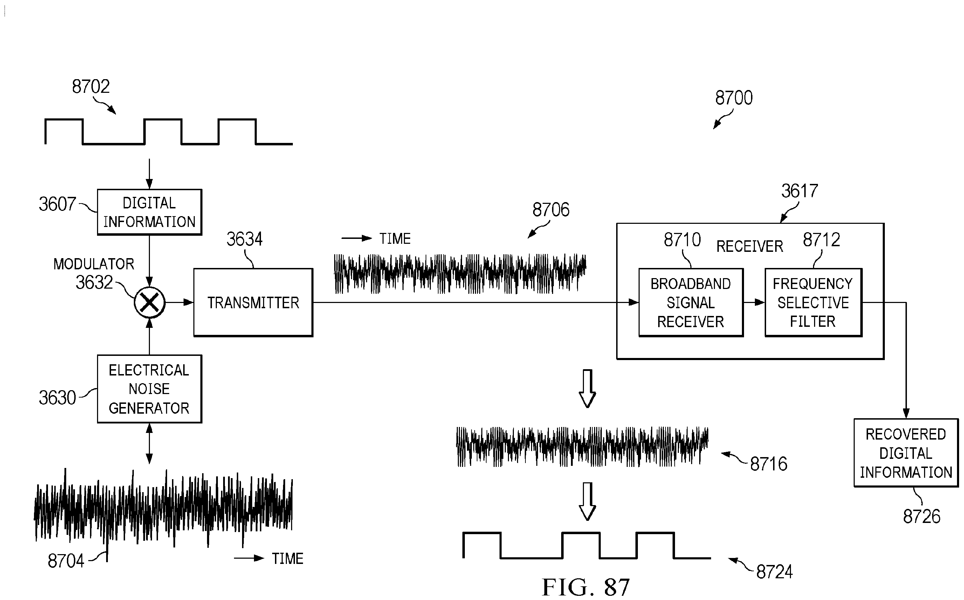

Turning next to **Figure 87****,** an illustration of information flow for transmitting digital information using digital doppler noise shift-keying or digital doppler noise-band phase-shift keying in a noise transmitter is depicted in accordance with an illustrative embodiment. In this example, information flow **8700** can be implemented using noise transmitter **3628** in signal transmission system **3619** for communications system **3602** in **Figure 83****.**

As depicted in **Figure 87** in this example, input digital signal **8702** is an example of digital information **3607** that is to be transmitted using digital doppler noise shift keying or digital doppler noise-band phase-shift keying **3695** in **Figure 83****.** In this example in **Figure 87****,** electric noise generator **3630** generates carrier noise-band signal **8704.** In this example, modulator **3632** can be implemented using phase shift modulation that modulates or digitally "shift keys" the phase of noise-band signals in carrier noise-band signal **8704** to correspond to digital information **3607.** This modulation or "shift keying" causes carrier noise-band signal **8704** to shift to different phases relative to a reference phase to form modulated carrier noise-band signal **8706.** These changes in phases are discrete Doppler shifts for carrier noise-band signal **8704.**

As a result, modulated carrier noise-band signal **8706** with the noise-band having different phase-shifts are transmitted by transmitter **3634.** As depicted, modulated carrier noise-band signal **8706** is comprised of frequency noise-bands and is not a sinusoidal wave form. The different phase-shifts in modulated carrier noise-band signal **8706** correlate to input digital signal **8702.**

As depicted, receiver **3617** includes broadband signal receiver **8710** and frequency selective filter **8712.** Broadband signal receiver **8710** is at least one of a hardware device or software device that is configured to receive and process signals across a wide range of frequencies. In this example, broadband signal receiver **8710** receives modulated carrier noise-band signal **8706.**

This reception of modulated carrier noise-band signal **8706** results in received signal **8716.** As depicted in this example, received signal **8716** is the same or substantially the same as modulated carrier noise-band signal **8706.** A noise floor can also be present in received signal **8716** from transmission noise and from broadband signal receiver **8710.** The noise floor can be from noise sources in the transmission system, the transmission medium, or in broadband signal receiver **8710.**

In this example, frequency selective filter **8712** can detect phase changes or phase-shifts in received signal **8716** to recover a digital signal in a form of multiple discrete logic bits **8724** from received signal **8716.** Frequency selective filter **8712** can be implemented using a frequency comb filter. In this example, frequency selective filter **8712** can detect phases or phase-shifts in discrete frequency noise-bands of received signal **8716** to generate multiple discrete logic bits **8724.** In this example, multiple discrete logic bits **8724** output by frequency selective filter **8712** forms recovered digital information **8726.** As depicted in this example, the bits in multiple discrete logic bits **8724** for recovered digital information **8726** is the same as the bits in input digital signal **8702.**

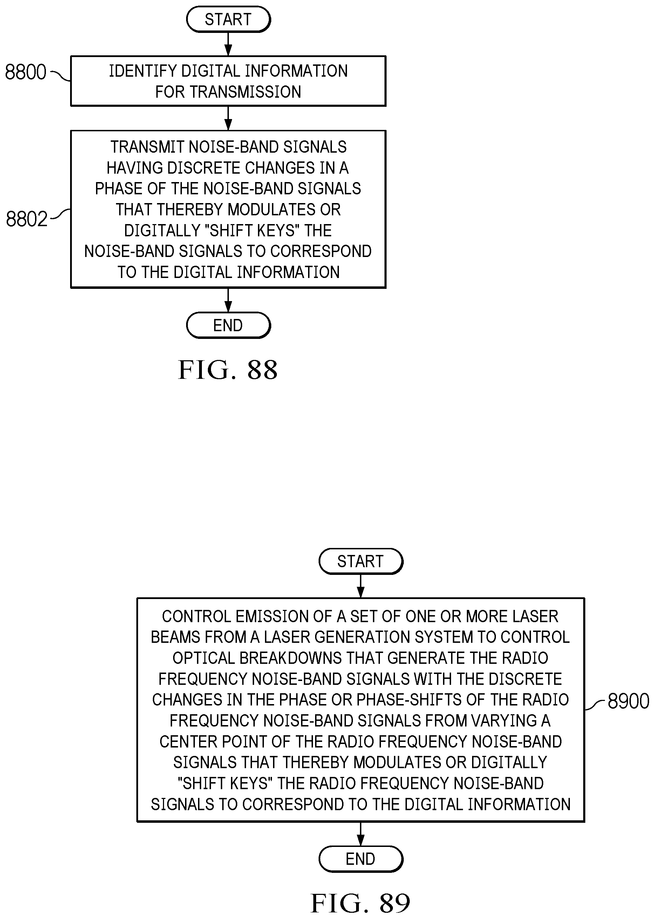

Turning next to **Figure 88****,** an illustration of a flowchart for communicating digital information is depicted in accordance with an illustrative embodiment. The process in **Figure 88** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** in **Figure 83****.**

The process begins by identifying digital information for transmission (operation **8800).** The process transmits noise-band signals having discrete changes in a phase or phase-shifts of the noise-band signals that thereby modulates or digitally "shift keys" the noise-band signals to correspond to the digital information (operation **8802).** The process terminates thereafter.

With reference next to **Figure 89****,** an illustration of a flowchart of a process for transmitting noise signals using a laser generation system is depicted in accordance with an illustrative embodiment. The process in this figure is an example of an implementation for operation **8802** in **Figure 88****.** In this example, the noise signals are radio frequency noise signals.

The process controls emission of a set of one or more laser beams from a laser generation system to control optical breakdowns that generate the radio frequency noise-band signals with the discrete changes in the phase or phase-shifts of the radio frequency noise-band signals from varying a center point of the radio frequency noise-band signals that thereby modulates or digitally "shift keys" the radio frequency noise-band signals to correspond to the digital information (operation **8900).** The process terminates thereafter.

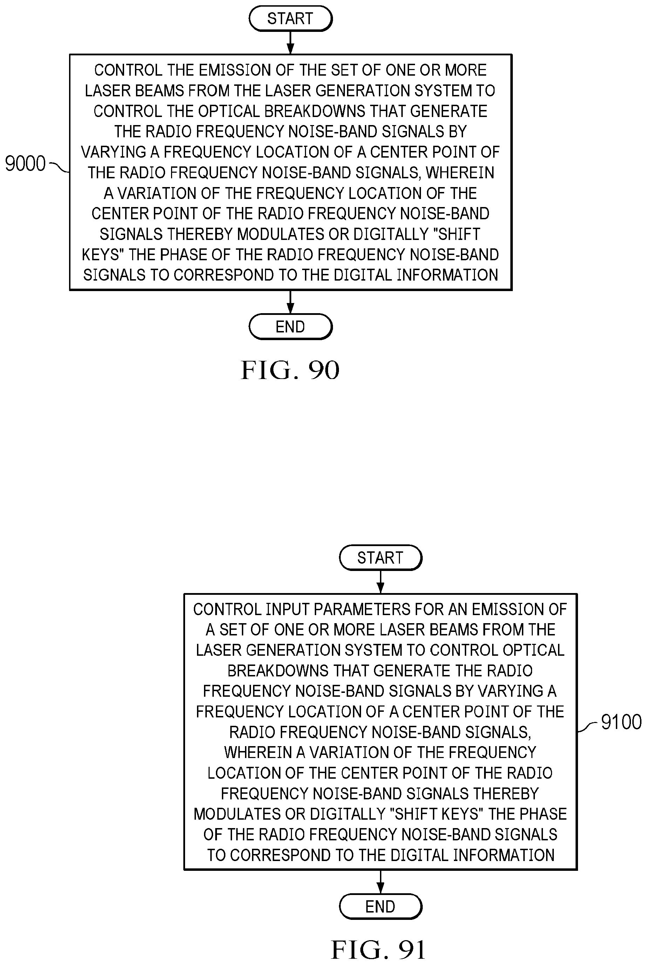

Next in **Figure 90****,** an illustration of a flowchart of a process for controlling emission of a set of one or more laser beams is depicted in accordance with an illustrative embodiment. The process in this figure is an example of an implementation for operation **8900** in **Figure 89****.**

The process controls the emission of the set of one or more laser beams from the laser generation system to control the optical breakdowns that generate the radio frequency noise-band signals by varying a frequency location of a center point of the radio frequency noise-band signals, wherein a variation of the frequency location of the center point of the radio frequency noise-band signals thereby modulates or digitally "shift keys" the phase of the radio frequency noise-band signals to correspond to the digital information (operation **9000).** The process terminates thereafter.

In **Figure 91****,** an illustration of a flowchart of a process for controlling emission of a set of one or more laser beams is depicted in accordance with an illustrative embodiment. The process in this figure is an example of an implementation for operation **8900** in **Figure 89****.**

The process controls input parameters for an emission of a set of one or more laser beams from the laser generation system to control optical breakdowns that generate the radio frequency noise-band signals by varying a frequency location of a center point of the radio frequency noise-band signals, wherein a variation of the frequency location of the center point of the radio frequency noise-band signals thereby modulates or digitally "shift keys" the phase of the radio frequency noise-band signals to correspond to the digital information (operation **9100).** The process terminates thereafter.

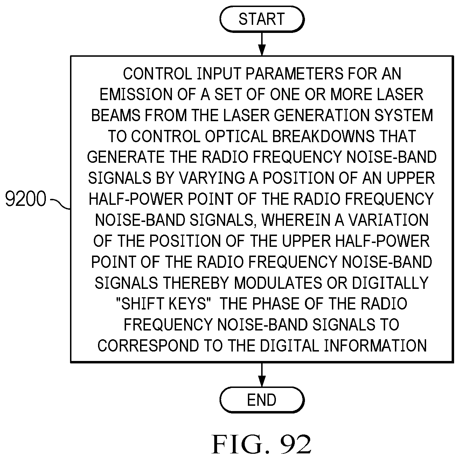

In **Figure 92****,** an illustration of a flowchart of a process for controlling emission of a set of one or more laser beams is depicted in accordance with an illustrative embodiment. The process in this figure is an example of an implementation for operation **8900** in **Figure 89****.**

The process controls controlling input parameters for an emission of a set of one or more laser beams from the laser generation system to control optical breakdowns that generate the radio frequency noise-band signals by varying a position of an upper half-power point of the radio frequency noise-band signals, wherein a variation of the position of the upper half-power point of the radio frequency noise-band signals thereby modulates or digitally "shift keys" the phase of the radio frequency noise-band signals to correspond to the digital information (operation **9200).** The process terminates thereafter.

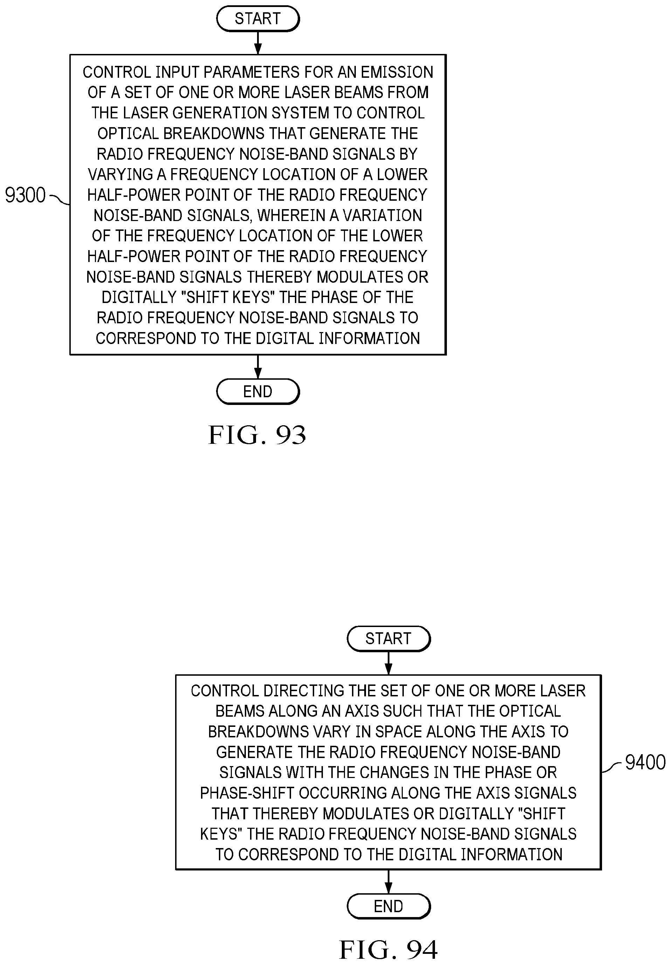

In **Figure 93****,** an illustration of a flowchart of a process for controlling emission of a set of one or more laser beams is depicted in accordance with an illustrative embodiment. The process in this figure is an example of an implementation for operation **8900** in **Figure 89****.**

The process controls input parameters for an emission of a set of one or more laser beams from the laser generation system to control optical breakdowns that generate the radio frequency noise-band signals by varying a frequency location of a lower half-power point of the radio frequency noise-band signals, wherein a variation of the frequency location of the lower half-power point of the radio frequency noise-band signals thereby modulates or digitally "shift keys" the phase of the radio frequency noise-band signals to correspond to the digital information (operation **9300).** The process terminates thereafter.

Next in **Figure 94****,** an illustration of a flowchart of a process for controlling emission of a set of one or more laser beams is depicted in accordance with an illustrative embodiment. The process in this figure is an example of an implementation for operation **8900** in **Figure 89****.**

The process controls directing the set of one or more laser beams along an axis such that the optical breakdowns vary in space along the axis to generate the radio frequency noise-band signals with the changes in the phase or phase-shift occurring along the axis signals that thereby modulates or digitally "shift keys" the radio frequency noise-band signals to correspond to the digital information (operation **9400).** The process terminates thereafter.

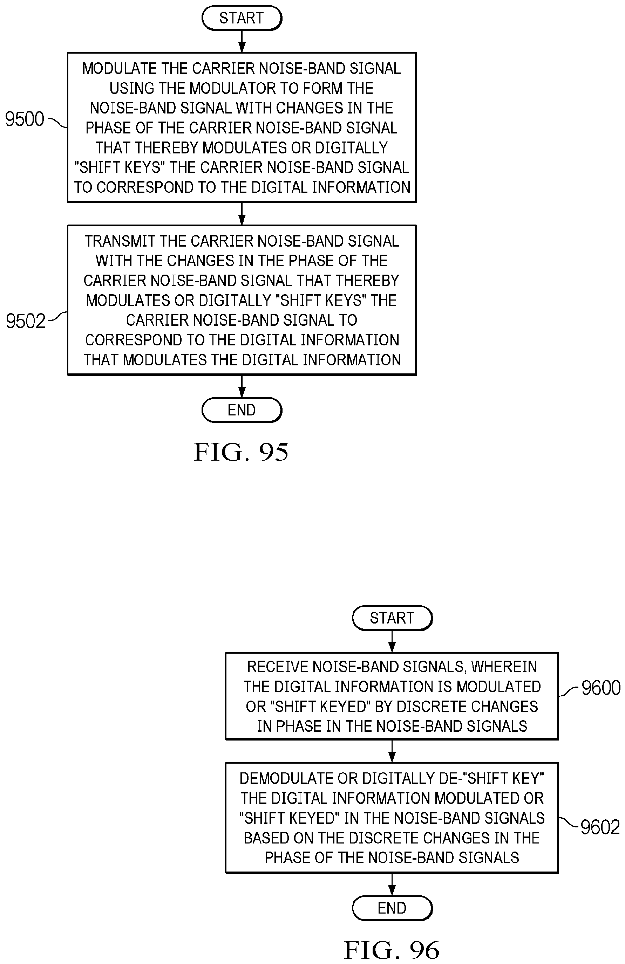

Turning next to **Figure 95****,** an illustration of a flowchart of process for communicating digital information is depicted in accordance with an illustrative embodiment. The process in **Figure 95** can be implemented in hardware, software, or both. When implemented in software, the process can take the form of program instructions that are run by one or more processor units located in one or more hardware devices in one or more computer systems. For example, the process can be implemented in noise transmitter **3628** in **Figure 83****.**

The process modulates or digitally "shift keys" the carrier noise-band signal using the modulator to form the noise-band signal with changes in the phase of the carrier noise-band signal that thereby modulates or digitally "shift keys" the carrier noise-band signal to correspond to the digital information (operations **9500).** The process transmits the carrier noise-band signal with the changes in the phase or phase-shift of the carrier noise-band signal that thereby modulates or digitally "shift keys" the carrier noise-band signal to correspond to the digital information that modulates or digitally "shift keys" the digital information (operation **9502).** The process terminates thereafter.

Turning next to **Figure 96****,** an illustration of a flowchart of process for communicating digital information is depicted in accordance with an illustrative embodiment. The process in **Figure 96** can be implemented in hardware, software, or both. When implemented in software, the process can take the form of program instructions that are run by one or more processor units located in one or more hardware devices in one or more computer systems. For example, the process can be implemented in receiver **3617** in **Figure 83****.**

The process receives noise-band signals, wherein the digital information is modulated or "shift keyed" by discrete changes in phase in the noise-band signals (operation **9600).** The process demodulates or digitally de-"shift keys" the digital information modulated or digitally "shift keyed" in the noise-band signals based on the discrete changes in the phase of the noise-band signals **(9602).** The process terminates thereafter.

Some features of the illustrative examples for modulating digital information **3607** using digital doppler noise-band phase-shift keying **3695** in communications system **3602** are described in the following clauses. These clauses are examples of features and are not intended to limit other illustrative examples.
1. A communications system comprising:
   a computer system; and
   a communications manager in the computer system, wherein the communications manager is configured to:
      identify digital information for transmission; and
      transmit noise-band signals with discrete changes in a phase of the noise-band signals that thereby modulates the noise-band signals to correspond to the digital information.
2. The communications system of clause 1, wherein the noise-band signals are radio frequency noise-band signals and further comprising:
   a laser generation system configured to emit a set of one or more laser beams, wherein in transmitting the noise-band signals, the communications manager is configured to:
   control an emission of a set of one or more laser beams from the laser generation system to control optical breakdowns that generate the radio frequency noise-band signals with the discrete changes in the phase that thereby modulates the radio frequency noise-band signals to correspond to the digital information.
3. The communications system of clause 2, wherein in controlling the emission of the set of one or more laser beams, the communications manager is configured to:
   control the emission of the set of one or more laser beams from the laser generation system to control the optical breakdowns that generate the radio frequency noise-band signals by varying a frequency location of a center point of the radio frequency noise-band signals, wherein a variation of the frequency location of the center point of the radio frequency noise-band signals thereby modulates the phase of the radio frequency noise-band signals to correspond to the digital information.
4. The communications system of clause 2, wherein in controlling the emission of the laser beams, the communications manager is configured to:
   control a set of one or more input parameters for the emission of a set of one or more laser beams from the laser generation system to control the optical breakdowns that generate the radio frequency noise-band signals by varying a frequency location of a center point of the radio frequency noise-band signals, wherein a variation of the frequency location of the center point of the radio frequency noise-band signals thereby modulates the phase of the radio frequency noise-band signals to correspond to the digital information.
5. The communications system of clause 4, wherein in controlling the set of one or more input parameters, the communications manager is configured to:
   control directing the set of one or more laser beams along an axis such that the optical breakdowns vary in space along the axis to generate the radio frequency noise-band signals with the discrete changes in the phase occurring along the axis that thereby modulates the radio frequency noise-band signals to correspond to the digital information.
6. The communications system of clause 1 further comprising:
   an electric noise generator configured to generate a carrier noise signal;
   a modulator; and
   a transmitter, wherein in generating noise-band signals, the communications manager is configured to:
      generate a carrier noise-band signal using the electric noise generator; and
      modulate the carrier noise-band signal using the modulator to form the carrier noise-band signal with discrete changes in the phase of the carrier noise-band signal that thereby modulates the phase of the carrier noise-band signal to correspond to the digital information.
7. The communications system of clause 1, wherein the noise-band signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
8. A method for communicating digital information, the method comprising:
   identifying digital information for transmission; and
   transmitting noise-band signals having discrete changes in a phase of the noise-band signals that thereby modulates the noise-band signals to correspond to the digital information.
9. The method of clause 8, wherein the noise-band signals are radio frequency noise-band signals and, wherein said transmitting the noise-band signals comprises:
   controlling an emission of a set of one or more laser beams from a laser generation system to control optical breakdowns that generate the radio frequency noise-band signals with the discrete changes in the phase of the radio frequency noise-band signals from varying a center point of the radio frequency noise-band signals that thereby modulates the radio frequency noise-band signals to correspond to the digital information.
10. The method of clause 9, wherein said controlling the emission of the set of one or more laser beams comprises:
   controlling the emission of the set of one or more laser beams from the laser generation system to control the optical breakdowns that generate the radio frequency noise-band signals by varying a frequency location of a center point of the radio frequency noise-band signals, wherein a variation of the frequency location of the center point of the radio frequency noise-band signals thereby modulates the phase of the radio frequency noise-band signals to correspond to the digital information.
11. The method of clause 9, wherein said controlling the emission of the laser beams comprises:
   controlling input parameters for the emission of a set of one or more laser beams from the laser generation system to control the optical breakdowns that generate the radio frequency noise-band signals by varying a frequency location of a center point of the radio frequency noise-band signals, wherein a variation of the frequency location of the center point of the radio frequency noise-band signals thereby modulates the phase of the radio frequency noise-band signals to correspond to the digital information.
12. The method of clause 9, wherein said controlling the emission of the laser beams comprises:
   controlling input parameters for the emission of a set of one or more laser beams from the laser generation system to control the optical breakdowns that generate the radio frequency noise-band signals by varying a position of an upper half-power point of the radio frequency noise-band signals, wherein a variation of the position of the upper half-power point of the radio frequency noise-band signals thereby modulates the phase of the radio frequency noise-band signals to correspond to the digital information.
13. The method of clause 9, wherein said controlling the emission of the laser beams comprises:
   controlling input parameters for the emission of a set of one or more laser beams from the laser generation system to control the optical breakdowns that generate the radio frequency noise-band signals by varying a frequency location of a lower half-power point of the radio frequency noise-band signals, wherein a variation of the frequency location of the lower half-power point of the radio frequency noise-band signals thereby modulates the phase of the radio frequency noise-band signals to correspond to the digital information.
14. The method of clause 9, wherein said controlling the emission of the laser beams comprises:
   controlling directing the set of one or more laser beams along an axis such that the optical breakdowns vary in space along the axis to generate the radio frequency noise-band signals with the changes in the phase occurring along the axis signals that thereby modulates the radio frequency noise-band signals to correspond to the digital information.
15. The method of clause 8, wherein said transmitting the noise-band signals comprises:
   generating a carrier noise-band signal using an electric noise generator;
   modulating the carrier noise-band signal using the modulator to form the noise-band signal with changes in the phase of the carrier noise-band signal that thereby modulates the carrier noise-band signal to correspond to the digital information; and
   transmitting the carrier noise-band signal with the changes in the phase of the carrier noise-band signal that thereby modulates the carrier noise-band signal to correspond to the digital information that modulates the digital information.
16. The method of clause 8, wherein the noise-band signal is selected from at least one of electromagnetic frequency noise signals, radio frequency noise-band , microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
17. A method for communicating digital information, the method comprising:
   receiving noise-band signals, wherein the digital information is modulated by discrete changes in phase in the noise-band signals; and
   demodulating the digital information modulated in the noise-band signals based on the discrete changes in the phase of the noise-band signals.

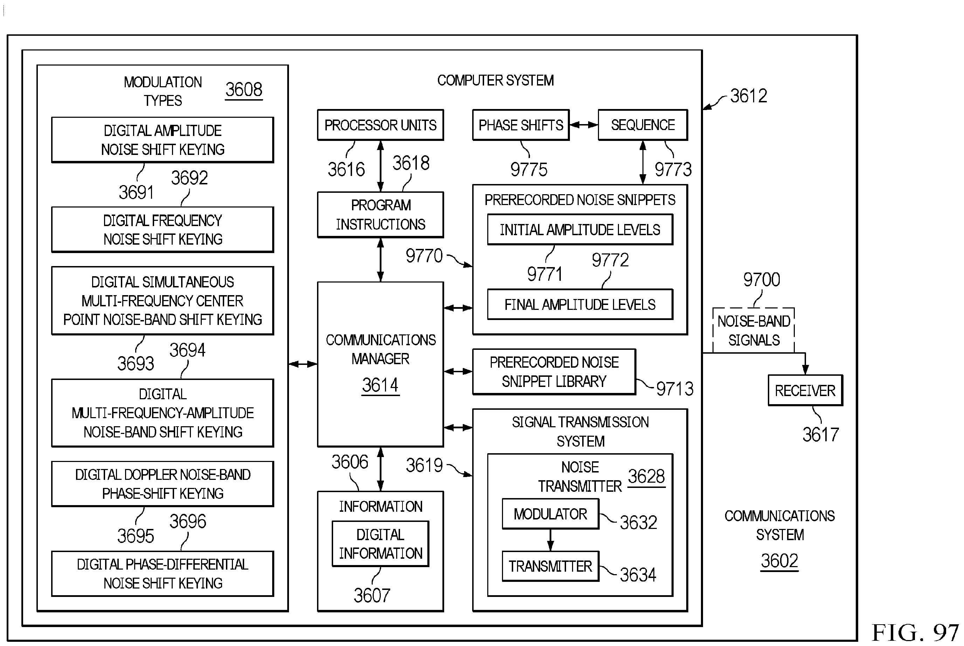

Turning now to **Figure 97****,** an illustration of a block diagram of a communications system for transmitting noise-band signals using digital phase noise modulation or digital phase-differential noise shift keying is depicted in accordance with an illustrative embodiment. In this illustrative example, only a portion of the components in communications system **3602** are used to transmit information **3606** as digital information **3607** using digital phase-differential noise shift keying **3696.** Other components not used are omitted in this figure to avoid obscuring the description of this illustrative example in which digital phase-differential noise shift keying **3696** is used to transmit digital information **3607.** In this illustrative example, laser generation system **3626** and electric noise generator **3630** are not used for this type of modulation or "shift keying" and are not shown in this figure depicting communications system **3602.**

In this illustrative example, communications manager **3614** identifies digital information **3607** for transmission. Communications manager **3614** generates a sequence **9773** of prerecorded noise snippets **9770** with initial amplitude levels **9771** and final amplitude levels **9772.**

This sequence of prerecorded noise snippets **9770** can be generated using modulator **3632** in noise transmitter **3628.** For example, modulator **3632** can select particular ones of prerecorded noise snippets **9770** to form sequence **9773.** In this illustrative example, prerecorded noise snippets **9770** can be stored in a physical or virtual location such as prerecorded noise snippet library **9713.** In other illustrative examples, these prerecorded noise snippets can be generated on the fly based on the desired initial amplitude levels and desired final amplitude levels for prerecorded noise snippets **9770** to form sequence **9773** to have phase shifts **9775** that correlate to digital information **3607.**

In this example, initial amplitude levels **9771** and final amplitude levels 9772 from one prerecorded noise snippet to another prerecorded noise snippet in the sequence of prerecorded noise snippets **9770** corresponds to phase shifts **9775** between prerecorded noise snippets **9770** which correspond to the digital information **3607.**

In this illustrative example, prerecorded noise snippets **9770** are prerecorded noise having initial amplitude levels **9771** and final amplitude levels **9772.**

For example, one prerecorded snippet can have an initial amplitude of +1 and a final amplitude of +1. Another prerecorded snippet can have an initial amplitude of 0 and a final amplitude of 0. As yet another example, another prerecorded snippet can have an initial amplitude of +1 and a final amplitude of 0. In yet another example, a prerecorded snippet can have an initial amplitude of -1 and a final amplitude of +1.

These and other combinations of initial amplitude levels **9771** and final amplitude levels **9772** can be placed into sequence **9773** such that phase shifts **9775** resulting from the sequence **9773** of prerecorded snippets can correspond to digital information **3607.**

These prerecorded snippets can be comprised of prerecorded noise-band signals that can be selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including at least one of visible or non-visible light.

Communications manager **3614** transmits the sequence **9773** of prerecorded noise snippets **9770** corresponding to digital information **3607.** In this example, this transmission is performed using signal transmission system **3619** with the prerecorded noise snippets being transmitted as noise-band signals **9700.**

This transmission can be received by receiver **3617** which is a hardware system and can include processes implemented in hardware or software that recover digital information **3607** from sequence **9773** of prerecorded noise snippets **9770** transmitted by transmitter **3634.**

In this illustrative example, receiver **3617** receives the transmission of sequence **9773** of prerecorded noise snippets **9770** with initial amplitude levels **9771** and final amplitude levels **9772** in which initial amplitude levels **9771** and final amplitude levels **9772** from one prerecorded noise snippet to another prerecorded noise snippet in sequence **9773** of prerecorded noise snippets **9770** corresponds to phase shifts **9775** between prerecorded noise snippets **9770** which correspond to the digital information **3607.** Receiver **3617** demodulates or digitally de-"shift keys" digital information **3607** from sequence **9773** of prerecorded noise snippets **9770** and phase shifts **9775** for sequence **9773** of prerecorded noise snippets **9770.** In this manner, receiver **3617** can recover digital information **3607** transmitted in sequence **9773** of prerecorded noise snippets **9770.**

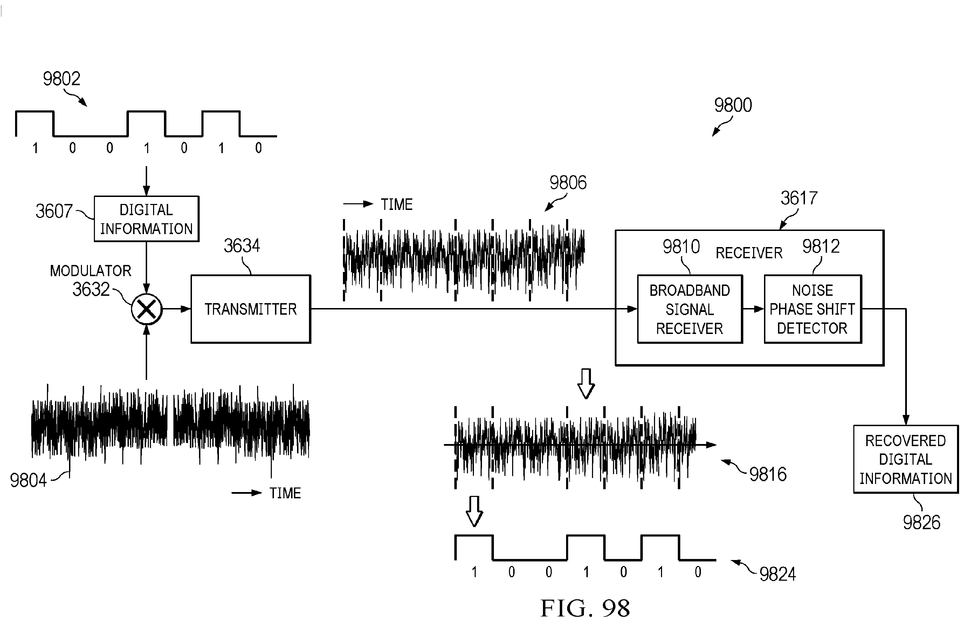

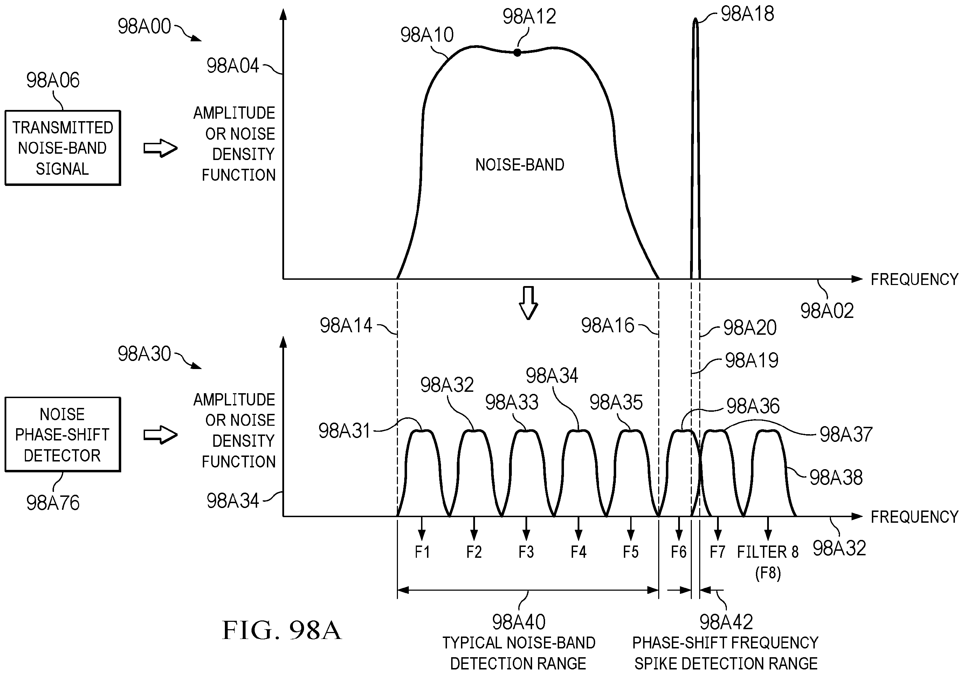

Turning next to **Figure 98****,** an illustration of information flow for transmitting digital information using digital phase-differential noise shift keying in a noise transmitter is depicted in accordance with an illustrative embodiment. In this example, information flow **9800** can be implemented using noise transmitter **3628** in signal transmission system **3619** for communications system **3602** in **Figure 98****.**

As depicted in **Figure 98** in this example, input digital signal **9802** is an example of digital information **3607** that is to be modulated using digital phase-differential noise shift keying **3696** in **Figure 97****.**

In this example in **Figure 98****,** modulator **3632** operates as a phase shift modulator for prerecorded noise. For example, modulator **3632** performs modulation by selecting snippets from prerecorded noise snippets **9804** in a sequence that corresponds to input digital signal **9802.** Modulator **3632** generates a sequence of prerecorded noise snippets **9804** with initial amplitude levels and final amplitude levels. The initial amplitude levels and the final amplitude levels from one prerecorded noise snippet to another prerecorded noise snippet in the sequence of the prerecorded noise snippets **9804** corresponds to phase shifts between prerecorded noise snippets **9804** which correspond to digital information **3607.**

In this example, transmitter **3634** transmits the sequence of prerecorded noise snippets **9804** selected by modulator **3632** to correlate to input digital signal **9802** for digital information **3607.** This sequence is transmitted as modulated carrier noise-band signal **9806.**

Modulated carrier noise-band signal **9806** is received by receiver **3617.** As depicted, receiver **3617** includes broadband signal receiver **9810** and noise phase shift detector **9812.** Broadband signal receiver **9810** is at least one of a hardware device or software device that is configured to receive and process signals across a wide range of frequencies. In this example, broadband signal receiver **9810** receives modulated carrier noise-band signal **9806.**

This reception of modulated carrier noise-band signal **9806** results in received signal **9816.** As depicted in this example, received signal **9816** is the same or substantially the same as modulated carrier noise-band signal **9806.** A noise floor can also be present in received signal **9816** from transmitter **3634,** the transmission medium, and/or broadband signal receiver **9810.** The noise floor can be from noise sources in transmitter **3634,** the transmission medium, and/or broadband signal receiver **9810.**

In this example, noise phase shift detector **9812** can detect phase shifts in received signal **9816** to recover digital signal **9824** from received signal **9816.** Noise phase shift detector **9812** can be implemented using electronic techniques to detect spurious high frequency transitions that shift more rapidly than the noise frequencies in the noise-band itself. Alternatively, bandpass filters or passband filters can be used which will detect spurious high frequency signals outside of the range of the noise-band itself. For example, **Figure 98A** shows an array of passband filters which will detect higher frequencies outside of the noise-band caused by these sudden phase shifts. Returning to **Figure 98****,** in this example, noise phase shift detector **9812** can detect phase shifts in received signal **9816** to generate digital signal **9824** that is output as recovered digital information **9826.** As depicted in this example, the bits in digital signal **9824** for recovered digital information **9826** is the same as the bits in digital information **3607** as shown in input digital signal **9802.**

Turning now to **Figure 98A****,** this figure shows an illustrative example of how noise phase shift detector **9812** in **Figure 98** may function. Other means may be used, but for purposes of illustration, **Figure 98A** is one illustrative example. At the top of **Figure 98A** is a graph of transmitted noise-band **98A00** which plots transmitted noise-band signal **98A06** with the x-axis **98A02** showing frequency and the y-axis **98A04** showing amplitude, power, or noise density function. Graph of transmitted noise-band **98A00** contains noise-band **98A10** with center point **98A12,** having lower frequency boundary **98A14** and upper frequency boundary **98A16,** as indicated by the vertical dashed lines for **98A14** and **98A16.** Graph of transmitted noise-band **98A00** also shows the frequency spike **98A18** which occurs temporarily at a higher frequency than noise-band **98A10** when a phase shift occurs in the noise signal in noise-band **98A10.** Graph of transmitted noise-band **98A00** with frequency spike **98A18** has a lower frequency boundary **98A19** and upper frequency boundary **98A20,** as indicated by the vertical dashed lines for **98A19** and **98A20.**

At the bottom of **Figure 98A** is a graph **98A30** showing receiving bandpass filters comprising noise phase-shift detector **98A76.** Graph **98A30 of** receiving bandpass filters has an x-axis **98A32** indicating frequency and a y-axis **98A34** indicating amplitude, power, or noise density function. Graph **98A30 of** receiving bandpass filters for noise phase-shift detector **98A76** comprises a series of illustrative bandpass or passband filters. In this depicted example, these filters are illustratively designated as filter 1 **98A31,** filter 2 **98A32,** filter 3 **98A33,** filter 4 **98A34,** filter 5 **98A35,** filter 6 **98A36,** filter 7 **98A37,** and filter 8 **98A38.** When transmitted noise-band signal **98A06** in noise-band **98A10** is present, that noise is detected by receiving bandpass filters: filter 1 **98A31,** filter 2 **98A32,** filter 3 **98A33,** filter 4 **98A34,** and filter 5 **98A35** across typical noise-band detection range **98A40.** Filter 6 **98A36,** filter 7 **98A37,** and filter 8 **98A38** do not detect any signals from noise-band **98A10.** However, when transmitted noise-band signal **98A06** in noise-band **98A10** undergoes a phase-shift, then frequency spike **98A18** caused by the phase-shift temporarily occurs at a higher frequency than noise-band **98A10.** When that phase-shift occurs, frequency spike **98A18** is detected by filter 6 **98A36** and filter 7 **98A37** across phase-shift frequency spike detection range **98A42.** Thus phase-shifts are detected in this example by a series of comb filters, bandpass filters, notch filters, or other types of filters. These filters may be implemented in hardware and/or software, and may be analog or digital filters, although in this example, these discrete phase-shifts are used to detect digital signals.

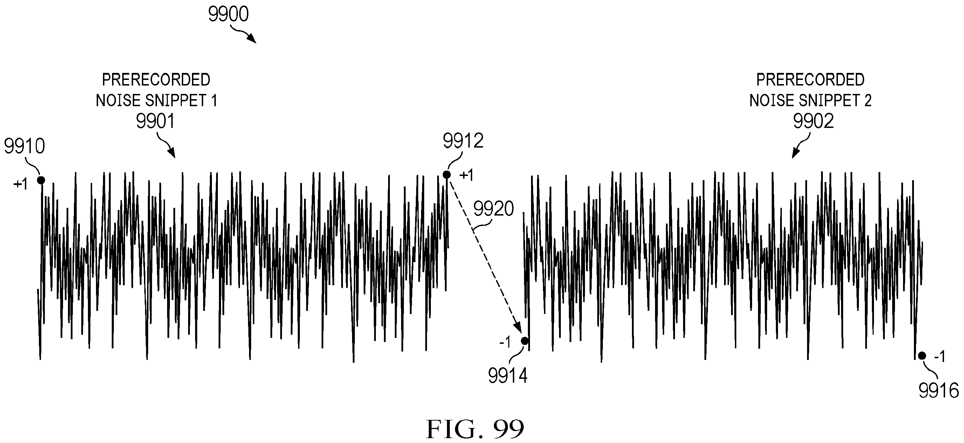

Reference next to **Figure 99****,** an illustration of prerecorded noise snippets is depicted in accordance with an illustrative embodiment. In this illustrative example, prerecorded noise snippets **9900** are examples of prerecorded noise snippets **9770** in **Figure 97****.**

In this illustrative example in **Figure 99****,** prerecorded noise snippets **9900** comprise prerecorded noise snippet 1 **9901** and prerecorded noise snippet 2 **9902.** As depicted, prerecorded noise snippet 1 **9901** has initial amplitude level **9910** of +1 and final amplitude level **9912** of +1. Further in this example, prerecorded noise snippet 2 **9902** has initial amplitude level **9914** of -1 and final amplitude level **9916** of -1.

Placing these two prerecorded noise snippets next to each other in a sequence results in a rapid or discrete shift in phase of 180-degrees (from +1 to -1, or from -1 to + 1). Phase shift **9920** is drawn to artificially expand the distance between prerecorded noise snippet 1 **9901** and prerecorded noise snippet 2 **9902** to show the sudden 180-degree phase shift. Phase shift **9920** occurs from final amplitude level **9912** in prerecorded noise snippet 1 **9901** and initial amplitude **9914** in prerecorded noise snippet 2 **9902.** This shift in phase can be detected by a receiver for determining a phase shift between these two prerecorded noise snippets.

These two examples of the recorded noise snippets are only some of the illustrative examples. Other types of noise snippets can be used in addition to or in place of these two examples.

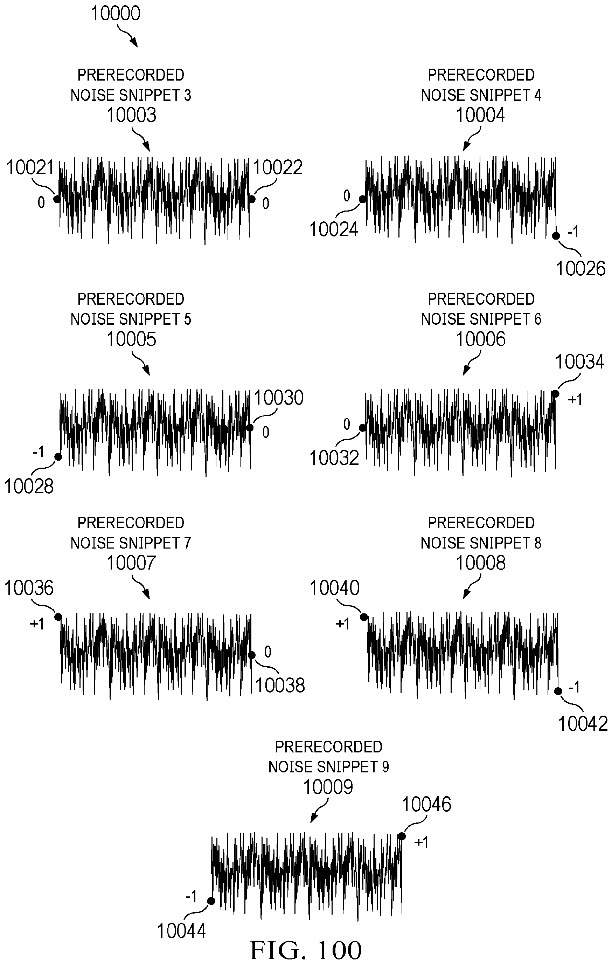

Turning to **Figure 100****,** an illustration of additional prerecorded noise snippets is depicted in accordance with an illustrative embodiment. In this figure, prerecorded noise snippets **10000** are examples of prerecorded noise snippets **9770** in **Figure 97****.** Prerecorded noise snippets **10000** in **Figure 100** are additional examples that can be used in addition to or in place of prerecorded noise snippets **9900** in **Figure 99****.**

In this example, prerecorded noise snippets **10000** comprise prerecorded noise snippet 3 **10003,** prerecorded noise snippet 4 **10004,** prerecorded noise snippet 5 **10005,** prerecorded noise snippet 6 **10006,** prerecorded noise snippet 7 **10007,** prerecorded noise snippet 8 **10008,** and prerecorded noise snippet 9 **10009.**

The different noise snippets have different initial and final amplitudes. These amplitude changes between the snippets result in phase differences to provide different phase shifts. With additional phase shifts based on the initial and final amplitudes, many combinations of phase shifts including at least one of phase shift direction and phase shift amplitude can be used to correspond to the sequence of prerecorded noise snippets to multiple discrete logic symbols.

In this example, prerecorded noise snippet 3 **10003** has initial amplitude level **10021** of 0 and final amplitude level **10022** of 0; prerecorded noise snippet 4 **10004** has initial amplitude level **10024** of 0 and final amplitude level **10026** of -1; prerecorded noise snippet 5 **10005** has initial amplitude level **10028** of -1 and final amplitude level **10030** of 0; prerecorded noise snippet 6 **10006** has initial amplitude level **10032** of 0 and final amplitude level **10034** of +1; and prerecorded noise snippet 7 **10007** has initial amplitude level **10036** of +1 and final amplitude level **10038** of 0. Additionally, in this example, prerecorded noise snippet 8 **10008** has initial amplitude level **10040** of +1 and final amplitude level **10042** of -1 and prerecorded noise snippet 9 **10009** has initial amplitude level **10044** of -1 and final amplitude level **10046** of + 1. Note that a change in amplitude between snippets from +1 to -1 or from -1 to +1 is a phase shift of 180-degrees. A change in amplitude from 0 to +1, from +1 to 0, from 0 to -1, or from -1 to 0 is a phase change or phase shift of 45-degrees. These discrete shifts are detectable because of their sudden high frequency spikes.

The illustration of the different prerecorded noise snippets in **Figure 99** and **Figure 100** are examples of some implementations for prerecorded noise snippets **9770** in **Figure 97****.** In other illustrative examples, other amplitudes can be used such as +0.5, -0.5, +0.25, or -0.25 in addition to the amplitudes shown in these examples. These different amplitudes and the direction of phase shifts can result in many combinations of phase shifts and magnitudes of phase shifts for use in generating sequences of prerecorded noise snippets to correspond to multiple discrete logic symbols for digital information.

These prerecorded snippets are chosen to interact between each other such that transitions or phase shifts between the prerecorded snippets will cause discrete and detectable symbols at the receiver. As an example of single-bit (binary) phase shift keying, **Figure 99** shows that a shift from prerecorded noise snippet 1 to prerecorded noise snippet 2 comprises a change in value from +1 to -1 or 180-degree phase shift which can indicate a logical "1," a logical "0," or a logical shift from the previously existing logical state of "0" or "1" to the opposite state. In **Figure 100** a change between prerecorded snippets of +1, +0.5, 0, -0.5, and -1 can be used in ways to designate a quadrature scheme of two bits per symbol for each phase shift. In this manner, multiple-discrete logic symbols are defined.

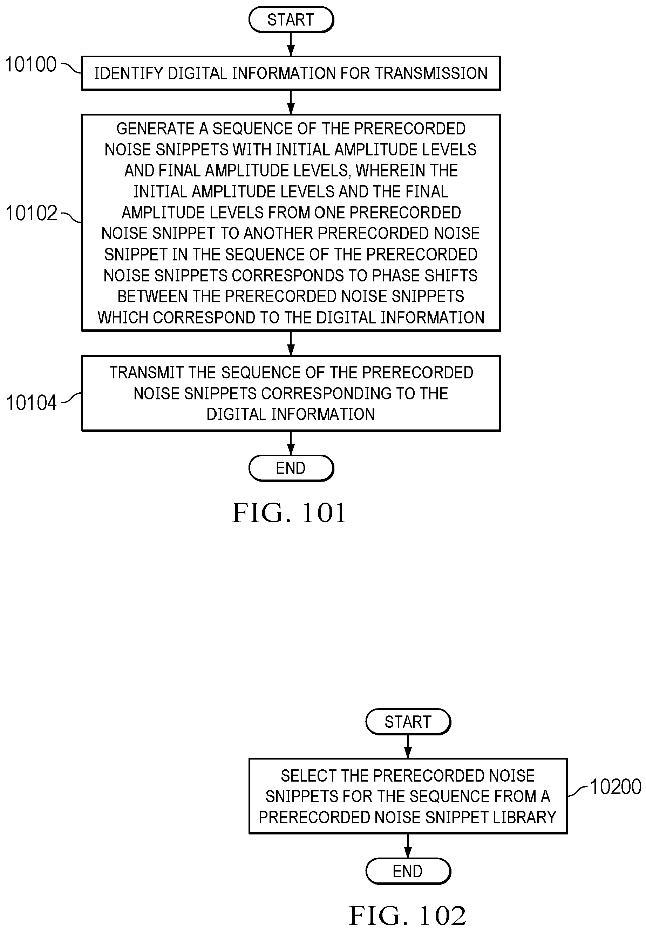

Turning now to **Figure 101****,** an illustration of a flowchart of a method for communicating digital information is depicted in accordance with an illustrative embodiment. The process in **Figure 101** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** to transmit digital data in communications system **3602** as depicted in **Figure 97****.**

The process begins by identifying digital information for transmission (operation **10100).** The process generates a sequence of the prerecorded noise snippets with initial amplitude levels and final amplitude levels, wherein the initial amplitude levels and the final amplitude levels from one prerecorded noise snippet to another prerecorded noise snippet in the sequence of the prerecorded noise snippets corresponds to phase shifts between the prerecorded noise snippets which correspond to the digital information (operation **10102).**

The process transmits the sequence of the prerecorded noise snippets corresponding to the digital information (operation **10104).** The process terminates thereafter.

Turning next to **Figure 102****,** an illustration of a flowchart of a process for generating a sequence of prerecorded noise snippets is depicted in accordance with an illustrative embodiment. The process illustrated in this figure is an example of an implementation for operation **10102** in **Figure 101****.**

The process selects the prerecorded noise snippets for the sequence from a prerecorded noise snippet library (operation **10200).** The process terminates thereafter.

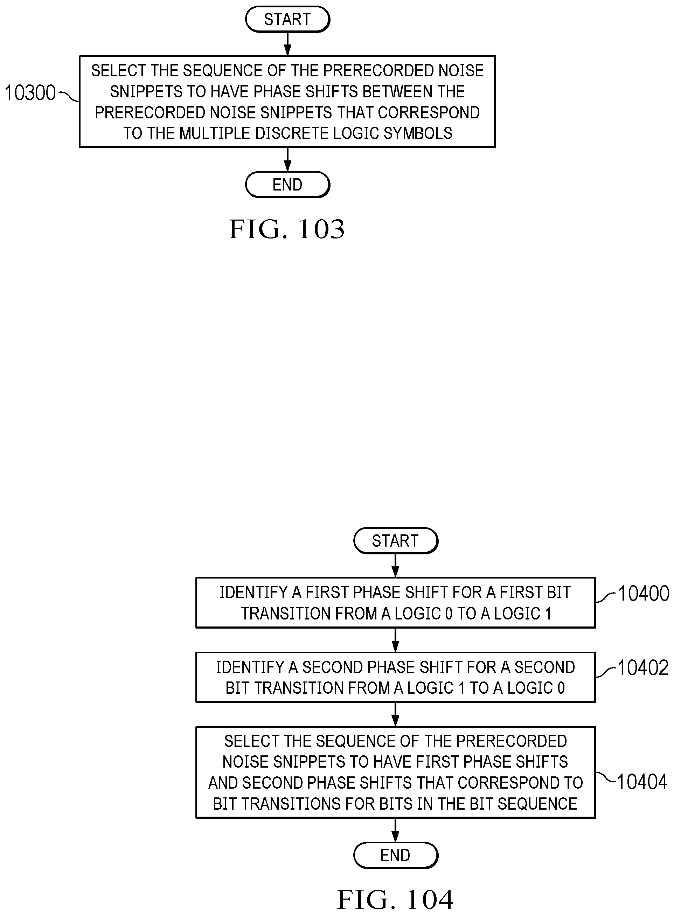

In **Figure 103****,** an illustration of a flowchart of a process for generating a sequence of prerecorded noise snippets is depicted in accordance with an illustrative embodiment. The process illustrated in this figure is an example of an implementation for operation **10102** in **Figure 101****.** In this example, digital information is comprised of multiple discrete logic symbols.

The process selects the sequence of the prerecorded noise snippets to have phase shifts between the prerecorded noise snippets that correspond to the multiple discrete logic symbols (operation **10300).** The process terminates thereafter.

Turning now to **Figure 104****,** an illustration of a flowchart of a process for generating a sequence of prerecorded noise snippets is depicted in accordance with an illustrative embodiment. The process illustrated in this figure is an example of an implementation for operation **10102** in **Figure 101****.** In this example, digital information is a bit sequence.

The process identifies a first phase shift for a first bit transition from a logic 0 to a logic 1 (operation **10400).** The process identifies a second phase shift for a second bit transition from a logic 1 to a logic 0 (operation **10402).**

The process selects the sequence of the prerecorded noise snippets to have first phase shifts and second phase shifts that correspond to bit transitions for bits in the bit sequence (operation **10404).** The process terminates thereafter.

In these different illustrative examples, the phase shifts have directions and amplitudes (equivalent to phase angles or phase shifts). In one example, a first phase shift in the phase shifts has first direction and amplitude (equivalent to first phase angles or phase shifts) and wherein a second phase shift in the phase shifts has a second direction and amplitude (equivalent to second phase angles or phase shifts). As shown in the different examples, these amplitudes and direction of change can include positive and negative values, equivalent to phase angles or phase shifts.

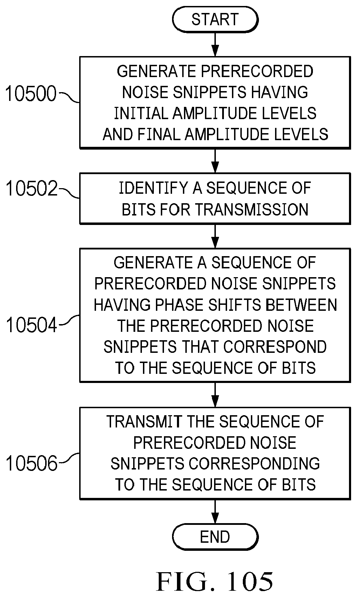

Turning now to **Figure 105****,** an illustration of a flowchart of a method for communicating digital information is depicted in accordance with an illustrative embodiment. The process in **Figure 101** can be implemented in hardware, software, or both. When implemented in software, the process can take the form of program instructions that are run by one of more processor units located in one or more hardware devices in one or more computer systems. For example, the process can be implemented in communications manager **3614** in computer system **3612** to transmit digital data in communications system **3602** as depicted in **Figure 97****.**

The process begins by generating prerecorded noise snippets having initial amplitude levels and final amplitude levels (operation **10500).** In this example, the prerecorded noise snippets in operation **10500** are noise snippet 1 and noise snippet 2. Noise snippet 1 has an initial amplitude of +1 and a final amplitude of -1, and noise snippet 2 has an initial amplitude of -1 and a final amplitude of + 1. In an alternative example, noise 1 snippet has an initial amplitude of +1 and a final amplitude of -1, while noise snippet 1 has an initial amplitude of 0 and a final amplitude of 0. In other words, multiple snippets can be defined and used to create the sequence of bits for transmission.

The process continues by identifying a sequence of bits for transmission (operation **10502).** In this example, the sequence of bits has a bit pattern in which transitions between different bits occur. The process generates a sequence of prerecorded noise snippets having phase shifts between the prerecorded noise snippets that correspond to the sequence of bits (operation **10504).** In operation **10504,** to transmit a digital shift from 0 to 1 or from 1 to 0 in the digital information, the sequence can be noise snippet 1 followed by noise snippet 2 snippet. The phase shift from +1 for the final amplitude at the end of the noise snippet 1 to -1 for the initial amplitude at the beginning of noise snippet 2 indicates a shift in the digital information from either 0 to 1 or 1 to 0.

In this example, when the same bit is to be included, the current prerecorded noise snippet is added to the sequence. For example, if the first bit is 1 and current prerecorded noise snippet being transmitted is noise snippet 1 (+1 to +1) and if the second bit is also 1, the noise snippet 1 (+1 to +1) is selected as the next prerecorded noise snippet in the sequence. In this case, phase shift does not occur. As a result, the second bit is also 1.

In another example, if the first bit is 1 and the current prerecorded noise snippet being transmitted is noise 2 snippet (-1 to -1) and if the second message bit is also 1, then the noise snippet 2 (-1 to -1) is selected as the next prerecorded noise snippet in the sequence. As result, a phase shift does not occur. Thus, in this example, the second bit is also a 1.

When a shift in the sequence of bits occurs, a different prerecorded noise snippet other than the current prerecorded noise snippet is selected for the sequence. For example, the sequence of prerecorded noise snippets can be from noise snippet 1 (+1 to +1) to noise 2 (-1 to -1), or from noise snippet 2 (-1 to -1) to noise snippet 1 (+1 to +1).

With respect to a bit transition from 1 to 0, in this example, if the first bit is 1 and the current prerecorded noise snippet in the sequence prerecorded noise snippets is noise snippet 1 (+1 to +1), and the bit transitions to 0, then the noise snippet 1 (+1 to +1) is followed by the next prerecorded noise snippet, noise snippet 2 (-1 to -1). This sequence of prerecorded noise snippets results in a phase shift that corresponds to a transition of the first bit to the second bit as 1 to 0 in this example.

In the case of a message bit transition from 0 to 1: If the first message bit is 0 and the current noise snippet being transmitted is noise snippet 2 (-1 to -1), the next prerecorded noise snippet in the sequence from noise snippet 2 (-1 to -1) would change to noise snippet 1 (+1 to +1). Thus, the sequence of prerecorded noise snippets results in a phase shift that corresponds to a bit transition from 0 to 1.

The process transmits the sequence of prerecorded noise snippets corresponding to the sequence of bits **(10506).** The process terminates thereafter.

The selection of these two snippets is for purposes of illustrating an implementation and not meant to limit the manner in which other illustrative examples can be implemented. In other illustrative examples, different initial and final amplitudes can be selected, and different numbers of prerecorded snippets can be used. Further, in other examples the digital information takes other forms other than a sequence of bits. In other illustrative examples, other types of multiple discrete logic symbols can be used in addition to a series of bits. For example, a symbol can represent groupings of two or more bits. In yet another illustrative example, a symbol can represent an integer or character.

Some features of the illustrative examples for modulating digital information **3607** using digital phase-differential noise shift keying **3696** in communications system **3602** are described in the following clauses. These clauses are examples of features and are not intended to limit other illustrative examples.
1. A communications system comprising:
   a computer system; and
   a communications manager in the computer system, wherein the communications manager is configured to:
      identify digital information for transmission;
      generate a sequence of prerecorded noise snippets with initial amplitude levels and final amplitude levels, wherein the initial amplitude levels and the final amplitude levels from one prerecorded noise snippet to another prerecorded noise snippet in the sequence of the prerecorded noise snippets corresponds to phase shifts between the prerecorded noise snippets which correspond to the digital information; and
      transmit the sequence of the prerecorded noise snippets corresponding to the digital information.
2. The communications system of clause 1, wherein in generating the sequence of the prerecorded noise snippets, the communications manager is configured to:
   select the prerecorded noise snippets for the sequence from a prerecorded noise snippet library.
3. The communications system of clause 1, wherein the digital information is comprised of multiple discrete logic symbols and wherein in generating the sequence of the prerecorded noise snippets, the communications manager if configured to:
   select the sequence of the prerecorded noise snippets to have phase shifts between the prerecorded noise snippets that correspond to the multiple discrete logic symbols.
4. The communications system of clause 1, wherein the digital information is a bit sequence and wherein in generating the sequence of the prerecorded noise snippets, the communications manager if configured to:
   identify a first phase shift for a first bit transition from a logic 0 to a logic 1;
   identify a second phase shift for a second bit transition from a logic 1 to a logic 0; and
   select the sequence of the prerecorded noise snippets to have first phase shifts and second phase shifts that correspond to bit transitions for bits in the bit sequence.
5. The communications system of clause 1, wherein the phase shifts have directions and amplitudes.
6. The communications system of clause 1, wherein a first phase shift in the phase shifts has first direction and wherein a second phase shift in the phase shifts has a second direction.
7. The communications system of clause 1, wherein a first phase shift in the phase shifts has a first magnitude and wherein a second phase shift in the phase shifts has a second magnitude.
8. The communications system of clause 1, wherein the prerecorded snippets are comprised of noise-band signals selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
9. A communications system comprising:
   a receiver configured to:
   receive a sequence of prerecorded noise snippets with initial amplitude levels and final amplitude levels, wherein the initial amplitude levels and the final amplitude levels from one prerecorded noise snippet to another prerecorded noise snippet in the sequence of the prerecorded noise snippets corresponds to phase shifts between the prerecorded noise snippets which correspond to digital information; and
   demodulate the digital information from the sequence of the prerecorded noise snippets and the phase shifts for the sequence of the prerecorded noise snippets.
10. A method for communicating digital information, the method comprising:
   identifying digital information for transmission;
   generating a sequence of prerecorded noise snippets with initial amplitude levels and final amplitude levels, wherein the initial amplitude levels and the final amplitude levels from one prerecorded noise snippet to another prerecorded noise snippet in the sequence of the prerecorded noise snippets corresponds to phase shifts between the prerecorded noise snippets which correspond to the digital information; and
   transmitting the sequence of the prerecorded noise snippets corresponding to the digital information.
11. The method of clause 10, wherein said generating the sequence of the prerecorded noise snippets comprises:
   selecting the prerecorded noise snippets for the sequence from a prerecorded noise snippet library.
12. The method of clause 10, wherein the digital information is comprised of multiple discrete logic symbols and wherein said generating the sequence of the prerecorded noise snippets comprises:
   selecting the sequence of the prerecorded noise snippets to have phase shifts between the prerecorded noise snippets that correspond to the multiple discrete logic symbols.
13. The method of clause 10, wherein the digital information is a bit sequence and wherein said generating the sequence of the prerecorded noise snippets comprises:
   identifying a first phase shift for a first bit transition from a logic 0 to a logic 1;
   identifying a second phase shift for a second bit transition from a logic 1 to a logic 0; and
   selecting the sequence of the prerecorded noise snippets to have first phase shifts and second phase shifts that correspond to bit transitions for bits in the bit sequence.
14. The method of clause 10, wherein the phase shifts have directions and amplitudes.
15. The method of clause 10, wherein a first phase shift in the phase shifts has first direction and wherein a second phase shift in the phase shifts has a second direction.
16. The method of clause 10, wherein a first phase shift in the phase shifts has a first magnitude and wherein a second phase shift in the phase shifts has a second magnitude.
17. The method of clause 10, wherein the prerecorded snippets are comprised of noise-band signals selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater frequency noise signals, or optical frequency noise signals including visible and/or non-visible light.
18. A method for communicating digital information, the method comprising:
   receiving a sequence of prerecorded noise snippets with initial amplitude levels and final amplitude levels, wherein the initial amplitude levels and the final amplitude levels from one prerecorded noise snippet to another prerecorded noise snippet in the sequence of the prerecorded noise snippets corresponds to phase shifts between the prerecorded noise snippets which correspond to the digital information; and
   demodulating the digital information from the sequence of the prerecorded noise snippets and the phase shifts for the sequence of the prerecorded noise snippets.
19. The method of clause 18, wherein the phase shifts have directions and amplitudes.
20. The method of clause 18, wherein a first phase shift in the phase shifts has first direction and wherein a second phase shift in the phase shifts has a second direction.
21. The method of clause 18, wherein a first phase shift in the phase shifts has a first magnitude and wherein a second phase shift in the phase shifts has a second magnitude.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A communications system comprising:
a computer system (3612); and
a communications manager (3614) in the computer system (3612), wherein the communications manager (3614) is configured to:
identify digital information (3607) for transmission; and
transmit noise signals (3604) with different noise amplitudes (3640) that thereby modulate the noise signals (3604) to correspond to the digital information (3607).

2. The communications system of claim 1, wherein the different noise amplitudes (3640) comprise amplitude levels (3680) that represent multiple discrete logic symbols (3651).

3. The communications system of claim 1 or 2, wherein the different noise amplitudes (3640) comprise two discrete amplitude levels (3680) in which a first discrete amplitude level corresponds to a logic 0 and a second discrete amplitude level corresponds to a logic 1.

4. The communications system of claim 1 or 2, wherein the different noise amplitudes (3640) comprise multiple discrete amplitude levels (3680) in which the multiple discrete amplitude levels (3680) represent multiple discrete logic symbols (3651)

5. The communications system of any preceding claim, wherein the noise signals (3604) are radio frequency noise signals (3605), and further comprising:
a laser generation system (3626) configured to emit a set of one or more laser beams (3627), wherein in transmitting the noise signals (3604), the communications manager (3614) is configured to:
control an emission of the set of one or more laser beams (3627) from the laser generation system (3626) to control optical breakdowns (3625) that generate the radio frequency noise signals (3605) with the different noise amplitudes (3640) that thereby modulate the radio frequency noise signals (3605) to correspond to the digital information (3607).

6. The communications system of claim 5, wherein in controlling the emission (3641) of the set of one or more laser beams (3627), the communication manager is configured to:
control the strength (3641) of the set of one or more laser beams (3627) emitted from the laser generation system (3626) using an amplitude modulator (3644) in the laser generation system (3626).

7. The communications system of any predecing claim, further comprising:
an electric noise generator (3630) configured to generate a carrier noise signal;
a modulator (3632); and
a transmitter (3634), wherein in generating the noise signals, the communications manager (3614) is configured to:
generate the carrier noise signal using the electric noise generator (3630); and
modulate an amplitude of the carrier noise signal using the modulator (3632) to vary the carrier noise signal with the different noise amplitudes (3640) that thereby modulates the carrier noise signal to correspond to the digital information (3607).

8. The communications system of any preceding claim, wherein the noise signals are selected from at least one of electromagnetic frequency noise signals, radio frequency noise signals, microwave frequency noise signals, audio frequency noise signals, ultrasonic frequency noise signals, ultra-low frequency noise signals, very low frequency noise signals, underwater noise signals, or optical frequency noise signals including at least one of visible or non-visible light.

9. A communications system comprising:
a receiver (3617) configured to:
receive noise signals, in which digital information (3607) is modulated in the noise signals using different noise amplitudes (3640); and
demodulate the digital information (3607) previously modulated in the noise signals based on different noise amplitudes (3640) in the noise signals (3640).

10. A method for communicating digital information (3607), the method comprising:
identifying (3900) the digital information (3607) for transmission; and
transmitting (2902) noise signals with different noise amplitudes (3640) that thereby modulate the noise signals (3604) to correspond to the digital information (3607).

11. The method of claim 10, wherein the different noise amplitudes (3640) comprise discrete amplitude levels (3680) that represent multiple discrete logic symbols (3651)

12. The method of claim 10 or 11, wherein the noise signals are radio frequency noise signals, and wherein said transmitting the noise signals comprises:
controlling (4000) emission of a set of one or more laser beams (3627) from a laser generation system (3626) to control optical breakdowns (3625) that generate the radio frequency noise signals with the different noise amplitudes (3640) that thereby modulate the radio frequency noise signals (3605) to correspond to the digital information (3607).

13. The method of claim 19, wherein said controlling (4000) the emission of the set of one or more laser beams (3627) comprises:
controlling (4100) a strength (3641) of the set of one or more laser beams (3627) emitted from the laser generation system (3626) to control the optical breakdowns (3625) that generate the radio frequency noise signals with the different noise amplitudes (3640) that thereby modulate the radio frequency noise signals to correspond to the digital information (3607).

14. The method of claim 13, wherein said controlling (4100) the strength (3641) of the set of one or more beams comprises:
controlling (4300) the strength (3641) of the set of one or more beams emitted from the laser generation system (3626) using a set of optical elements.

15. A method for communicating digital information (3607), the method comprising:
receiving (4600) noise signals, wherein the digital information (3607) is modulated in the noise signals using different noise amplitudes (3640); and
demodulating (4602) the digital information (3607) modulated in the noise signals based on the different noise amplitudes (3640) in the noise signals.
